(19) Europäisches Patentamt
European Patent Office
Office européen des brevets

(11) EP 2 390 680 B1

(12) **EUROPEAN PATENT SPECIFICATION**

(45) Date of publication and mention of the grant of the patent:
**25.02.2015 Bulletin 2015/09**

(51) Int Cl.:
***G01S 13/60*** (2006.01) ***G01S 13/93*** (2006.01)
***G01S 13/86*** (2006.01) ***G01S 7/40*** (2006.01)

(21) Application number: **11002690.3**

(22) Date of filing: **31.03.2011**

(54) **Angular velocity estimation apparatus, computer program, and angular velocity estimation method**

Winkelgeschwindigkeitsschätzungsvorrichtung, Computerprogramm und Winkelgeschwindigkeitsschätzungsverfahren

Appareil d’évaluation de vitesse angulaire, programme informatique et procédé d’évaluation de vitesse angulaire

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.05.2010 JP 2010120502**

(43) Date of publication of application:
**30.11.2011 Bulletin 2011/48**

(73) Proprietor: **Mitsubishi Electric Corporation**
**Tokyo 100-8310 (JP)**

(72) Inventors:
- **Takabayashi, Yuki**
  **Chiyoda-ku**
  **Tokyo 100-8310 (JP)**
- **Matsuzaki, Takashi**
  **Chiyoda-ku**
  **Tokyo 100-8310 (JP)**
- **Kameda, Hiroshi**
  **Chiyoda-ku**
  **Tokyo 100-8310 (JP)**

(74) Representative: **Pfenning, Meinig & Partner GbR**
**Patent- und Rechtsanwälte**
**Theresienhöhe 11a**
**80339 München (DE)**

(56) References cited:
**WO-A1-2007/017476** **US-A- 5 930 739**
**US-A1- 2002 165 650** **US-A1- 2010 017 128**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to an angular velocity estimation apparatus that estimates an angular velocity of a moving object.

### Background Art

An angular velocity observation device such as a gyro sensor, which observes an angular velocity of a moving object, has an error including a bias error or the like. There is a method in which, using a position observation device such as a global positioning system (GPS), the position of a moving object is observed and the angular velocity of the moving object is estimated, based on a result of observation. There is also a method in which, by using the angular velocity estimated from the result of observation by the position observation device, the angular velocity observed by the angular velocity observation device is corrected.

### Related Art Documents

[Patent Document 1] JP Patent Application Publication JP-6-148319-A
[Patent Document 2] JP Patent Application Publication JP-9-049875-A
[Patent Document 3] JP Patent Application Publication JP-2007-333385-A

US 2010/017128 A1 discloses a system for estimation of vehicle dynamics, including vehicle position and velocity, using signals reflected by a stationary object. For example, the longitudinal velocity, lateral velocity and yaw-rate, can be calculated from the positions and of the stationary object at different timings, measured by a radar sensor. In particular, this system comprises a relative position acquisition unit (radar sensor) for obtaining a result of an observation by a peripheral object observation device that repeatedly observes an object located in the vicinity of a moving object to measure a relative position of the object relative to the moving object, a stationary object determination unit for determining whether or not the object observed by the peripheral object observation device is still, based on the result of the observation obtained by the relative position acquisition unit, an object correlation unit for determining a set of relative positions measured by observing an identical object by the peripheral object observation device, and an angular velocity estimation unit, based on the result of the observation obtained by the relative position acquisition unit, a result of the determination by the stationary object determination unit, and a result of the determination by the object correlation unit.

### Summary of Invention

The position observation device that observes the position of a moving object by depending on an external system such as the GPS, may not be used due to the state of an electric wave or the like.
The present invention has been made to solve the problem as described above, and is provided to estimate the angular velocity of a moving object with good accuracy without depending on a position observation device such as a GPS.
An angular velocity estimation apparatus according the present invention is defined by either the features of claim 1 or the features of claim 2, and on angular velocity estimation method according to the present invention is defined by either the features of claim 14 or the features of claim 15.

### Advantageous Effect of Invention

According to the angular velocity estimation apparatus of the present invention, the angular velocity of the moving object may be accurately estimated without use of a position observation device such as a GPS.

### Brief Description of Drawings

Fig. 1 is a block diagram showing a configuration of a yaw rate bias correction apparatus 800 in a first embodiment;

Fig. 2 is a diagram showing states of stationary objects continuously correlated in a temporal direction from times $t_1$ to $t_N$;

Fig. 3 is a process flow diagram showing a process by a correlated stationary object selection unit 141 in the first embodiment;

Fig. 4 is a diagram showing coordinate conversion to a stationary-object-referenced coordinate system;

Fig. 5 is a diagram showing the trajectory of a vehicle in the stationary-object-referenced coordinate system;

Fig. 6 is a process flow diagram showing a process by a bias correction unit 840 in the first embodiment;

Fig. 7 is a diagram showing timing adjustment;

Fig. 8 is a block diagram showing a configuration of a yaw rate bias correction apparatus 800 in a second embodiment;

Fig. 9 is a diagram showing an example of relative positions of a plurality of stationary objects;

Fig. 10 is an explanatory diagram of a time sequence;

Fig. 11 is a block diagram showing a configuration of a yaw rate bias correction apparatus 800 in a third embodiment;

Fig. 12 is a process flow diagram showing an operation of a trajectory integration unit 150 in the third embodiment;

Fig. 13 is a block diagram showing a configuration of a stationary object tracking unit 120 in a fourth embodiment;

Fig. 14 is a hardware configuration diagram showing an example of a hardware configuration of an angular velocity estimation apparatus 200 in a fifth embodiment;

Fig. 15 is a block diagram showing an example of functional blocks of the angular velocity estimation apparatus 200 in the fifth embodiment;

Fig. 16 is a diagram for explaining a relationship between a moving speed of a moving object 801 and respective relative speeds of objects 701 and 702 relative to the moving object 801;

Fig. 17 is a diagram for explaining a relationship between times 781 to 783 at which the relative speed of an object relative to a moving object has been observed and times 791 to 799 at which the moving speed of the moving object has been observed;

Fig. 18 is a diagram for explaining a relationship between a moving trajectory 751 of the moving object 801 and trajectories 761 to 766 of relative positions of objects 703 to 708 relative to the moving object 801;

Fig. 19 is a diagram for explaining an operation of an object correlation unit 230 in the fifth embodiment;

Fig. 20 is a diagram for explaining a relationship between a relative coordinate system using the moving object 801 as a reference and an absolute coordinate system using a still point as a reference;

Fig. 21 is a flowchart showing an example of a flow of an angular velocity estimation process S500 in the fifth embodiment;

Fig. 22 is a flowchart diagram showing an example of a flow of an observation result acquisition step S510 in the fifth embodiment;

Fig. 23 is a flowchart diagram showing an example of a flow of a still determination step S520 in the fifth embodiment;

Fig. 24 is a flowchart diagram showing an example of a flow of an object correlation step S530 in the fifth embodiment;

Fig. 25 is a flowchart diagram showing an example of a flow of a state estimation step S550 in the fifth embodiment;

Fig. 26 is a diagram for explaining a relationship between a parallel translation amount and a rotation angle used for a correlation process by an object correlation unit 230 and the moving amount of the moving object 801;

Fig. 27 is a block configuration diagram showing an example of configurations of functional blocks of an angular velocity estimation apparatus 200 in a seventh embodiment; and

Fig. 28 is a block configuration diagram showing an example of configurations of functional blocks of an angular velocity estimation apparatus 200 in an eighth embodiment.

Description of Embodiments

A description will be directed to a device that monitors the front of a vehicle using a radar device mounted on the vehicle, thereby detecting an object ahead of the vehicle.

There is a vehicle front monitoring device that is mounted on a vehicle. The vehicle front monitoring device radiates a transmitted wave such as an optical wave or a milliwave ahead of the vehicle at a predetermined angle, and receives a reflected wave of the transmitted wave, thereby identifying another vehicle running ahead of the vehicle or an obstacle ahead of the vehicle. The vehicle front monitoring device needs to identify the another vehicle that is present in a running direction of the vehicle as a preceding vehicle from among detected objects, irrespective of whether the vehicle is running on a straight road or a curved road. As a method of identifying the preceding vehicle that is present in the running direction of the vehicle in this case, the curvature of the road is computed by using the speed of the vehicle and a yaw rate (angular velocity) sensor.

However, a zero-point bias error corresponding to a voltage offset is produced in the yaw rate sensor used for computing the curvature of the road, and the zero-point bias error drifts due to a change in temperature or time. Thus, erroneous determination of the preceding vehicle may probably occur when the yaw rate is used without alteration. For that reason, it is necessary to correct the zero-point bias of the sensor.

There is a method of taking correlation between angles of a plurality of stationary objects detected by radar of a vehicle at an immediately preceding time and angles of the stationary objects at a current time, in order to compute the yaw rate (hereinafter referred to as a yaw angular velocity) of the vehicle. As the method of taking correlation, each of the angles of the stationary objects detected at the immediately preceding time is shifted just by $\Delta\theta$, and the angle $\Delta\theta$ that can be most correlated with the angle of a corresponding one of the stationary objects is regarded as an angular change amount. The yaw angular velocity is thereby computed. However, the stationary objects cannot be necessarily detected continuously in a temporal direction in an actual road running environment. A failure of detection of an object, reappearance of the object, or mixing of an unwanted signal due to a multipath wave or the like, for example, may occur. Accordingly, the yaw angular velocity cannot be accurately estimated by the above-mentioned method.

There is provided a method in which, using a condition where the relative speed of a detected object relative to a vehicle assumes zero so as to detect a stop state of the vehicle (when the speed of the vehicle is zero), a yaw angular velocity at a low speed of the vehicle is regarded as a yaw angular velocity zero-point bias value to make bias correction. In this method, however, the bias correction cannot be made unless the vehicle is running at the low speed.

There is also a method in which movement of a vehicle including its yaw angular velocity is computed using the relative position of a stationary object relative to the vehicle detected by radar and the absolute position of the vehicle obtained by a GPS. In this method, the trajectory of the vehicle is computed including a stationary object unrelated to the movement of the vehicle. Thus, the yaw angular velocity cannot be accurately computed without the absolute position obtained by the GPS.

As described above, the zero-point bias error corresponding to the voltage offset is produced in the yaw rate sensor, and further the zero-point bias error drifts due to a change in temperature or time. Thus, erroneous determination of the preceding vehicle may probably occur when the yaw rate is used without alteration.

For this reason, a stationary object correlated in the temporal direction is extracted by a tracking filter from among a plurality of stationary objects, and an estimation value of the yaw angular velocity based on the position and movement (herein referred to as a trajectory) of the vehicle is computed according to time-series data on relative positions of the stationary object relative to the vehicle. Further, a bias error is computed according to a difference between the observation value and the estimation value of the yaw angular velocity to correct the yaw angular velocity.

First Embodiment.

A first embodiment will be described using Figs. 1 to 7.

Fig. 1 is a block diagram showing a configuration of a yaw rate bias correction apparatus 800 in this embodiment. The yaw rate bias correction apparatus 800 includes radar 810, a vehicle speed sensor 820, a yaw rate sensor 830, a stationary object identification unit 110, a stationary object tracking unit 120, a stationary object storage unit 130, a vehicle trajectory computation unit 140, and a bias correction unit 840.
The radar (peripheral object observation device) 810 emits a radar wave within a predetermined angle range ahead of a vehicle, and receives a radar wave reflected from an object, thereby detecting the position and the relative speed of the object.
The vehicle speed sensor (moving speed observation device) 820 detects the speed of the vehicle.
The yaw rate sensor (angular velocity observation device) 830 detects the yaw angular velocity of the vehicle.
The stationary object identification unit (relative position acquisition unit, speed observation value acquisition unit, and stationary object determination unit) 110 identifies whether or not the object is a stationary object, based on the relative speed of the object detected by the radar 810 and the speed of the vehicle detected by the vehicle speed sensor 820.
The stationary object tracking unit (object correlation unit) 120 extracts stationary objects correlated in a temporal direction by a tracking filter from among a plurality of stationary objects identified as the stationary objects by the stationary object identification unit 110. The stationary object tracking unit 120 includes a correlation unit 121, a smoothing unit 122, a prediction unit 123, and a delay unit 124, for example.
The stationary object storage unit 130 stores a stationary object correlated by the stationary object tracking unit 120.
The vehicle trajectory computation unit (angular velocity estimation unit) 140 receives the position of the stationary object obtained from the stationary object storage unit 130 and converts the position of the stationary object to a stationary-object-referenced coordinate system to obtain the position of the vehicle, thereby estimating the trajectory of the vehicle including its yaw angular velocity from the position of the vehicle. The vehicle trajectory computation unit 140 includes a correlated stationary object selection unit 141, a stationary-object-referenced coordinate conversion unit 142, and a trajectory estimation unit 143.
The bias correction unit 840 computes the bias error of the yaw angular velocity, using the yaw angular velocity detected by the yaw rate sensor 830 and the estimation value of the yaw angular velocity obtained by the vehicle trajectory computation unit 140, and corrects the yaw angular velocity.

Fig. 2 is a diagram showing states of stationary objects continuously correlated in a temporal direction from times $t_1$ to $t_N$.
Tracking of the stationary objects shows that the stationary objects move in response to movement of the vehicle.

The stationary object tracking unit 120 extracts proper stationary objects that may be correlated in the temporal direction from among a plurality of stationary objects using the tracking filter (known filter such as a Kalman or an $\alpha$-$\beta$(-$\gamma$) filter) as shown in Fig. 2. A white circle in Fig. 2 denotes an identical stationary object correlated in the temporal direction, a circle with a slant line denotes the position of the stationary object (white circle) at a most recent time, and a black circle denotes a stationary object that is not continuous in the temporal direction and cannot be correlated by the stationary object tracking unit 120. The stationary object tracking unit 120 outputs the position of the correlated stationary object (including a Doppler velocity, if there is the Doppler velocity) and a number for the correlated stationary object (number indicating the identical stationary object).
The stationary object storage unit 130 records the number for the correlated stationary object and time-series data on the correlated stationary object, and outputs the recorded time-series data on the correlated stationary object and the number for the correlated stationary object to the correlated stationary object selection unit 141.
The correlated stationary object selection unit 141 receives the correlated stationary object time-series data for each identical object, and extracts only the correlated stationary object that has fallen within a preset distance $R_{min}$ (such as 30m) from among the correlated stationary object time-series data, and counts the number of times of correlation $N_{cor}$. Further, when the number of times of correlation $N_{cor}$ is equal to or more than a threshold value for the number of times of correlation $N_{min}$, the correlated stationary object selection unit 141 outputs the position of the correlated stationary object.

Fig. 3 is a process flow diagram showing a process by the correlated stationary object selection unit 141 in this embodiment.
In step 1, the correlated stationary object selection unit 141 extracts the correlated stationary object that falls within the threshold value for the distance.
In step 2, the correlated stationary object selection unit 141 determines whether or not the number of times of correlation of the correlated stationary object is equal to or more than the threshold value.
When it is determined that the number of times of correlation of the correlated stationary object is equal to or more than the threshold value, the correlated stationary object selection unit 141 outputs the correlated stationary object.

Herein, the upper limit of the threshold value for the number of times of correlation $N_{min}$ is given by the following relational expression, using a vehicle speed $V_M$, a radar observation rate T, and the distance $R_{min}$:

[Expression 11]

$$N_{\min} \leq \frac{R_{\min}}{V_M \cdot T}$$

When $R_{min}$ = 30 [m], $V_M$ = 16 [m/s], and T = 0.2 [s], observation by the radar on the order of nine times is possible. However, observation exceeding the nine times is not performed. For that reason, by setting the threshold value $N_{min}$ that satisfies the condition defined by Expression 11, subsequent processes are executed with reliability.

The stationary-object-referenced coordinate conversion unit 142 converts a coordinate system using the position of the radar as its origin to a stationary-object-referenced coordinate system using a stationary object at a certain time as its origin. The position of the stationary object is basically obtained from the relative position relative to the radar in the coordinate system using the position of the radar as its origin. Then, by performing coordinate conversion of the position of the vehicle using the position of the stationary object at the certain time as the origin of the stationary-object-referenced coordinate system, the trajectory of the vehicle is computed using the position of the vehicle seen from the stationary object. A description will be given below, using an example.

Fig. 4 is a diagram showing coordinate conversion to the stationary-object-referenced coordinate system. Assume that a position of a stationary object is defined by a vehicle-referenced XY coordinate system where the running direction of the vehicle is plotted on a Y axis and a vehicle axle direction is plotted on an X axis as in Fig. 4. Then, positions of a certain stationary object observed at times $t_1$ and $t_2$ are respectively set to ($x_1$, $y_1$) and ($x_2$, $y_2$) (when the radar is used, the position of a stationary object is basically obtained based on a distance from the radar and an angle of the stationary object with respect to the radar, but when the coordinate conversion is performed, conversion to the position in the xy coordinate system is readily performed. Thus, the procedure of the coordinate conversion will be omitted). Next, a vehicle position vector $Z_{01}$, at the time $t_1$ and a vehicle position vector $Z_{02}$ at the time $t_2$ in the coordinate system using the position of the stationary object at the time $t_1$ as its origin are given by the following equations:

[Expression 12]

$$z_{o1} = \begin{bmatrix} -x_1 & -y_1 \end{bmatrix}^T$$

$$z_{o2} = \begin{bmatrix} -x_2 & -y_2 \end{bmatrix}^T$$

As described above, the stationary-object-referenced coordinate conversion unit 142 outputs the position of the vehicle to the trajectory estimation unit 143.

Fig. 5 is a diagram showing the trajectory of the vehicle in the stationary-object-referenced coordinate system. The trajectory estimation unit 143 receives time-series data of the position of the vehicle, and computes the estimation value of the trajectory of the vehicle, using an extended Kalman filter based on a turn model such as a coordinated turn model. A trajectory estimation value X hat is composed of a position (x, y), a speed (x dot, y dot), and a yaw angular velocity $\omega$ as in the following expression:

[Expression 13]

$$\hat{\mathbf{X}} = \begin{bmatrix} x & y & \dot{x} & \dot{y} & \omega \end{bmatrix}^T$$

The trajectory estimation unit 143 outputs the trajectory estimation value and the covariance matrix of an estimation error to the bias correction unit 840.

The bias correction unit 840 computes the bias error of the observation value of the yaw angular velocity, using the yaw angular velocity supplied from the vehicle trajectory computation unit 140, and outputs a bias-corrected yaw angular velocity.

Fig. 6 is a process flow diagram showing a process by the bias correction unit 840 in this embodiment. First, in step 1, the bias correction unit 840 receives the trajectory estimation value and the covariance matrix of the estimation error from the vehicle trajectory computation unit 140. The bias correction unit 840 further receives the observation value of the yaw angular velocity from the yaw rate sensor 830. In this case, the observation value of the yaw angular velocity may be smoothed by the tracking filter, and the smoothed observation value of the yaw angular velocity may be supplied to the bias correction unit 840. However, the estimation value of the yaw angular velocity is not constantly output from the vehicle trajectory computation unit 140. Thus, at a sampling time when the estimation value of the yaw angular velocity cannot be obtained, the observation value of the yaw angular velocity is corrected using a bias correction value stored in a bias correction value memory that will be described later as shown in this process flow (in step 2). The initial value of the bias correction value is herein set to zero.
Next, in step 3, using the trajectory estimation value and the covariance matrix of the estimation error output from the vehicle trajectory computation unit 140, the bias correction unit 840 computes a prediction value and the covariance of a prediction error based on a turn model using the observation value of the yaw angular velocity and a prediction value and the covariance of a prediction error based on a turn model using the estimation value of the yaw angular velocity. Normally, the sampling rate of detections of a stationary object by the radar 810 differs from the frequency of detections of a yaw angular velocity by the yaw rate sensor 830. The sampling rate of the yaw rate sensor 830 is higher than the sampling rate of the radar 810. Thus, when an observation time t of the yaw angular velocity and an updating time t' for the estimation value of the yaw angular velocity are different, it is necessary to perform timing adjustment.

Fig. 7 is a diagram showing the timing adjustment.
In order to perform the time adjustment, the estimation value of the yaw angular velocity and the covariance matrix of the estimation error of the yaw angular velocity at the time t are computed by a time extrapolation process up to the time t.

[Expression 14]

$$\hat{\mathbf{X}}(t) = \mathbf{F}\left(\omega_{est}(t'), t - t'\right)\hat{\mathbf{X}}(t')$$
$$\mathbf{P}_t = \mathbf{F}\left(\omega_{est}(t'), t - t'\right)^{\mathrm{T}}\mathbf{P}_{t'}\mathbf{F}\left(\omega_{est}(t'), t - t'\right) + \mathbf{Q}(t - t')$$

where F($\omega_{est}$(t'), t - t') denotes the state transition matrix of the turn model from the time t' to the time t assuming the yaw angular velocity to be a yaw angular velocity estimation value $\omega_{est}$ at the time t'. Q(t - t') denotes the covariance matrix of system noise.

Using the estimation value and the covariance matrix of the estimation error of the yaw angular velocity described above, the bias correction unit 840 computes a prediction value X hat OBS, t + ΔT and a covariance P OBS, t + ΔT of a prediction error at ΔT seconds after the time t, based on the turn model using the observation value of the yaw angular velocity. Further, the bias correction unit 840 computes a prediction value X hat EST, t + ΔT and a covariance $P_{EST, t + \Delta T}$ of a prediction error at ΔT seconds after the time t, based on the turn model using the estimation value of the yaw angular velocity.

Then, when the following determination expression using a chi-square test is not satisfied in step 4, the prediction value based on the observation value of the yaw angular velocity and the prediction value based on the estimation value of the yaw angular velocity are different. Thus, it means that a bias error is included in the observation value of the yaw angular velocity.

[Expression 15]

$$\left(\hat{\mathbf{X}}_{\mathbf{OBS},t+\Delta T} - \hat{\mathbf{X}}_{\mathbf{EST},t+\Delta T}\right)\left(\mathbf{P}_{\mathbf{OBS},t+\Delta T} + \mathbf{P}_{\mathbf{EST},t+\Delta T}\right)\left(\hat{\mathbf{X}}_{\mathbf{OBS},t+\Delta T} - \hat{\mathbf{X}}_{\mathbf{EST},t+\Delta T}\right) \le \varepsilon_{\mathrm{th}}$$

Herein, $\varepsilon_{th}$ is obtained from a chi-square distribution table.

Since the observation rate of the observation value of the yaw angular velocity is higher than the output rate (or the detection rate of the radar) of the estimation value of the yaw angular velocity, determination using the determination expression is made at each time when the observation value of the yaw angular velocity is obtained. When the determination expression is not satisfied M times in N times of determinations, the following bias error estimation process is executed. When the determination expression is satisfied, it is regarded that no bias error is included. Then, using a bias error stored in the bias correction value memory, the bias correction unit 840 corrects the observation value of the yaw angular velocity (in step 2).
Next, in step 5, the bias correction unit 840 estimates the bias error of the observation value of the yaw angular velocity, using the estimation value of the yaw angular velocity and the observation value of the yaw angular velocity. Herein, the bias correction unit 840 estimates the bias error using the Kalman filter or the like, for example.
The bias correction unit 840 stores the estimation value of the bias error in the bias correction value memory as a bias correction value (in step 6). Finally, a yaw angular velocity obtained by correction using the bias correction value is output (in step 7).

In the yaw rate bias correction apparatus 800 described above, the vehicle trajectory computation unit 140 converts the position of a stationary object obtained by the radar 810 mounted on the vehicle to the stationary-object-referenced coordinate system, thereby computing the position of the vehicle in the stationary-object-referenced coordinate system. Then, using the position of the vehicle, the vehicle trajectory computation unit 140 estimates the trajectory of the vehicle.

The vehicle trajectory computation unit 140 extracts only one or more stationary objects that are present within a predetermined distance from the radar 810 and estimates the trajectory of the vehicle when a predetermined number or more of the stationary objects is obtained.

The vehicle trajectory computation unit 140 estimates the trajectory of the vehicle, using the extended Kalman filter based on the turn model, based on the position of the vehicle in the stationary-object-referenced coordinate system.

The bias correction unit 840 performs a chi-square-test for a difference between prediction values computed by performing time extrapolation respectively based on the observation value of the yaw angular velocity obtained by the yaw rate sensor 830 and the estimation value of the yaw angular velocity computed by the vehicle trajectory computation unit 140, using the prediction error covariance matrices. When they are not regarded to be the same by the chi-square test, the bias correction unit 840 estimates a bias error included in the observation value of the yaw angular velocity.

When the observation time of the observation value of the yaw angular velocity and the estimation time of the estimation value of the yaw angular velocity computed by the vehicle trajectory computation unit 140 are different, the bias correction unit 840 performs time extrapolation for a difference between the observation time and the estimation time. The bias correction unit 840 thereby causes the estimation time of the estimation value of the yaw angular velocity to coincide with the observation time of the observation time of the yaw angular velocity.

By extracting proper stationary objects that are continuous in the temporal direction from among stationary objects including an unwanted signal and estimating the trajectory of the vehicle including its yaw angular velocity using positions between the respective stationary objects and the vehicle as described above, the yaw angular velocity may be accurately computed. Further, by making correction of the bias error of the observation value of the yaw angular velocity detected by the yaw rate sensor using the estimation value of the yaw angular velocity, accurate determination of a preceding vehicle may be performed, using the observation value of the yaw angular velocity obtained at a high sampling rate.

Second Embodiment.

A second embodiment will be described using Figs. 8 to 10.
Same reference numerals are assigned to components that are common to those in the first embodiment, thereby omitting description of the components.

Fig. 8 is a block diagram showing a configuration of a yaw rate bias correction apparatus 800 in this embodiment. In the first embodiment, yaw angular velocity correction is made using a certain stationary object. However, a plurality of stationary objects are actually observed (in the case of a delineator a plurality of delineators are observed). Thus, the yaw rate bias correction apparatus 800 that uses a plurality of stationary objects will be shown in this embodiment.

The vehicle trajectory computation unit 140 receives the plurality of stationary objects to estimate the trajectory of a vehicle. A time when a correlated stationary object is supplied from the stationary object tracking unit 120 to the vehicle trajectory computation unit 140 differs for each stationary object.

Fig. 9 is a diagram showing an example of relative positions of a plurality of stationary objects.
Fig. 10 is an explanatory diagram of a time sequence.

When positions of two stationary objects of a stationary object 1 and a stationary object 2 are obtained as in Fig. 9, for example, processes of tracking of the stationary object 1 (corresponding to stationary object tracking 1 in Fig. 10) and tracking of the stationary object 2 (corresponding to stationary object tracking 2 in Fig. 10) are performed, according to the time sequence as shown in Fig. 10.
First, according to the flow in Fig. 3, the correlated stationary object is output to the vehicle trajectory computation unit 140 at a time $t_4$ based on the stationary object tracking 1 as shown in Fig. 10. The correlated stationary object is output

at a time $t_5$, based on stationary object tracking 2. Thus, a process by the vehicle trajectory computation unit 140 is performed, using a stationary-object-referenced coordinate system using the stationary object 1 output to the vehicle trajectory computation unit 140 earlier as a reference. Since the process by the vehicle trajectory computation unit 140 is the same as that in the first embodiment, description of the process will be omitted.
The correlated stationary object is output from the time $t_5$ based on the stationary object tracking 2. Thus, coordinates of the correlated stationary object are converted to the coordinate system using the stationary object 1 as the reference. At this time of coordinate conversion, a relative position vector of the stationary object 2 relative to the stationary object 1 at the time t5 may be used to perform the coordinate conversion (refer to Fig. 9). This relative position vector may be set to indicate a relative position between estimated positions of the stationary objects 1 and 2 output from the stationary object tracking unit 120.
Even when the stationary object 1 has missed at a $time_6$, updating is performed using the stationary object 2. Thus improvement of accuracy may be expected.
When the stationary object 1 gets out of a radar coverage region at a time $t_9$, the process by the vehicle trajectory computation unit 140 is thereafter continued using a coordinate system with a different stationary object used as a reference. After the time $t_9$, conversion is made from the coordinate system using the stationary object 1 as the reference to a coordinate system using the stationary object 2 as a reference to obtain the position of the vehicle by the vehicle trajectory computation unit 140.
The similar process is repeated also when a different stationary object is detected. When the number of times of observation of one object is small, accuracy of estimating the trajectory of the vehicle based on the observation of the one object is not satisfactory. With this arrangement, a plurality of stationary objects are used to continue estimation. Accuracy of estimation of the trajectory of the vehicle may be thereby improved.
Since the other processes are the same as those in the first embodiment, description of the other processes will be omitted.
An input/output of the yaw rate bias correction apparatus 800 will be described using Fig. 8.
The position of a correlated stationary object (including a Doppler velocity when the Doppler velocity is observed), the number for the stationary object, and estimation values (of the position and the speed) of the stationary object are output from the stationary object tracking unit 120. In conversion to the stationary-object-referenced coordinate system, the coordinates of time-series data on each stationary object position (and the Doppler velocity) is converted into the coordinate system using the reference stationary object (corresponding to the stationary object 1 in the above-mentioned example) as its origin, using estimated positions of each stationary object. The trajectory estimation unit uses the positions of each stationary object supplied thereto one after another to estimate the trajectory including the estimation value of the yaw angular velocity, and outputs the estimated trajectory to the bias correction unit 840.
In the yaw rate bias correction apparatus 800 described above, the stationary object tracking unit 120 outputs the estimated positions of each stationary object to the stationary object storage unit 130. The vehicle trajectory computation unit 140 computes the positions of the vehicle from the plurality of stationary objects in a coordinate system with a certain stationary object as a reference, using the time-series data on the positions of the plurality of stationary objects, thereby estimating the trajectory of the vehicle using the positions of the vehicle.

Third Embodiment.

A third embodiment will be described using Figs. 11 to 12.
The same reference numerals are assigned to components that are common to those in the first and second embodiments, thereby omitting description of the components.
Fig. 11 is a block diagram showing a configuration of a yaw rate bias correction apparatus 800 in this embodiment. In each of vehicle trajectory computation unit 140a to 140c, the trajectory estimation value and the estimation error variance matrix of each stationary object are computed and output to a trajectory integration unit 150, together with estimation values of each stationary object (estimation values computed by stationary object tracking). The trajectory integration unit 150 performs coordinate matching using the estimation values of each stationary object and performs weighted integration of the trajectory estimation values, using the estimation error covariance matrices.
Fig. 12 is a process flow diagram showing an operation of the trajectory integration unit 150 in this embodiment.
When the number of trajectories $N_{TRK}$ supplied to the trajectory integration unit 150 is equal to or more than two in step P1, the procedure proceeds to step P2 in which a stationary object used as the reference of the coordinate system is selected. The trajectory having a large number of times of correlation $N_{cor}$ is selected as the reference stationary object used as the reference. In step P3, positions of the other trajectories are converted to those in the coordinate system using the reference stationary object.
As a method of integrating the trajectories in step P4, an known track integration method may be employed. Integration may be performed using a covariance intersection method in view of colored noise, for example. Alternatively, a least square integration method may be used, not in view of the colored noise.
Weighted integration may be performed using a predetermined parameter <u>a</u> ($0 \le a \le 1$) and the following equation, in order to reduce an operation load:

[Expression 16]

$$\mathbf{x}^{\mathrm{SYS}} = a\mathbf{x}^{\mathrm{TRK1}} + (1-a)\mathbf{x}^{\mathrm{TRK2}}$$

Alternatively, weighted integration may be performed according to the updating condition of a trajectory, using the following equation:

[Expression 17]

$$\mathbf{x}^{\mathrm{SYS}} = \frac{n_{\mathrm{TRK1}}}{n_{\mathrm{TRK1}} + n_{\mathrm{TRK2}}}\mathbf{x}^{\mathrm{TRK1}} + \frac{n_{\mathrm{TRK2}}}{n_{\mathrm{TRK1}} + n_{\mathrm{TRK2}}}\mathbf{x}^{\mathrm{TRK2}}$$

It is assumed herein that trajectories $X^{TRK1}$ and $X^{TRK2}$ are respectively obtained from the stationary objects 1 and 2. Further, $X^{SYS}$ indicates a trajectory after integration, $n_{TRK1}$ corresponds to the number of times of correlation $N_{cor}$ of the stationary object 1, while $n_{TRK2}$ corresponds to the number of times of correlation $N_{cor}$ of the stationary object 2.

Since the other processes are similar to those in the first and second embodiments, description of the other processes will be omitted.

The yaw rate bias correction apparatus 800 described above includes the radar 810, the vehicle speed sensor 820, the yaw rate sensor 830, the stationary object identification unit 110, the stationary object tracking unit 120, the stationary object storage unit 130, the vehicle trajectory computation unit 140, the trajectory integration unit 150, and the bias correction unit 840.

The radar 810 emits a radar wave within a predetermined angle range ahead of a vehicle, and receives a radar wave reflected from an object, thereby detecting the position and the relative speed of the object.

The vehicle speed sensor 820 detects the speed of the vehicle.

The yaw rate sensor 830 detects the yaw angular velocity of the vehicle.

The stationary object identification unit 110 identifies whether or not the object detected by the radar 810 is a stationary object, based on the relative speed of the object detected by the radar 810 and the speed of the vehicle detected by the vehicle speed sensor 820.

The stationary object tracking unit 120 extracts a stationary object that is correlated in a temporal direction by the tracking filter from among a plurality of stationary objects identified to be the stationary objects by the stationary object identification unit 110, and computes the estimated position of the correlated stationary object.

The stationary object storage unit 130 stores the estimated position of the stationary object and the correlated stationary object obtained from the stationary object tracking unit 120.

The vehicle trajectory computation unit 140a to 140c receives time-series data on the position of the correlated stationary object obtained from the stationary object storage unit 130 and converts the position of the correlated stationary object to that in a stationary-object-referenced coordinate system, thereby obtaining time-series data on the position of the vehicle, and estimating the trajectory of the vehicle including its yaw angular velocity based on the position of the vehicle.

The trajectory integration unit 150 performs weighted integration of estimation values of the trajectories respectively output from the vehicle trajectory computation units 140a to 140c to compute the trajectory of the vehicle.

The bias correction unit 840 computes the bias error of the yaw angular velocity and corrects the yaw angular velocity, using the yaw angular velocity detected by the yaw rate sensor 830 and the estimation value of the yaw angular velocity obtained from each of the vehicle trajectory computation units 140a to 140c.

The trajectory integration unit 150 integrates the estimation values of the trajectories of a plurality of stationary objects in the coordinate system using the stationary object having a largest number of times of correlation as a reference.

Fourth Embodiment.

A fourth embodiment will be described using Fig. 13.

The same reference numerals are assigned to components that are common to those in the first to third embodiments, thereby omitting description of the components.

Fig. 13 is a block diagram showing a configuration of a stationary object tracking unit 120 in this embodiment. The stationary object tracking unit 120 further includes a stationary object clustering unit that clusters stationary objects. The tracking filter constituted from a correlation unit, a smoothing unit, a prediction unit, and a delay unit tracks a cluster obtained by clustering by the stationary object clustering unit.

Under an actual road running environment, there is reflection from a stationary object such as a delineator, a guardrail or a wall. A plurality of reflection points are obtained from the stationary object having a large surface area such as the guard rail or the wall in particular. Thus, it may be difficult to track one reflection point. For that reason, by performing clustering of stationary objects in a preceding stage of the tracking filter of the stationary object tracking unit 120, the plurality of reflection points obtained from the stationary object having the large surface area are clustered. Then, by tracking the cluster, correlation performance of the stationary object tracking unit is enhanced.

Since the other processes are the same as those in the first to third embodiments, description of the other processes will be omitted.

In the yaw rate bias correction apparatus 800, the stationary object tracking unit 120 clusters stationary objects and tracks the cluster.

Fifth Embodiment.

A fifth embodiment will be described using Figs. 14 to 25.
The same reference numerals are assigned to components that are common to those in the first to fourth embodiments, thereby omitting description of the components.

Fig. 14 is a hardware configuration diagram showing an example of a hardware configuration of an angular velocity estimation apparatus 200 in this embodiment.
The angular velocity estimation apparatus 200 is a computer including a processing device 911, a storage device 914, an input device 902, and an output device 901, for example.
The processing device 911 processes data by executing a computer program, thereby controlling an entirety of the angular velocity estimation apparatus 200.
The storage device 914 stores the computer program that is executed by the processing device 911 and data that is processed by the processing device 911. The storage device 914 may be a volatile memory, a non-volatile memory, a flash memory, a magnetic disk device, an optical disk device, or the like, for example.
The input device 902 receives a signal or information from outside the angular velocity estimation apparatus 200 and converts the signal or information to data of a format capable of being processed by the processing device 911. The data obtained by the conversion by the input device 902 may be directly processed by the processing device 911, or may be temporarily stored by the storage device 914. The input device 902 may be an operation input device such as a keyboard or a mouse that receives an operation of a user, a conversion device such as an analog-to-digital conversion device that converts an analog signal to digital data, or an interface device such as a receiving device that receives the signal transmitted by a different device.
The output device 901 converts the data processed by the processing device 911 and/or the data stored by the storage device 914 to a form capable of being output to an outside of the angular velocity estimation apparatus 200, for output. The output device 901 may be a device that converts data to a perceptible form to human senses and outputs it, such as a loudspeaker or a display device which displays an image. The output device 901 may be a device that converts data to an acceptable form to other devices and output it, such as a digital-to-analog conversion device that converts digital data to an analog signal, another conversion device, or an interface device such as a transmitting device that transmits a signal to another device.

Each functional block of the angular velocity estimation apparatus 200 is implemented by executing the computer program stored by the storage device 914 by the processing device 911. The functional block of the angular velocity estimation apparatus 200 may not be necessarily configured to be implemented by the computer, but may be configured to be implemented by an electronic circuit such as a digital circuit or an analog circuit. The functional block may be configured to be implemented by a configuration such as a mechanical configuration other than the electrical configuration.
Similarly, each functional block of the yaw rate bias correction apparatus 800 described in the first to fourth embodiments may be configured to be implemented by the computer, or another configuration.

Fig. 15 is a block diagram showing an example of the functional blocks of the angular velocity estimation apparatus 200.
The angular velocity estimation apparatus 200 is mounted on a moving object such as a motor vehicle. In addition to the angular velocity estimation apparatus 200, a peripheral object observation device 811, a moving speed observation device 821, and an angular velocity observation device 831 are mounted on the moving object.

The peripheral object observation device 811 observes the position, the speed, and the like of an object that is present in the vicinity of the moving object. The peripheral object observation device 811 may be radar, for example.

The peripheral object observation device 811 emits a radiation wave such as an electric wave or laser light, and detects a reflected wave that has impinged on and has been reflected from an object. The peripheral object observation device 811 thereby measures a propagation time and computes the distance to the object. The peripheral object observation device 811 scans a direction of emitting the radiation wave or a direction of receiving the reflected wave, thereby determining a direction in which the object is present. The period of time taken for scanning the radiation wave once by the peripheral object observation device 811 is 0.2 seconds, for example. Accordingly, when a relative positional relationship between the moving object and the object is not changed, the peripheral object observation device 811 repeatedly observes the identical object for each 0.2 seconds, for example. The peripheral object observation device 811 computes the relative position of the object relative to the moving object, based on the computed distance and the determined direction. Further, the peripheral object observation device 811 detects a wavelength deviation between the radiation wave and the reflected wave due to the Doppler effect, for example, thereby detecting the relative speed of the object relative to the moving object. The peripheral object observation device 811 outputs a signal indicating a result of the observation such as the relative position or the relative speed of the object.

The moving speed observation device 821 observes the moving speed of the moving object. The moving speed observation device 821 measures the number of rotations of a vehicle axle by a tachometer mounted on the vehicle axle, thereby computing the moving speed, for example. The moving speed observation device 821 counts the number of rotations of the axle for 0.1 seconds, for example. The moving speed observation device 821 multiplies the counted number of rotations by the circumferential length of a tire, thereby computing a distance in which the moving object has traveled in 0.1 seconds. The moving speed observation device 821 multiplies the computed distance by 10, thereby computing the speed of the moving object per second. In the case of this example, the moving speed observation device 821 repeatedly observes the moving speed of the moving object once for every 0.1 seconds. The moving speed observation device 821 outputs a signal indicating a result of the observation obtained by observation of the moving speed of the moving object.

The moving speed observation device 821 may be configured not to compute the moving speed of the moving object but to output a signal indicating the measured number of rotations of the vehicle axle without alteration. In that case, the speed observation value acquisition unit 212, which will be described later, executes the above-mentioned computation to compute the moving speed of the moving object, in place of the moving speed observation device 821.

The angular velocity observation device 831 observes the angular velocity of the moving object. The angular velocity observation device 831 may be a yaw rate sensor or a gyro sensor, for example. The angular velocity observation device 831 may be configured to observe the angular velocities of the moving object in three-dimensional directions (including a horizontal direction, a cross direction, and a twist direction), or may be configured to observe only the angular velocity in the horizontal direction. The angular velocity observation device 831 also repeatedly observes the angular velocity of the moving object. An observation interval is 10 milliseconds, for example. The angular velocity observation device 831 outputs a signal indicating a result of the observation in which the angular velocity of the moving object has been observed.

The angular velocity estimation apparatus 200 estimates the angular velocity of the moving object, based on results of the observations by the peripheral object observation device 811, the moving speed observation device 821, the angular velocity observation device 831, and the like. The angular velocity observed by the angular velocity observation device 831 includes a bias error and the like, thus the angular velocity estimation apparatus estimates the angular velocity of the moving object, based on the results of the observations by the peripheral object observation device 811, the moving speed observation device 821, the angular velocity observation device 831, and the like. The angular velocity estimation apparatus 200 synthesizes the results of the observations by the peripheral object observation device 811, the moving speed observation device 821, and the angular velocity observation device 831, thereby estimating the angular velocity that is more accurate. The angular velocity estimation apparatus 200 may be configured to estimate the speed, the moving direction, and the position of the moving object as well as the angular velocity of the moving object. The angular velocity estimation apparatus 200 may also be configured to compute an error of the angular velocity observed by the angular velocity observation device 831, based on the estimated angular velocity and the angular velocity observed by the angular velocity observation device 831. The angular velocity estimation apparatus 200 may be configured to store the computed error of the angular velocity and correct the angular velocity observed by the angular velocity observation device 831 using the stored error of the angular velocity when the result of the observation by the peripheral object observation device 811 and the like cannot be obtained or reliability of the obtained observation result is low.

The angular velocity estimation apparatus 200 includes a relative position acquisition unit 211, a speed observation value acquisition unit 212, an angular velocity observation value acquisition unit 213, a stationary object determination unit 220, an object correlation unit 230, and a state estimation unit 240.

The relative position acquisition unit 211 receives the signal output by the peripheral object observation device 811 to obtain the result of the observation by the peripheral object observation device 811, using the input device 902. Using the processing device 911, the relative position acquisition unit 211 determines a time at which the relative position acquisition unit 211 has received the signal output by the peripheral object observation device 811, thereby computing an observation time at which the peripheral object observation device 811 has observed the object. The relative position acquisition unit 211 may be configured to regard the time at which the relative position acquisition unit 211 has received the signal as the observation time. Alternatively, the relative position acquisition unit 211 may be configured to consider a delay time of the peripheral object observation device 811 and regard a time earlier than the time of reception of the signal just by the delay time as the observation time. The signal output by the peripheral object observation device 811 may include information indicating the observation time at which the peripheral object observation device 811 has observed the object. In that case, the relative position acquisition unit 211 obtains the observation time from the received signal, using the processing device 911.

The relative position acquisition unit 211 stores data indicating the observation time at which the peripheral object observation device 811 has observed the object and data indicating the relative position and the relative speed of the observed object. The data stored by the relative position acquisition unit 211 is referred to as "peripheral object observation data". Among the "peripheral object observation data", the data indicating the observation time is referred to as "object observation time data", data indicating the relative position of the object is referred to as "relative position observation value data", and data indicating the relative speed of the object is referred to as "relative speed observation value data".

The speed observation value acquisition unit 212 receives the signal output by the moving speed observation device 821, and obtains the result of the observation by the moving speed observation device 821, using the input device 902. The moving speed acquisition unit 212 performs a process similar to that by the relative position acquisition unit 211 to obtain an observation time at which the moving speed observation device 821 has observed the moving speed of the moving object, using the processing device 911. The moving speed acquisition unit 212 stores data indicating the observation time at which the moving speed observation device 821 has observed the moving speed of the moving object and the observed moving speed of the moving object, using the storage device 914. The data stored by the moving speed acquisition unit 212 is referred to as "moving speed data". In the "moving speed data", data indicating the observation time is referred to as "moving speed observation time data", while data indicating the moving speed of the moving object is referred to as "moving speed observation value data".

The angular velocity observation value acquisition unit 213 receives the signal output by the angular velocity observation device 831, and obtains the result of the observation by the angular velocity observation device 831, using the input device 902. The angular velocity observation value acquisition unit 213 performs a process similar to that by the relative position acquisition unit 211 or the speed observation value acquisition unit 212 to obtain an observation time at which the angular velocity observation device 831 has observed the angular velocity of the moving object, using the processing device 911. The angular velocity observation value acquisition unit 213 stores data indicating the observation time at which the angular velocity observation device 831 has observed the angular velocity of the moving object and the observed angular velocity of the moving object, using the storage device 914. The data stored by the angular velocity observation value acquisition unit 213 is referred to as "moving object angular velocity data". In the "moving object angular velocity data", data indicating the observation time is referred to as "angular velocity observation time data", while data indicating the angular velocity of the moving object is referred to as "angular velocity observation value data".

The stationary object determination unit 220 determines whether or not the object observed by the peripheral object observation device 811 is still, using the processing device 911. The stationary object determination unit 220 stores data indicating a result of the determination, using the storage device 914. The data stored by the stationary object determination unit 220 is referred to as "still determination result data".

The stationary object determination unit 220 receives the peripheral object observation data stored by the relative position acquisition unit 211 and the moving speed data stored by the moving speed acquisition unit 212, using the processing device 911, for example. The stationary object determination unit 220 obtains the relative speed observation value data indicating the relative speed of the object relative to the moving object observed by the peripheral object observation device 811 from the received peripheral object observation data, using the processing device 911. The stationary object determination unit 220 obtains the moving speed observation value data indicating the moving speed of the moving object from the received moving speed data, using the processing device 911. The stationary object determination unit 220 determines whether or not the object observed by the peripheral object observation device 811 is still, based on the relative speed indicated by the relative speed observation value data and the moving speed indicated by the moving speed observation value data, using the processing device 911.

Fig. 16 is a diagram for explaining a relationship between a moving speed of a moving object 801 and respective relative speeds of objects 701 and 702 relative to the moving object 801.

Arrows 711 and 713 respectively indicate the moving speed of the moving object 801 and the moving speed of the object 702. It is assumed that the object 701 is still. Arrows 721 and 722 respectively indicate the relative speeds of the objects 701 and 702 relative to the moving object 801.

Since the object 701 is still, the object 701 is seen to be moving in a direction just opposite to that of the moving speed of the moving object 801 at the same speed as the moving speed of the moving object 801, relative to the moving object 801. On contrast therewith, the object 702 is moving. Accordingly, the object 702 is seen to be moving at a speed obtained by combining an apparent speed (indicated by an arrow 723) caused by movement of the moving object 801 and the actual speed (indicated by the arrow 713) caused by movement of the object 702, relative to the moving object 801. Accordingly, the relative speed (apparent speed) of the object relative to the moving object can be expressed by the following equation.

[Expression 18]

$$\mathbf{v}_r = \mathbf{v}_t - \mathbf{v}_s$$

where $v_r$ denotes a vector indicating the relative speed of the object relative to the moving object, $v_t$ denotes a vector indicating the moving speed of the object, and $v_s$ denotes a vector indicating the moving speed of the moving object.

The stationary object determination unit 220 adds the vector $v_r$ indicating the relative speed of the object relative to the moving object and the vector $v_s$ indicating the moving speed of the moving object, thereby computing the vector $v_t$ indicating the moving speed of the object, using the processing device 911. The stationary object determination unit 220 computes the absolute value of the computed vector $v_t$, using the processing device 911. The stationary object determination unit 220 compares the computed absolute value with a predetermined threshold value, using the processing device 911. The threshold value is set in advance in view of observation errors of the relative speed of the object relative to the moving object and of the moving speed of the moving object. When the absolute value of the vector $v_t$ is smaller than the threshold value, the stationary object determination unit 220 determines that the object is still, using the processing device 911.

When the relative speeds of the objects relative to the moving object are observed using the Doppler effect, the observed relative speeds are only components (indicated by arrows 725 and 726) of the apparent speeds (indicated by the arrows 721 and 722) of the objects in distance directions between the moving object and the objects. Components (indicated by arrows 727 and 728) in a direction of rotation around the moving object 801 are not observed. The observed relative speed can be expressed by the following equation.

[Expression 19]

$$v_d = |\mathbf{v}_r| \cos\alpha$$

where $v_d$ denotes a real number indicating a component of the relative speed of the object relative to the moving object in the distance direction, and $\alpha$ denotes a real number indicating the angle between the direction of the relative speed of the object relative to the moving object and the direction of the moving object seen from the object.

Since the components (indicated by the arrows 727 and 728) of the relative speeds of the objects relative to the moving object in the direction of rotation around the moving object 801 are not observed, the angle $\alpha$ is unknown. However, the object 701 is still. Thus, the angle $\alpha$ (indicated by reference numeral 733) of the object 701 matches an angle 731 between the moving direction of the moving object 801 and a direction in which the object 701 is seen from the moving object 801. On contrast therewith, the object 702 is moving. Thus, the angle $\alpha$ (indicated by reference numeral 734) of the object 702 does not necessarily matches an angle 732 between the moving direction of the moving object 801 and a direction in which the object 702 is seen from the moving object 801.

The stationary object determination unit 220 computes the cosine of the angle between the moving direction of the moving object and a direction in which the object is seen from the moving object, using the processing device 911, for example. The stationary object determination unit 220 computes the product between the absolute value of the vector $v_s$ indicating the moving speed of the moving object and the computed cosine, using the processing device 911. The stationary object determination unit 220 computes a difference by subtracting the real number $v_d$ indicating the component of the relative speed of the object relative to the moving object in the distance direction from the computed product, using the processing device 911. The stationary object determination unit 220 compares the computed difference with a predetermined threshold value, using the processing device 911. The threshold value is set in advance in view of observation errors of the relative speed of the object relative to the moving object and of the moving speed of the moving object. When the difference is smaller than the threshold value, the stationary object determination unit 220 determines that the object is still, using the processing device 911.

Fig. 17 is a diagram for explaining a relationship between times 781 to 783 at which the relative speed of the object relative to the moving object has been observed and times 791 to 799 at which the moving speed of the moving object has been observed.

As described above, an observation cycle 771 in which the peripheral object observation device 811 observes the relative position and relative speed of the object relative to the moving object and an observation cycle 772 in which the moving speed observation device 821 observes the moving speed of the moving object are different. The observation times 781 to 783 at which the peripheral object observation device 811 observes the relative position and the relative speed of the object relative to the moving object are the times of scanning a direction of presence of the object. Thus, when the direction of presence of the object is changed, a timing in one observation cycle is changed. Accordingly, the observation times 781 to 783 are irregular. On contrast therewith, intervals between the observation times 791 to 799 at which the moving speed observation device 821 observes the moving speed of the moving object are constant, and each interval is equal to the observation cycle 772.

Accordingly, the observation times 781 to 783 at which the relative speed of the object relative to the moving object is observed are hardly likely to coincide with the observation times 791 to 799 at which the moving speed of the moving object is observed. However, the relative speed of the object relative to the moving object and the moving speed of the moving object, which are used for determination by the stationary object determination unit 220 as to whether the object is still or not, need to be observed at a same time.

When the moving speed of the moving object is observed by counting the number of rotations of the vehicle axle, the observed moving speed is the average value of the moving speeds at times from start to finish of the counting. The moving speed observed at the time 793 is the average value of the moving speeds from the time 792 to the time 793, for example. Accordingly, the stationary object determination unit 220 should compare the relative speed of the object relative to the moving object observed at the time 781 with the moving speed of the moving object observed at the time 793.

The stationary object determination unit 220 executes the process whenever the speed observation value acquisition unit 212 obtains a result of the observation by the moving speed observation device 821, using the processing device 911, for example. The stationary object determination unit 220 receives current moving speed data and immediately preceding moving speed data which have been stored by the speed observation value acquisition unit 212, using the processing device 911. The stationary object determination unit 220 obtains two moving speed observation time data respectively indicating a current observation time and an immediately preceding observation time at which the moving speed observation device 821 has observed the moving speeds of the moving object, from the received two moving speed data, using the processing device.

Next, the stationary object determination unit 220 receives one unprocessed peripheral object observation data from among the peripheral object observation data stored by the relative position acquisition unit 211, using the processing device 911. The stationary object determination unit 220 obtains the object observation time data indicating the observation time at which the peripheral object observation device 811 has observed the object, from the received peripheral object observation data, using the processing device 911. The stationary object determination unit 220 compares the observation time indicated by the obtained object observation time data with the observation times indicated by the obtained two moving speed observation time data, using the processing device 911.

When the observation time at which the peripheral object observation device 811 has observed the object is before the immediately preceding observation time at which the moving speed observation device 821 has observed the moving speed of the moving object, the stationary object determination unit 220 determines whether or not the object observed by the peripheral object observation device 811 is still, using the moving speed of the moving object observed by the moving speed observation device 821 at the immediately preceding observation time. Using the processing device 911, the stationary object determination unit 220 obtains the moving speed observation value data indicating the moving speed observed by the moving speed observation device 821 from the received immediately preceding moving speed data.

When the observation time at which the peripheral object observation device 811 has observed the object is after the immediately preceding observation time at which the moving speed observation device 821 has observed the moving speed of the moving object and before the current observation time, the stationary object determination unit determines whether or not the object observed by the peripheral object observation device 811 is still, using the moving speed of the moving object observed by the moving speed observation device 821 at the current observation time. Using the processing device 911, the stationary object determination unit 220 obtains the moving speed observation value data indicating the moving speed observed by the moving speed observation device 821 from the received current moving speed data.

When the observation time at which the peripheral object observation device 811 has observed the object is after the current observation time at which the moving speed observation device 821 has observed the moving speed of the moving object, the stationary object determination unit 220 determines whether or not the object observed by the peripheral object observation device 811 is still, using the moving speed of the moving object that will be observed by the moving speed observation device 821 at a subsequent observation time. Since the observation value of the moving speed of the moving object at the subsequent observation time is not obtained yet, the stationary object determination unit 220 does not execute the process on the peripheral object observation data.

As described above, the stationary object determination unit 220 selects the moving speed of the moving object used for determining whether or not the object observed by the peripheral object observation device 811 is still from the result of the observation by the moving speed observation device 821, for example. Alternatively, the stationary object determination unit 220 may be configured to compute the moving speed of the moving object used for determining whether or not the object observed by the peripheral object observation device 811 is still, based on the results of the observation by the moving speed observation device 821.

Using the processing device 911, the stationary object determination unit 220 performs a smoothing process, based on the observation times and the moving speeds indicated by the moving speed data stored by the moving speed acquisition unit 212, for example. When the observation time at which the peripheral object observation device 811 has observed the object is before a most recent one of the observation times at which the moving speed observation device 821 has observed the moving speed of the moving object, the stationary object determination unit 220 estimates the moving speed of the moving object at the observation time at which the peripheral object observation device 811 has observed the object, based on a result of the smoothing process, using the processing device 911. Alternatively, when the observation time at which the peripheral object observation device 811 has observed the object is before the most recent observation time at which the moving speed observation device 821 has observed the moving speed of the moving object, the stationary object determination unit 220 predicts the moving speed of the moving object at the observation time at which the peripheral object observation device 811 has observed the object, based on the result of the smoothing process, using the processing device 911. The stationary object determination unit 220 determines whether or not the object observed by the peripheral object observation device 811 is still, using the processing device 911 and the estimated or predicted moving speed of the moving object.

The object correlation unit 230 performs a correlation process about an object observed by the peripheral object observation device 811 and determined to be still by the stationary object determination unit 220, using the processing device 911. That is, the object correlation unit 230 determines results of observations of the identical stationary object a plurality of times from among the results of the observations of the objects by the peripheral object observation device 811. The object correlation unit 230 stores data indicating a result of the determination, using the storage device 914. The data stored by the object correlation unit 230 is referred to as "correlation result data".

The object correlation unit 230 receives the still determination result data stored by the stationary object determination unit 220, using the processing device 911, for example. The object correlation unit 230 receives one unprocessed peripheral object observation data on the object determined to be still by the stationary object determination unit 220 from among the peripheral object observation data stored by the relative position acquisition unit 211, based on the result of the determination indicated by the received still determination result data, using the processing device 911. The object correlation unit 230 obtains the object observation time data indicating the observation time at which the peripheral object observation device 811 has observed the object and the relative position observation value data indicating the relative position of the object relative to the moving object observed by the peripheral object observation device 811, from the received peripheral object observation data, using the processing device 911.

When the trajectory of the relative position of the object relative to the moving object estimated from processed peripheral object observation data is present, the object correlation unit 230 determines whether or not the observation time and the relative position indicated by the obtained data fit the trajectory, using the processing device 911. When the observation time and the relative position fit a plurality of trajectories, the object correlation unit 230 determines one of the trajectories which the observation time and the relative position indicated by the obtained data best fit, using the processing device 911. The object correlation unit 230 incorporates the observation time and the relative position indicated by the obtained data into the best fit trajectory, and thereby updates the trajectory, using the processing device 911.

When the observation time and the relative position indicated by the obtained data fit no trajectory, the object correlation unit 230 determines whether or not there is one of other peripheral object observation data fitting no trajectory that may form a new trajectory, using the processing device 911. When there is the peripheral object observation data that may form the new trajectory, the object correlation unit 230 generates the new trajectory, using the processing device 911.

The object correlation unit 230 stores data indicating the generated or updated trajectory, using the storage device 914.

The absolute position and the orientation of the moving object are not known yet in this stage of the correlation process. Thus, the correlation process by the object correlation unit 230 is performed, based on the relative position (apparent position) of the object relative to the moving object.

Fig. 18 is a diagram for explaining a relationship between a moving trajectory 751 of the moving object 801 and trajectories 761 to 766 of relative positions of objects 703 to 708 relative to the moving object 801.

It is assumed, for example, that the moving object 801 has meandered, as indicated by the moving trajectory 751. Further, it is assumed that the objects 703 to 708 are still.

At a time 785, the peripheral object observation device 811 observes relative positions 741a to 741f of the objects 703 to 708 relative to the moving object 801.
At a time 786, the peripheral object observation device 811 observes relative positions 742a to 742f of the objects 703 to 708 relative to the moving object 801.
At a time 787, the peripheral object observation device 811 observes relative positions 743a to 743f of the objects 703 to 708 relative to the moving object 801.
The object correlation unit 230 performs the correlation process based on these results of the observations, thereby generating the trajectories 761 to 766.

As described above, the relative positions of the stationary objects 703 to 708 relative to the moving object 801 change with movement of the moving object 801. Particularly when the moving object 801 turns around, directions in which the objects 703 to 708 are seen greatly change. Thus, the relative positions of the objects 703 to 708 relative to the moving object 801 also greatly change.
For this reason, the trajectories 761 to 766 of the relative positions of the stationary objects 703 to 708 relative to the moving object 801 may form a complex shape as shown in Fig. 18.

When the peripheral object observation device 811 observes the stationary objects 703 to 708, the respective relative positions of the objects 703 to 708 relative to the moving object 801 greatly change with movement or turn of the moving object 801. However, a positional relationship among the objects 703 to 708 remains unchanged. Not only directions of the relative positions of the objects 703 to 708 relative to the moving object 801 change with turn of the moving object 801, but also directions and distances of the relative positions of the objects 703 to 708 relative to the moving object 801 change with movement of the moving object 801. On contrast therewith, since the objects 703 to 708 are still, distances between the respective objects 703 to 708 remain unchanged, even if the moving object 801 has moved or turned. Only directions among the objects 703 to 708 change with turn of the moving object 801.

Taking advantage of this phenomenon, the object correlation unit 230 predicts relative positions of the objects relative to the moving object 801 observed by the peripheral object observation device 811, using the processing device 911. The object correlation unit 230 performs the correlation process using the processing device 911 and a result of prediction.

The object correlation unit 230 selects one stationary object from among a plurality of objects observed by the peripheral object observation device 811 in one scanning cycle, using the processing device 911, for example. The object correlation unit 230 translates coordinates of relative positions of a plurality of stationary objects relative to the moving object 801 observed in the current scanning cycle in parallel so that coordinates of the selected object coincide with the origin, using the processing device 911. Similarly, the object correlation unit 230 selects one stationary object from among a plurality of objects observed by the peripheral object observation device 811 in an immediately preceding scanning cycle, using the processing device 911. The object correlation unit 230 translates coordinates of relative positions of a plurality of stationary objects relative to the moving object 801 observed in the immediately preceding scanning cycle in parallel so that coordinates of the selected object coincide with the origin, using the processing device 911.
The object correlation unit 230 rotates coordinates obtained by the parallel translation of the coordinates of the relative positions of the stationary objects observed by the peripheral object observation device 811 in the current scanning cycle with respect to the origin, using the processing device 911. The object correlation unit 230 computes a distance between each of coordinates resulting from the rotation and each of coordinates obtained by the parallel translation of the relative positions of the stationary objects observed by the peripheral object observation device 811 in the immediately preceding scanning cycle, using the processing device 911. When the computed distance is smaller than a predetermined threshold value, the object correlation unit 230 regards the objects corresponding to the two coordinates as the identical object and counts the number of pairs of the coordinates, each pair of which may be regarded as the coordinates of the identical object, using the processing device 911.
Using the processing device 911, the object correlation unit 230 repeats this operation by changing an angle of rotation, and obtains the angle having the largest number of the pairs of the coordinates; each pair of which may be regarded as the coordinates of the identical object.
Using the processing device 911, the object correlation unit 230 repeats this operation by changing a combination of the object selected from the plurality of objects observed in the current scanning cycle and the object selected from the plurality of objects observed in the immediately preceding scanning cycle, thereby obtaining the combination and the angle of rotation having the largest number of the pairs of the coordinates, each pair of which may be regarded as the coordinates of the identical object.

Fig. 19 is a diagram for explaining the operation of the object correlation unit 230 in this embodiment.
Using the processing device 911, the object correlation unit 230 selects the relative position 741c, for example, from among relative positions 741a to 741f of stationary objects relative to the moving object 801 observed by the peripheral object observation device 811 in an immediately preceding scanning cycle. Using the processing device 911, the object correlation unit 230 translates coordinates of the relative positions 741a to 741f in parallel so that the coordinates of the relative position 741c coincide with the origin.

Next, using the processing device 911, from among relative positions 742a to 742f of stationary objects relative to the moving object 801 observed by the peripheral object observation device 811 in a current scanning cycle, the object correlation unit 230 selects the relative position 742c, for example. The object correlation unit 230 moves coordinates of the relative positions 742a to 742f in parallel so that the coordinates of the relative position 742c coincide with the origin. The object correlation unit 230 rotates coordinates of the relative positions 742a to 742f obtained by the parallel translation with respect to the origin, using the processing device 911. The object correlation unit 230 compares coordinates of the relation positions 742a to 742f resulting from the rotation with coordinates of the relative positions 741a to 741f obtained by the parallel translation to count the number of pairs of the coordinates, each pair of which may be regarded as the coordinates of the identical object.

When a combination of the relative positions selected by the object correlation unit 230 is the pair of the relative positions of the identical object actually observed by the peripheral object observation device 811 and the angle of rotation of the coordinates matches the turn angle of the moving object 801, the number of pairs of the coordinates, each pair of which may be regarded as the coordinates of the identical object, is the largest.

The object correlation unit 230 determines the combination of the relative positions having the largest number of pairs of the coordinates, each pair of which may be regarded as the coordinates of the identical object, as relative positions obtained by observation of the identical object by the peripheral object observation device 811. The object correlation unit 230 determines the combination of the relative positions corresponding to the pair of the coordinates which was regarded as the coordinates of the identical object, as the relative positions obtained by observation of the identical object by the peripheral object observation device 811.

As described above, the object correlation unit 230 performs the correlation process only about the object determined to be still by the stationary object determination unit 220. Thus, even if the moving trajectory 751 of the moving object 801 is not unknown, the object observed by the peripheral object observation device 811 may be correlated and tracked.

The object correlation unit 230 may be configured to correlate and track all combinations of relative positions. Alternatively, the object correlation unit 230 may be configured to narrow down the combinations of relative positions for correlation and tracking, using information such as the moving speed of the moving object 801 observed by the moving speed observation device 821.

Further, the object correlation unit 230 may be configured not to limit the range of the angle by which the coordinates translated in parallel is rotated. Alternatively, the object correlation unit 230 may be configured to narrow down the angle, using information such as the angular velocity of the moving object 801 observed by an angular velocity observation device 831.

When the above-mentioned pairs of coordinates are concentrated into a narrow range, the narrow range may be details of one object. Accordingly, the object correlation unit 230 may be configured not to compare the number of pairs of coordinates, each pair of which may be regarded the coordinates of the identical object, but to compare the area of a convex polygon with vertices thereof being the pairs of coordinates each pair of which may be regarded as the coordinates of the identical object. A combination of the relative positions or the rotation angle having the largest area of the convex polygon should be thereby determined.

The state estimation unit (angular velocity estimation unit) 240 estimates state quantities such as the position, speed, moving direction and angular velocity of the moving object, a gain error of the moving speed observed by the moving speed observation device 821, and a bias error of the angular velocity observed by the angular velocity observation device 831, using the processing device 911. The state estimation unit 240 stores data indicating a result of estimation, using the storage device 914. The state estimation unit 240 outputs the result of estimation to the outside, using the output device 901.

When estimating the state quantities, the state estimation unit 240 use the relative positions of an object relative to the moving object 801, which have been determined to be results of observations of the identical stationary object by the object correlation unit 230.

Assume that one object has been observed over a plurality of scanning cycles. The larger the number of the scanning cycles in which the object has been observed is, more valuable the use of the relative positions of the object relative to the moving object 801 observed by the peripheral object observation device 811 is. For this reason, only when the number of the scanning cycles in which the object has been observed is larger than a predetermined threshold value, the relative positions of the object relative to the moving object 801 observed by the peripheral object observation device 811 may be used. Alternatively, only when the number of the scanning cycles in which the object has been continuously observed is larger than a predetermined threshold value, the relative positions of the object relative to the moving object 801 observed by the peripheral object observation device 811 may be used. To take an example, using the processing device 911, the state estimation unit 240 computes the number of the scanning cycles in which the object has been continuously observed, based on a result of the determination by the object correlation unit 230. Then, the state estimation unit 240 compares the computed number of the scanning cycles with the threshold value. Only when the number of the scanning cycles in which the object has been continuously observed is larger than the threshold value, the state estimation unit 240 uses the relative positions of the object relative to the moving object 801 observed by the peripheral object observation device 811.

The relative position of the object relative of the moving object observed by the peripheral object observation device 811 may be considered as coordinates of a relative coordinate system in which the absolute position of the moving object is set to the origin, and the moving direction of the moving object is used as a reference.

Fig. 20 is a diagram for explaining a relationship between the relative coordinate system using the moving object 801 as the reference and an absolute coordinate system using a still point as a reference.

While X and Y axes are coordinate axes in the relative coordinate system using the moving object 801 as the reference, x and y axes are coordinate axes of the absolute coordinate system. The origin of the absolute coordinate system may be set to any still point.

The position of the moving object 801 in the absolute coordinate system is denoted as ($x_s$, $y_s$), and an angle formed between the moving direction of the moving object 801 and the y axis of the absolute coordinate system is denoted as $\theta$. There is the following relationship between coordinates (X, Y) of the relative coordinate system and coordinates (x, y) of the absolute coordinate system.

[Expression 20]

$$\begin{pmatrix} X \\ Y \end{pmatrix} = \mathbf{R}_\theta \begin{pmatrix} x - x_s \\ y - y_s \end{pmatrix}, \quad \mathbf{R}_\theta = \begin{pmatrix} \cos\theta & \sin\theta \\ -\sin\theta & \cos\theta \end{pmatrix}$$

where $R_\theta$ denotes a matrix indicating rotation conversion of the angle $\theta$.

Coordinates of a stationary object in the absolute coordinate system is denoted as ($x_t$, $y_t$), and coordinates of the relative position of the object relative to the moving object observed by the peripheral object observation device 811 is denoted as ($x_r$, $y_r$). Then, when an observation error is not considered, the coordinate conversion indicated by Expression 20 can be applied. Thus, the following equation holds:

[Expression 21]

$$\begin{pmatrix} x_r \\ y_r \end{pmatrix} = \mathbf{R}_\theta \begin{pmatrix} x_t - x_s \\ y_t - y_s \end{pmatrix}$$

The state estimation unit 240 uses a model indicated by the following expressions to perform estimation, using an extended Kalman filter, for example:

$$\mathbf{x}_1 = \begin{pmatrix} x_t \\ y_t \\ x_s \\ y_s \\ v \\ \theta \\ \omega \end{pmatrix}, \quad f_1(\mathbf{x}_1) = \begin{pmatrix} x_t \\ y_t \\ x_s + v\Delta t \sin\theta \\ y_s + v\Delta t \cos\theta \\ v \\ \theta + \omega\Delta t \\ \omega \end{pmatrix},$$

$$\mathbf{z}_1 = \begin{pmatrix} x_r \\ y_r \end{pmatrix}, \quad h_1(\mathbf{x}_1) = \mathbf{R}_\theta \begin{pmatrix} x_t - x_s \\ y_t - y_s \end{pmatrix}$$

where $x_1$ denotes a vector representing state quantities. $x_t$ denotes the x coordinate of the stationary object observed by the peripheral object observation device 811 in the absolute coordinate system. $y_t$ denotes the y coordinate of the stationary object observed by the peripheral object observation device 811 in the absolute coordinate system. $x_s$ denotes the x coordinate of the moving object in the absolute coordinate system. $y_s$ denotes the y coordinate of the moving object in the absolute coordinate system. v denotes a moving speed of the moving object. $\theta$ denotes the moving direction of the moving object. $\omega$ denotes an angular velocity of the moving object. $f_1$ denotes a function indicating a state transition model. $\Delta t$ denotes an elapse of time. $z_1$ denotes a vector indicating an amount of observation. $x_r$ denotes the X coordinate of the relative position of the stationary object relative to the moving object observed by the peripheral object observation device 811. $y_r$ denotes the Y coordinate of the stationary object relative to the moving object observed by the peripheral object observation device 811. $h_1$ denotes a function indicating an observation model.

The state estimation unit 240 may be configured to use the moving speed of the moving object observed by the moving speed observation device 821 and the angular velocity of the moving object observed by the angular velocity observation device 831 as well as the coordinates ($x_r$, $y_r$) of the relative position of the object relative to the moving object observed by the peripheral object observation device 811, as observation values for the extended Kalman filter. In that case, the state estimation unit 240 performs estimation using a model indicated by the following equations, for example:

[Expression 23]

$$\mathbf{x} = \begin{pmatrix} \mathbf{x}_1 \\ \varepsilon_v \\ \varepsilon_\omega \end{pmatrix}, \quad f(\mathbf{x}) = \begin{pmatrix} f_1(\mathbf{x}_1) \\ \varepsilon_v \\ \varepsilon_\omega \end{pmatrix},$$

$$\mathbf{z} = \begin{pmatrix} \mathbf{z}_1 \\ v_o \\ \omega_o \end{pmatrix}, \quad h(\mathbf{x}) = \begin{pmatrix} h_1(\mathbf{x}_1) \\ (1+\varepsilon_v)v \\ \omega + \varepsilon_\omega \end{pmatrix}$$

where x denotes a vector indicating state quantities. $\varepsilon_v$ denotes a gain error of the moving speed of the moving object observed by the moving speed observation device 821. $\varepsilon_\omega$ denotes a bias error of the angular velocity of the moving object observed by the angular velocity observation device 831. f denotes a function indicating a state transition model. z denotes a vector indicating an amount of observation. vo denotes the moving speed of the moving object observed by the moving speed observation device 821. $\omega_o$ denotes the angular velocity of the moving object observed by the angular velocity observation device 831. $x_1$, $f_1$, $z_1$, and $h_1$ follow the definitions in Expression 22.

The time when the peripheral object observation device 811 observes the object, the time when the moving speed observation device 821 observes the moving speed of the moving object, and the time when the angular velocity observation device 831 observes the angular velocity of the moving object are respectively different. However, there is no correlation among errors of observation values observed by the respective observation devices. For this reason, observation functions are spareted for each observation value observed by each of the observation devices, for example. The state estimation unit 240 performs an updating process whenever one of the observation devices performs observation.

When relative positions of a plurality of objects relative to the moving object are used for estimation of state quantities, the state estimation unit 240 may be configured to use the state quantity vector (x or $x_1$) extended to include coordinates of the plurality of objects in the absolute coordinate system.

However, when the order of a matrix computed by the extended Kalman filter is increased, a computation amount is increased. Accordingly, when processing capability of the processing device 911 is low, computation in real time may become difficult.

Then, the state estimation unit 240 may be configured to use execution of the extended Kalman filters in parallel for the respective objects. In that case, the state quantities such as the abso lute coordinates and angular velocity of the moving object are estimated by each of the extended Kalman filters. Thus, a plurality of estimation values are obtained. Using the processing device 911, the state estimation unit 240 averages the plurality of estimation values estimated by the plurality of extended Kalman filters to set estimation values of the state quantities such as the absolute coordinates and angular velocity of the moving object. When averaging the plurality of estimation values, the state estimation unit 240 may be configured to perform weighting according to accuracy of estimation, using a plurality of error covariance matrices computed by the plurality of extended Kalman filters.

Fig. 21 is a flowchart showing an example of a flow of an angular velocity estimation process S500 in this embodiment.

In the angular velocity estimation process S500, the angular velocity estimation apparatus 200 estimates the angular velocity of the moving object or the like. The angular velocity estimation process S500 includes an observation result acquisition step S510, a still determination step S520, an object correlation step S530, and a state estimation step S550, for example.

In the observation result acquisition step S510, the relative position acquisition unit 211, the speed observation value acquisition unit 212, and the angular velocity observation value acquisition unit 213 respectively obtain results of the observations by the peripheral object observation device 811, the moving speed observation device 821, and the angular velocity observation device 831.

In the still determination step S520, the stationary object determination unit 220 determines whether or not an object observed by the peripheral object observation device 811 is still, based on the observation results obtained in the observation result acquisition step S510.

In the object correlation step S530, the object correlation unit 230 performs the correlation process about the object determined to be still by the stationary object determination unit 220 in the still determination step S520.

In the state estimation step S550, the state estimation unit 240 estimates the angular velocity of a moving object or the like, based on the observation results obtained in the observation result acquisition step S510 and a result obtained by the correlation process by the object correlation unit 230.

The angular velocity estimation apparatus 200 returns the procedure to the observation result acquisition step S510 to repeat the process.

Fig. 22 is a flowchart diagram showing an example of a flow of the observation result acquisition step S510 in this embodiment.

The observation result acquisition step S510 includes a relative position acquisition step S511, a moving speed acquisition step S512, and an angular velocity acquisition step S513, for example.

In the relative position acquisition step S511, the relative position acquisition unit 211 determines whether or not the peripheral object observation device 811 outputs the signal indicating the observation result, using the processing device 911. When the relative position acquisition unit 211 determines that the peripheral object observation device 811 outputs the signal, the relative position acquisition unit 211 receives the signal output by the peripheral object observation device 811, using the input device 902. The relative position acquisition unit 211 obtains the observation result indicated by the input signal, using the processing device 911. The relative position acquisition unit 211 generates peripheral object observation data indicating the obtained observation result, using the processing device 911. The peripheral object observation data generated by the relative position acquisition unit 211 includes object observation time data, relative position observation value data, and relative speed observation value data, for example.

The object observation time data indicates a time at which the peripheral object observation device 811 has observed the object. The object observation time data is integer value data in which an elapse of time from a predetermined time is expressed in millisecond, for example. Alternatively, the object observation time data is a set of integer value data indicating the number for a frame and integer value data expressing an elapse of time from the start time of the frame in millisecond. One frame is one cycle of scanning by the peripheral object observation device 811. The length of one frame is 0.2 seconds, for example.
The relative position observation value data indicates the relative position of the object relative to the moving object observed by the peripheral object observation device 811. The relative position observation value data is a set of two real value data expressing coordinates of the object observed by the peripheral object observation device 811 in meter in a moving-object-referenced relative coordinate system in which the moving object is set to the origin, a running direction of the moving object is set to a Y axis, and a right direction perpendicular to the running direction of the moving object is set to an X axis, for example. Alternatively, the relative position observation value data is a set of real value data expressing a distance between the object and the moving object observed by the peripheral object observation device 811 in meter and real value data expressing an angle between the running direction of the moving object and a direction, in which the object is seen from the moving object, observed by the peripheral object observation device 811 in radian.
The relative speed observation value data indicates the relative speed of the object relative to the moving object observed by the peripheral object observation device 811. The relative speed observation value data is a set of two real value data expressing components of a relative speed vector of the object relative to the moving object observed by the peripheral object observation device 811 in meter per second in the moving-object-referenced relative coordinate system, for example. Alternatively, the relative speed observation value data is real number value data expressing a component of the relative speed of the object relative to the moving object observed by the peripheral object observation device 811 in the direction of a distance between the object and the moving object in meter per second.
The relative position acquisition unit 211 stores the generated peripheral object observation data, using the storage device 914.

In the moving speed acquisition step S512, the speed observation value acquisition unit 212 determines whether or not the moving speed observation device 821 outputs the signal indicating the observation result, using the processing device 911. When it is determined that the moving speed observation device 821 outputs the signal, the speed observation value acquisition unit 212 receives the signal output by the moving speed observation device 821, using the input device 902. The speed observation value acquisition unit 212 obtains the observation result indicated by the received signal, using the processing device 911. The speed observation value acquisition unit 212 generates moving speed data indicating the obtained observation result, using the processing device 911. The moving speed data generated by the speed observation value acquisition unit 212 includes moving speed observation time data and moving speed observation value data, for example.
The moving speed observation time data indicates a time at which the moving speed observation device 821 has observed the moving speed of the moving object. The moving speed observation time data is integer value data expressing an elapse of time from a predetermined time in millisecond, for example.
The moving speed observation value data indicates the moving speed of the moving object observed by the moving speed observation device 821. The moving speed observation value data is real value data expressing the moving speed of the moving object observed by the moving speed observation device 821 in meter per second, for example.
The speed observation value acquisition unit 212 stores the generated moving speed data, using the storage device 914.

In the angular velocity acquisition step S513, the angular velocity observation value acquisition unit 213 determines whether or not the angular velocity observation device 831 outputs the signal indicating the observation result, using the processing device 911. When it is determined that the angular velocity observation device 831 outputs the signal, the angular velocity observation value acquisition unit 213 receives the signal output by the angular velocity observation device 831, using the input device 902. The angular velocity observation value acquisition unit 213 obtains the observation result indicated by the received signal, using the processing device 911. The angular velocity observation value acquisition unit 213 generates angular velocity data indicating the obtained observation result, using the processing device 911. The angular velocity data generated by the angular velocity observation value acquisition unit 213 includes angular velocity observation time data and angular velocity observation value data, for example.
The angular velocity observation time data indicates a time at which the angular velocity observation value acquisition unit 213 has observed the angular velocity of the moving object. The angular velocity observation time data is integer value data expressing an elapse of time from a predetermined time in millisecond, for example.
The angular velocity observation value data indicates the angular velocity of the moving object observed by the angular velocity observation value acquisition unit 213. The angular velocity observation value data is real value data expressing the angular velocity of the moving object observed by the angular velocity observation device 831 in radian per second, for example.
The angular velocity observation value acquisition unit 213 stores the generated angular velocity data, using the storage device 914.

Expression formats of the observation times of the object observation time data, the moving speed observation time data, and the angular velocity observation time data may be different if mutual conversion of the expression formats is possible.

Fig. 23 is a flowchart diagram showing an example of a flow of the still determination step S520 in this embodiment.

The still determination step S520 includes a moving speed observation time acquisition step S521, an object selection step S522, an observation time comparison step S523, and a speed comparison step S524, for example.

In the moving speed observation time acquisition step S521, the stationary object determination unit 220 obtains one of the moving speed data having a most recent observation time stored in the moving speed acquisition step S512 by the speed observation value acquisition unit 212, using the processing device 911. The stationary object determination unit 220 obtains the most recent observation time at which the moving speed observation device 821 has observed the moving speed of the moving object from moving speed observation time data included in the obtained moving speed data, using the processing device 911. The stationary object determination unit 220 obtains the moving speed of the moving object observed by the moving speed observation device 821 from moving speed observation value data included in the obtained moving speed data, using the processing device 911.

When the moving speed observation device 821 does not observe a new moving speed after the still determination step S520 has been executed at an immediately preceding time, the stationary object determination unit 220 may finish the still determination step S520 without performing subsequent processes. The stationary object determination unit 220 compares a most recent observation time obtained when the moving speed observation time acquisition step S521 has been executed at the immediately preceding time with the most recent observation time obtained at a current time, using the processing device 911, for example. When the observation times are the same, the stationary object determination unit 220 finishes the still determination step S520.

In the object selection step S522, using the processing device 911, the stationary object determination unit 220 selects one of the peripheral object observation data stored by the relative position acquisition unit 211 in the relative position acquisition step S511, on which determination as to whether the object is still or not has not been done yet.

When the stationary object determination unit 220 determines about certain peripheral object observation data whether or not the object in the peripheral object observation data is still in the speed comparison step S524 that will be described later, for example, the stationary object determination unit 220 associates and stores still determination result data indicating a result of the determination with the peripheral object observation data, using the storage device 914.

By determining whether or not still determination result data associated with certain peripheral object observation data is stored, using the processing device 911, the stationary object determination unit 220 determines determination about the peripheral object observation data whether or not the object is still has been finished.

When the peripheral object observation data to be selected is not present, the stationary object determination unit 220 finishes the still determination step S520, using the processing device 911.

When one or more peripheral object observation data to be selected are present, the stationary object determination unit 220 selects one of the peripheral object observation data, using the processing device 911. The stationary object determination unit 220 proceeds to the observation time comparison step S523, using the processing device 911.

In the observation time comparison step S523, the stationary object determination unit 220 obtains the observation time at which the peripheral object observation device 811 has observed the object from object observation time data included in the peripheral object observation data selected in the object selection step S522, using the processing device 911. The stationary object determination unit 220 compares the obtained observation time with the observation time obtained in the moving speed observation time acquisition step S521, using the processing device 911.

When the observation time at which the peripheral object observation device 811 has observed the object is after the most recent observation time at which the moving speed observation device 821 has observed the moving speed of the moving object, the stationary object determination unit 220 does not determine whether or not the object in the peripheral object observation data is still. The stationary object determination unit 220 returns the procedure to the object selection step S522, using the processing device 911, and selects a subsequent one of the peripheral observation data.

When the observation time at which the peripheral object observation device 811 has observed the object is before the most recent observation time at which the moving speed observation device 821 has observed the moving speed of the moving object, the stationary object determination unit 220 determines whether or not the object in the peripheral object observation data is still. Using the processing device 911, the stationary object determination unit 220 proceeds to the speed comparison step S524.

In the speed comparison step S524, the stationary object determination unit 220 obtains the relative speed of the object relative to the moving object observed by the peripheral object observation device 811 from relative speed observation value data included in the peripheral object observation data selected in the object selection step S522, using the processing device 911. Using the processing device 911, the stationary object determination unit 220 determines whether or not the object is still, based on the obtained relative speed and the moving speed of the moving object obtained in the moving speed observation time acquisition step S521. The stationary object determination unit 220 generates still determination data indicating a result of the determination, using the processing device 911. The stationary object determination unit 220 associates and stores the generated still determination data with the peripheral object observation data selected in the object selection step S522, using the storage unit 914.
Using the processing device 911, the stationary object determination unit 220 returns the procedure to the object selection step S522 to select the subsequent one of the peripheral object observation data.

Fig. 24 is a flowchart diagram showing an example of a flow of the object correlation step S530 in this embodiment.
The object correlation step S530 includes an immediately preceding frame stationary object acquisition step S531, a current frame stationary object acquisition step S532, an immediately preceding frame object selection step S533, an immediately preceding frame object parallel translation step S534, a current frame object selection step S535, a current frame object parallel translation step S536, a rotation angle selection step S537, a current frame object rotation step S538, a distance computation step S539, an identical object determination step S540, a threshold value determination step S541, and an identical object storage step S542.

In the immediately preceding frame stationary object acquisition step S531, the object correlation unit 230 obtains all peripheral object observation data on objects observed by the peripheral object observation device 811 in an immediately preceding frame and determined to be still by the stationary object determination unit 220 in the still determination step S520 from among the peripheral object observation data stored by the relative position acquisition unit 211, using the processing device 911.
Using the processing device 911, for each of the obtained peripheral object observation data, the object correlation unit 230 obtains the number of frames having the peripheral object observation data determined by the object correlation unit 230 that the peripheral object observation device 811 has observed identical objects in the obtained peripheral object observation data and peripheral object observation data in one or more frames before the immediately preceding frame.
Assume that in the identical object storage step S542 which will be described later, for example, the object correlation unit 230 has determined that peripheral object observation data on an object observed by the peripheral object observation device 811 in a certain frame indicates the identical object in the peripheral object observation data observed by the peripheral object observation device 811 in a frame preceding the certain frame, using the processing device 911. Then, the object correlation unit 230 generates correlation count data indicating the number of times of correlation. The number of times of correlation indicates the number of frames in which it has been determined that the identical object has been observed. The object correlation unit 230 associates and stores the correlation count data with the peripheral object observation data, using the storage device 914. When the peripheral object observation data determined to be obtained by observation of the identical object in a frame preceding the certain frame has no associated correlation count data, the object correlation unit 230 generates the correlation count data in which the number of times of correlation is set to "one". When the correlation count data associated with the peripheral object observation data determined to be obtained by observation of the identical object is present, the object correlation unit 230 generates new correlation count data having the number of times of correlation obtained by incrementing the number of times of correlation indicated by the correlation count data by one.
Using the processing device 911, the object correlation unit 230 obtains the number of times of correlation indicated by the correlation count data stored associated with the obtained peripheral object observation data. The object correlation unit 230 thereby obtains the number of frames in which it has been determined that the identical object was observed. The object correlation unit 230 ranks all the obtained peripheral object observation data in the descending order of the obtained number of the frames, using the processing device 911. The larger the number of correlated frames is, the lower the possibility that the peripheral object observation data is obtained by erroneous detection due to noise or the like, and the lower the possibility of the erroneous recognition of a moving object to be still. For this reason, the peripheral object observation data having a large number of correlated frames is highly likely to be correlated with peripheral object observation data in a current frame as well. By ranking the peripheral object observation data in the descending order of the possibility of being correlated with the peripheral object observation data in the current frame in advance, the amount of computation in the object correlation step S530 may be reduced.

In the current frame stationary object acquisition step S532, the object correlation unit 230 obtains all peripheral object observation data on objects observed by the peripheral object observation device 811 in a most recent frame and determined to be still by the stationary object determination unit 220 in the still determination step S520 from among the peripheral object observation data stored by the relative position acquisition unit 211, using the processing device 911.

In the immediately preceding frame object selection step S533, the object correlation unit 230 selects one of the peripheral object observation data in the order of the ranking in the immediately preceding frame stationary object acquisition step S531 from among the peripheral object observation data obtained in the immediately preceding frame stationary object acquisition step S531, using the processing device 911.
When all the peripheral object observation data obtained in the immediately preceding frame stationary object acquisition step S531 have been already selected and no peripheral object observation data to be selected is present, the object correlation unit 230 proceeds to the identical object storage step S542, using the processing device 911.

When there are the peripheral object observation data that have not been selected yet, the object correlation unit 230 selects one of the peripheral object observation data that have not been selected yet, using the processing device 911. The object correlation unit 230 predicts the relative position of an object that is identical to the object in the selected peripheral object observation data and that will be observed by the peripheral object observation device 811 in the current frame. Using the processing device 911, the object correlation unit 230 makes prediction, based on a state quantity such as the trajectory of the relative position of the correlated object relative to the moving object in the frames up to the immediately preceding frame or the angular velocity of the moving object estimated by the state estimation unit 240, for example.

In the immediately preceding frame object parallel translation step S534, using the processing device 911, the object correlation unit 230 subtracts coordinates of relative positions of the objects relative to the moving object indicated by relative position observation value data included in the peripheral object observation data selected in the current frame stationary object acquisition step S532 from coordinates of relative positions of the objects relative to the moving object observed by the peripheral object observation device 811 indicated by relative position observation value data included in all of the peripheral object observation data obtained in the immediately preceding frame stationary object acquisition step S531, thereby translating the coordinates of the objects in parallel. The object correlation unit 230 stores data indicating coordinates obtained by parallel translation for each of the peripheral object observation data obtained in the immediately preceding frame stationary object acquisition step S531, using the storage device 914.

In the current frame object selection step S535, using the processing device 911, the object correlation unit 230 ranks the peripheral object observation data obtained in the current frame stationary object acquisition step S532 in the order of closeness of the relative position of each object relative to the moving object observed by the peripheral object observation device 811 indicated by the relative position observation value data included in the peripheral object observation data to the relative position predicted in the immediately preceding frame object selection step S533. This operation is performed because the shorter the distance of the relative position of the object to the predicted relative position is, the higher the possibility that the identical object has been observed is. The object correlation unit 230 may be configured to extract only the peripheral object observation data where distance between its relative position and the predicted relative position shorter than a predetermined threshold value, and then ranks the extracted data in the order of closeness of the relative positions.

Using the processing device 911, the object correlation unit 230 selects one of the peripheral object observation data obtained in the current frame stationary object acquisition step S532 (or the extracted peripheral object observation data each having the distance to the relative position predicted in the immediately preceding frame object selection step S533 shorter than the predetermined threshold value) in the order of closeness of the distance to the relative position predicted in the immediately preceding frame object selection step S533.

When all of the peripheral object observation data obtained in the current frame stationary object acquisition step S532 (or the extracted peripheral object observation data each having the distance to the relative position predicted in the immediately preceding frame object selection step S533 shorter than the predetermined threshold value) have been already selected, and no peripheral object observation data to be selected is present, the object correlation unit 230 returns the procedure to the immediately preceding frame object selection step S533, using the processing device 911, and selects a subsequent one of the peripheral object observation data selected in the immediately preceding frame stationary object acquisition step S531.

When there are the peripheral object observation data that have not been selected yet, the object correlation unit 230 selects one of the peripheral object observation data that have not been selected yet, using the processing device 911, and proceeds to the current frame object parallel translation step S536.

In the current frame object parallel translation step S536, using the processing device 911, the object correlation unit 230 subtracts coordinates of the relative position of the object relative to the moving object indicated by the relative position observation value data included in the peripheral object observation data selected in the current frame object selection step S535 from coordinates of the relative positions of the objects observed by the peripheral object observation device 811 indicated by the relative position observation value data included in all of the peripheral object observation data obtained in the current frame stationary object acquisition step S532, thereby translating the coordinates of the objects in parallel. The object correlation unit 230 stores data indicating coordinates obtained by translating in parallel for each of the peripheral object observation data obtained in the current frame stationary object acquisition step S532, using the storage device 914.

In the rotation angle selection step S537, the object correlation unit 230 assumes that the peripheral object observation data selected in the immediately preceding frame object selection step S533 and the peripheral object observation data selected in the current frame object selection step S535 are the peripheral object observation data indicating observation results obtained by observation of the identical object, and estimates the turn angle of the moving object, using the processing device 911. The object correlation unit 230 may be configured to use the state quantity estimated by the state estimation unit 240 or the angular velocity of the moving object observed by the angular velocity observation device 831 or the like for estimation of the turn angle. The object correlation unit 230 determines a plurality of rotation angles for trial, based on the estimated turn angle, using the processing device 911.
The object correlation unit 230 selects one of the determined rotation angles in the order of closeness to the estimated turn angle, using the processing device 911.
When all of the determined rotation angles have already been selected and no rotation angle to be selected is present, the object correlation unit 230 returns the procedure to the current frame object selection step S535, using the processing device 911, and selects a subsequent one of the peripheral object observation data obtained in the current frame stationary object acquisition step S532.
When an unselected one of the rotation angles is present, the object correlation unit 230 selects the unselected one of the rotation angles, using the processing device 911, and proceeds to the current frame object rotation step S538.

In the current frame object rotation step S538, the object correlation unit 230 rotates the coordinates of the objects obtained by parallel translation in the current time object parallel translation step S536 for all the peripheral object observation data obtained in the current frame stationary object acquisition step S532, with respect to the origin by the rotation angle selected in the rotation angle selection step S537, using the processing device 911.

In the distance computation step S539, for all combinations of all the peripheral object observation data obtained in the immediately preceding frame stationary object acquisition step S531 and all the peripheral object observation data obtained in the current frame stationary object acquisition step S532, using the processing device 911, the object correlation unit 230 computes distances between the respective coordinates about the peripheral object observation data obtained in the immediately preceding frame stationary object acquisition step S531, obtained by parallel translation in the immediately preceding frame object parallel translation step S534 and the respective coordinates about the peripheral object observation data obtained in the current frame stationary object acquisition step S532, obtained by rotation in the current time object rotation step S538. The object correlation unit 230 generates pairs of the peripheral object observation data obtained in the immediately preceding frame stationary object acquisition step S5311 and the peripheral object observation data obtained in the current frame stationary object acquisition step S532 in the ascending order of the computed distances, using the processing device 911.

In the identical object determination step S540, using the processing device 911, the object correlation unit 230 counts the number of the pairs of the peripheral object observation data generated in the distance computation step S539 each having the computed distance shorter than a predetermined threshold value. The object correlation unit 230 compares the counted number of the pairs with the maximum value of the number of pairs having been counted so far in the identical object determination step S540 during the current prosecution of the object correlation step S530, using the processing device 911.
When it is found that the current counted number of the pairs is smaller than the maximum value of the number of pairs counted so far, the object correlation unit 230 returns the procedure to the rotation angle selection step S537 to select a subsequent one of the rotation angles.
When it is found that the current counted number of the pairs is larger than the maximum value of the number of pairs counted so far, the object correlation unit 230 stores data indicating the pairs each having the computed distance shorter than the predetermined threshold value from among the pairs generated in the distance computation step S539 and the counter number of the pairs, using the storage device 914. The object correlation unit 230 proceeds to the threshold determination step S541, using the processing device 911.

In the threshold determination step S541, the object correlation unit 230 compares the number of the pairs counted in the distance computation step S539 with a predetermined threshold value, using the processing device 911.
When it is found that the counted number of the pairs is smaller than the threshold value, the object correlation unit 230 returns the procedure to the rotation angle selection step S537 to select the subsequent one of the rotation angles.
When it is found that the counted number of the pairs is larger than the threshold value, the object correlation unit 230 proceeds to the identical object storage step S542, using the processing device 911. The reason for this operation is as follows. Since the process is tried in the descending order of the possibility that correlation may be taken, it is highly likely that a correct combination and a correct rotation angle may be found in an early stage. Thus, the amount of computation is reduced not by performing trial of the process after it has been found that the counted number of the pairs is larger than the threshold value.
The threshold value used in the comparison may be a predefined constant. Alternatively, the object correlation unit 230 may compute the threshold, based on the number of the peripheral object observation data obtained in the immediately preceding frame stationary object acquisition step S531 and the number of the peripheral object observation data obtained in the current frame stationary object acquisition step S532. To take an example, the object correlation unit 230 compares the number of the peripheral object observation data obtained in the immediately preceding frame stationary object acquisition step S531 with the number of the peripheral object observation data obtained in the current frame stationary object acquisition step S532 to obtain the smaller number of the peripheral object observation data, and multiplies the obtained number by a predetermined constant (such as 0.6), thereby computing the threshold value.

In the identical object storage step S542, the object correlation unit 230 determines the pairs indicated by the data stored in the identical object determination step S540 to be the peripheral object observation data indicating the result of the observation of identical objects by the peripheral object observation device 811, using the processing device 911. The object correlation unit 230 generates the above-mentioned correlation count data as correlation result data indicating the result of the determination, using the processing device 911. The object correlation unit 230 generates data indicating which peripheral object observation data are the peripheral object observation data indicating the result of the observation of an identical object by the peripheral object observation device 811 as the correlation result data, using the processing device 911. The object correlation unit 230 assigns a number to an object observed by the peripheral object observation device 811, for example, using the processing device 911. The object correlation unit 230 associates and stores data indicating the assigned number with the peripheral object observation data, using the storage device 914. The object correlation unit 230 assigns the same number to the peripheral object observation data as that assigned for a peripheral object observation data in the immediately preceding frame, when the peripheral object observation data is determined to indicate the result of the observation of the object observed by the peripheral object observation device 811 identical to that indicated by the peripheral object observation data in the immediately preceding frame. The object correlation unit 230 assigns a different number to the other peripheral object observation data from that assigned to any of the peripheral object observation data.

Fig. 25 is a flowchart diagram showing an example of a flow of the state estimation step S550 in this embodiment. The state estimation step S550 includes a correlated object selection step S551, a correlation count determination step S552, a prediction step S553, an updating step S554, and an averaging step S555.

In the correlated object selection step S551, from among the peripheral object observation data stored by the relative position acquisition unit 211, the state estimation unit 240 selects one of the peripheral object observation data in the most recent frame on an object determined by the object correlation unit 230 in the object correlation step S530 to indicate a result of the observation of the object identical to that in the immediately preceding frame observed by the peripheral object observation device 811, using the processing device 911. To take an example, using the processing device 911, the state estimation unit 240 selects the peripheral object observation data having associated correlation count data stored by the object correlation unit 230, from among the peripheral object observation data stored by the relative position acquisition unit 211.

When all the correlated peripheral object observation data has been already selected, and no peripheral object observation data to be selected is not present, the state estimation unit 240 proceeds to the averaging step S555, using the processing device 911.

When there is unselected peripheral object observation data in the correlated peripheral object observation data, the state estimation unit 240 selects one of the unselected peripheral object observation data and proceeds to the correlation count determination step S552, using the processing device 911.

In the correlation count determination step S552, the state estimation unit 240 compares the number of times of correlation of the peripheral object observation data selected in the correlated object selection step S551 with a predetermined threshold value, using the processing device 911. For example, the state estimation unit 240 obtains the correlation count data stored by the object correlation unit 230 corresponding to the peripheral object observation data selected in the correlated object selection step S551, using the processing device 911. The state estimation unit 240 compares the number of times of correlation indicated by the obtained correlation count data with the threshold value, using the processing device 911.

When the number of times of correlation is smaller than the threshold value, the state estimation unit 240 returns the procedure to the correlated object selection step S551 using the processing device 911 to select a subsequent one of the peripheral object observation data.

When the number of times of correlation is larger than the threshold value, the state estimation unit 240 proceeds to the prediction step S553, using the processing device 911.

In the prediction step S553, using the processing device 911, the state estimation unit 240 puts the absolute position of the object indicated by the peripheral object observation data selected in the correlated object selection step S551 into state quantities, and predicts state quantities at the observation time indicated by the object observation time data included in the peripheral object observation data selected in the correlated object selection step S551, using a state transition function.

In the updating step S554, using the processing device 911, the state estimation unit 240 updates estimation values of state quantities, using the extended Kalman filter, for example, with the relative position of the object relative to the moving object included in the peripheral object observation data selected in the correlated object selection step S551 as an observation amount. The state estimation unit 240 stores data indicating the updated estimation values and error covariance matrix of the state quantities, using the storage device 914.

In the averaging step S555, using the processing device 911, the state estimation unit 240 averages estimation values of state quantities estimated for each of the correlated peripheral object observation data in the updating step S554, thereby computing estimation values of the state quantities as a whole.

Sixth Embodiment.

A sixth embodiment will be described, using Fig. 26.
The same reference numerals are assigned to components that are common to those in the fifth embodiment, thereby omitting description of the components.

Since a hardware configuration and configurations of functional blocks of an angular velocity estimation apparatus 200 in this embodiment are the same as those in the fifth embodiment, description of the hardware configuration and the configurations of functional blocks will be herein omitted.

The state estimation unit 240 does not receive the relative position of an object relative to a moving object, which is correlated in the correlation process of the object correlation unit 230,as an observation value, but receives a parallel translation amount and a rotation angle, which are computed when the object correlation unit 230 performs the correlation process, as observation values, thereby estimating state quantities such as the angular velocity of the moving object.

Fig. 26 is a diagram for explaining a relationship between a parallel translation amount and a rotation angle used for the correlation process by the object correlation unit 230 and the moving amount of the moving object 801.
It is assumed that the object correlation unit 230 takes correlation between relative positions 741a to 741f of stationary objects relative to the moving object 801 observed by the peripheral object observation device 811 in a certain frame and relative positions 742a to 742f of the stationary objects relative to the moving object 801 observed by the peripheral object observation device 811 in another frame. The object correlation unit 230 translates coordinates of the relative positions 741a to 741f in parallel using a vector 755 to cause the coordinates of the relative position 741c to coincide with the origin. The object correlation unit 230 translates coordinates of the relative positions 742a to 742f in parallel using a vector 756 to cause the coordinates of the relative position 742c to coincide with the origin, and then rotates the coordinates of the translated relative position 742a to 742f just by a rotation angle 757. It is assumed that correlation is thereby taken.

In this case, a difference vector 759 obtained by subtracting the vector 755 from a vector 758 indicates the moving amount of the moving object 801 in a moving-object-referenced relative coordinate system between those two frames. The vector 758 is obtained by rotating the vector 756 just by the rotation angle 757.
The rotation angle 757 is the turn angle of the moving object 801 between the two frames.

When the number of the pairs counted at the current time is larger than the maximum value of the number of the pairs counted so far in the identical object determination step S540 described with reference to Fig. 24, for example, the object correlation unit 230 stores the peripheral object observation data selected in the immediately preceding frame object selection step S533, the peripheral object observation data selected in the current frame object selection step S535, and data indicating the rotation angle selected in the rotation angle selection step S537, using the storage device 914.
The state estimation unit 240 computes observation values of the moving amount and the turn angle of the moving object, based on the two peripheral object observation data and the data indicating the rotation angle, which are stored by the object correlation unit 230. To take an example, the state estimation unit 240 obtains the relative position of the object relative to the moving object observed by the peripheral object observation device 811 in the most recent frame from the peripheral object observation data selected by the object correlation unit 230 in the current frame object selection step S535, using the processing device 911. The state estimation unit 240 rotates coordinates indicating the obtained relative position with respect to the origin just by the rotation angle selected by the object correlation unit 230 in the rotation angle selection step S537, using the processing device 911. Using the processing device 911, the state estimation unit 240 obtains the relative position of the object relative to the moving object observed by the peripheral object observation device 811 in the immediately preceding frame from the peripheral object observation data selected by the object correlation unit 230 in the immediately preceding frame object selection step S533. Using the processing device 911, the state estimation unit 240 computes a difference obtained by subtracting coordinates obtained by the rotation from coordinates indicating the obtained relative position, and sets the computed difference as the observation value of the moving amount of the moving object. Using the processing device 911, the state estimation unit 240 sets the rotation angle selected by the object correlation unit 230 in the rotation angle selection step S537 to the observation value of the turn angle of the moving object.

Using the processing device 911, the state estimation unit 240 performs an estimation value updating process with the observation values of the moving amount and the turn angle of the moving object computed as described above used as inputs of an extended Kalman filter, for example. In that case, the state estimation unit 240 performs estimation using a model given by the following equations, for example:

$$\mathbf{x}_2 = \begin{pmatrix} x_s \\ y_s \\ v \\ \theta \\ \omega \end{pmatrix}, \quad f_2(\mathbf{x}_2) = \begin{pmatrix} x_s + v\Delta t \sin\theta \\ y_s + v\Delta t \cos\theta \\ v \\ \theta + \omega\Delta t \\ \omega \end{pmatrix},$$

$$\mathbf{z}_2 = \begin{pmatrix} \Delta x \\ \Delta y \\ \Delta\theta \end{pmatrix}, \quad h_2(\mathbf{x}_2) = \begin{pmatrix} \frac{v}{\omega}(1 - \cos\omega\Delta t) \\ \frac{v}{\omega}\sin\omega\Delta t \\ \omega\Delta t \end{pmatrix}$$

where $x_2$ denotes a vector indicating state quantities, $f_2$ denotes a function indicating a state transition model, and $z_2$ denotes a vector indicating observation amounts. $\Delta x$ denotes a component in a lateral direction of the observation value of the moving amount of the moving object computed by the state estimation unit 240, $\Delta y$ denotes a component in a longitudinal direction of the observation value of the moving amount of the moving object computed by the state estimation unit 240, and $\Delta\theta$ denotes the observation value of the turn angle of the moving object computed by the state estimation unit 240. $h_2$ denotes a function indicating an observation model.

The vector $x_2$ indicating the state quantities does not include coordinates of a stationary object in the absolute coordination system. Accordingly, the state estimation unit 240 does not need to perform estimation for each stationary object, and should perform one estimation as a whole.

The state estimation unit 240 may be configured to perform estimation using a model in which $x_1$, $f_1$, $z_1$, and $h_1$ in Expression 23 are respectively replaced by $x_2$, $f_2$, $z_2$, and $h_2$ in Expression 24.

Seventh Embodiment.

A seventh embodiment will be described using Fig. 27.
The same reference numerals are assigned to components that are common to those in the fifth to sixth embodiments, thereby omitting description of the components.

Fig. 27 is a block configuration diagram showing an example of configurations of functional blocks of an angular velocity estimation apparatus 200 in this embodiment.

The peripheral object observation device 811 does not observe the relative speed of an object relative to a moving object, but observes only the relative position of the object relative to the moving object.
In the fifth embodiment, the stationary object determination unit 220 determines whether or not an object is still, based on the relative speed of the object relative to a moving object observed by the peripheral object observation device 811 and the moving speed of the moving object observed by the moving speed observation device 821. On contrast therewith, the peripheral object observation device 811 in this embodiment does not observe the relative speed of the object relative to the moving object. Thus, using the processing device 911, the stationary object determination unit 220 computes the relative speed of the object relative to the moving object, based on the trajectory of relative positions of the object relative to the moving object obtained as a result of correlation taken by the object correlation unit 230. Using the processing device 911, the stationary object determination unit 220 determines whether or not the object is still based on the computed relative speed of the object relative to the moving object and the moving speed of the moving object observed by the moving speed observation device 821.

Before the stationary object determination unit 220 determines whether or not the object is still, the object correlation unit 230 needs to perform the correlation process. Thus, the object correlation unit 230 cannot use a result of the determination by the stationary object determination unit 220 in at least an initial stage. For this reason, using the processing device 911, the object correlation unit 230 performs the correlation process on all objects observed by the peripheral object observation device 811. After the stationary object determination unit 220 has determined whether or not the objects are still based on a result of the correlation process by the object correlation unit 230, the object correlation unit 230 may discontinue the correlation process on one of the objects determined not to be still by the stationary object determination unit 220.
The object correlation unit 230 performs the correlation process on the objects that are not known whether or not to be still. Thus, the object correlation unit 230 uses the position and the orientation of the moving object estimated by the state estimation unit 240. The object correlation unit 230 converts coordinates of the relative position of each of the objects relative to the moving object observed by the peripheral object observation device 811 to coordinates in an absolute coordinate system using a still point as a reference, based on the position and the orientation of the moving object at an observation time when the peripheral object observation device 811 has observed the objects, using the processing device 911, for example. The object correlation unit 230 performs the correlation process on the object, based on coordinates obtained by conversion, using the processing device 911.

With this arrangement, even if the peripheral object observation device 811 is configured not to observe the relative speed of the object relative to the moving object, the angular velocity of the moving object may be estimated.

Eighth Embodiment.

An eighth embodiment will be described using Fig. 28.
The same reference numerals are assigned to components that are common to those in the first to seventh embodiments, thereby omitting description of the components.

Fig. 28 is a block configuration diagram showing an example of configurations of functional blocks of an angular velocity estimation apparatus 200 in this embodiment.
In addition to the functional blocks described in the sixth embodiment, the angular velocity estimation apparatus 200 further includes an angular velocity error storage unit 251, an angular velocity correction unit 252, an angular velocity test unit 253, and an angular velocity error computation unit 254.

The state estimation unit 240 estimates state quantities based on an observation value other than the angular velocity of a moving object observed by the angular velocity observation device 831.

The angular velocity error storage unit 251 stores data indicating an error of the angular velocity observed by the angular velocity observation device 831, such as a bias error, using the storage device 914. The data stored by the angular velocity error storage unit 251 is referred to as "angular velocity error data". In an initial stage, the error of the angular velocity observed by the angular velocity observation device 831 is unknown. Thus, it may be assumed that there is no error. Then, the angular velocity error estimation storage device 251 may store data indicating "0" as the angular velocity error data, using the storage device 914.

Using the processing device 911, the angular velocity correction unit 252 corrects the error of the angular velocity of the moving object observed by the angular velocity observation device 831. The angular velocity correction unit 252 stores data indicating a computed angular velocity after correction, using the storage device 914. The data stored by the angular velocity correction unit 252 is referred to as "corrected angular velocity data".
To take an example, the angular velocity correction unit 252 receives moving object angular velocity data stored by the angular velocity observation value acquisition unit 213 and the angular velocity error data stored by the angular velocity error storage unit 251, using the processing device 911. The angular velocity correction unit 252 obtains angular velocity observation value data from the received moving object angular velocity data, using the processing device 911. The angular velocity correction unit 252 computes a difference by subtracting an error indicated by the received angular velocity error data from an angular velocity indicated by the obtained angular velocity observation value data using the processing device 911 to compute the corrected angular velocity.

Using the processing device 911, the angular velocity test unit 253 tests whether or not the angular velocity corrected by the angular velocity correction unit 252 is correct. The angular velocity test unit 253 stores data indicating a result of test, using the storage device 914. The data stored by the angular velocity test unit 253 is referred to as "angular velocity certification result data".
The angular velocity test unit 253 tests whether or not the angular velocity corrected by the angular velocity correction unit 252 is correct, based on state quantities estimated by the state estimation unit 240, using the processing device 911, for example.

The angular velocity error computation unit 254 computes the error of the angular velocity of the moving object observed by the angular velocity observation device 831, using the processing device 911. The angular velocity error computation unit 254 stores data indicating the computed error, using the storage device 914. The data stored by the angular velocity error computation unit 254 is referred to as "angular velocity error estimation data".
Using the processing device 911, the angular velocity error computation unit 254 receives data indicating state quantities estimated by the state estimation unit 240 and the moving object angular velocity data stored by the angular velocity observation value acquisition unit 213, for example. The angular velocity error computation unit 254 obtains data indicating the angular velocity of the moving object estimated by the state estimation unit 240 from the received data, using the processing device 911. Using the processing device, the angular velocity error computation unit 254 obtains angular velocity observation value data from the received moving object angular velocity data. The angular velocity error computation unit 254 computes the error of the angular velocity by computing a difference obtained by subtracting the observation value of the angular velocity indicated by the obtained angular velocity observation value data from the estimation value of the angular velocity of the moving object indicated by the obtained data, using the processing device 911.

When the angular velocity test unit 253 determines that the angular velocity corrected by the angular velocity correction unit 252 is not correct, the angular velocity error storage unit 251 updates the stored angular velocity error data, and stores the angular velocity error estimation data stored by the angular velocity error computation unit 254 as new angular velocity error data, using the storage device 914.

Next, a test process by the angular velocity test unit 253 will be described.

The angular velocity test unit 253 predicts the position of an object, using state quantities estimated by the state estimation unit 240, for example. At this time of prediction, only for the angular velocity of the moving object, an angular velocity corrected by the angular velocity correction unit 252 rather than the state quantity estimated by the state estimation unit 240 is used. When the replacement of angular velocity reduces accuracy of prediction, the angular velocity test unit 253 determines that the angular velocity corrected by the angular velocity correction unit 252 is not correct.

It is necessary that a time of the state quantities estimated by the state estimation unit 240 coincide with a time when the angular velocity observation device 831 has observed the angular velocity of the moving object, in order to replace the angular velocity estimated by the state estimation unit 240 by the angular velocity corrected by the angular velocity correction unit 252. When the peripheral object observation device 811 observes an object or when the moving speed observation device 821 observes the moving speed of a moving object, the state estimation unit 240 updates estimation values of the state quantities. Accordingly, a time when the peripheral object observation device 811 has observed the object or a time when the moving speed observation device 821 has observed the moving speed of the moving object is the time if the state quantities estimated by the state estimation unit 240.

Now, a time when the angular velocity observation device 831 has observed the angular velocity of the moving object is indicated by $t_1$. A time when the peripheral object observation device 811 has observed the object or a time when the moving speed observation device 821 has observed the moving speed of the moving object is indicated by $t_2$. Then, it is assumed that the time $t_1$ is later than the time $t_2$.

The angular velocity test unit 253 performs an extrapolation process based on estimation values of state quantities at the time $t_2$, thereby computing estimation values of the state quantities at the time $t_1$, for example.

The angular velocity test unit 253 computes the right side of the following equation, using the processing device 911, thereby computing the estimation values of the state quantities at the time $t_1$:

[Expression 25]

$$\hat{\mathbf{x}}(t_1) = \mathbf{F}(t_1 - t_2)\hat{\mathbf{x}}(t_2)$$

where x with a hat symbol (that is an x hat and will be hereinafter written as "x^") denotes an estimation value vector. The estimation value vector x^ is a k-order column vector. The estimation value vector x^ is a function at a time t. Elements of the estimation value vector x^ are estimation values of state quantities at the time t. The order of k of the estimation value vector x^ is the number of the estimation values.

F denotes a state transition matrix. The state transition matrix F is a k-order square matrix. The state transition matrix F is a function of a time period $\Delta t$. The state transition matrix F represents a mapping of a vector indicating the position of the moving object at a certain time to a vector indicating the position of the moving object after an elapse of the time period $\Delta t$ in a predetermined motion model.

That is, this equation means that a state transition matrix $F(t_1 - t_2)$, which represents an elapse of a time period $(t_1 - t_2)$, is operated on an estimation value vector $x^{\wedge}(t_2)$ at the time $t_2$, thereby computing an estimation value vector $x^{\wedge}(t_1)$ at the time $t_1$.

The motion model of the state transition matrix F is a turn motion model which assumes that the moving object is moving at a certain angular velocity, for example.

Based on the computed estimation values of the state quantities at the time $t_1$, the angular velocity test unit 253 predicts state quantities at a time $t_3$ after an elapse of the predetermined time period $\Delta T$ from the time $t_1$ (that is, $t_3 = t_1 + \Delta T$) according to a motion model which assumes that the moving object is turning at the angular velocity at the time $t_1$ corrected by the angular velocity correction unit 252.

The angular velocity test unit 253 computes the right side of the following equation, thereby computing prediction values of the state quantities at the time $t_3$:

[Expression 26]

$$\hat{\mathbf{x}}_J(t_3) = \mathbf{F}_J(\Delta T)\hat{\mathbf{x}}_J(t_1)$$

where $x^\wedge_J$ denotes an estimation value vector in which an angular velocity estimated by the state estimation unit 240 has been replaced by the angular velocity at the time $t_1$ corrected by the angular velocity correction unit 252. $F_J$ denotes a state transition matrix based on the motion model which assumes that the moving object is turning at the angular velocity at the time $t_1$ corrected by the angular velocity correction unit 252.

That is, this equation means that the state transition matrix $F_J$, which represents the elapse of the time period $\Delta T$ based on the motion model that assumes that the moving object is turning at the angular velocity at the time $t_1$ corrected by the angular velocity correction unit 252, is operated on an estimation value vector $x^\wedge_J(t_1)$ at the time $t_1$, thereby computing an estimation value vector $x^\wedge_J(t_3)$ at the time $t_3$.

The angular velocity test unit 253 estimates error variances or error covariances of the predicted state quantities based on error variances or error covariances computed by the state estimation unit 240.

In order to cause a time of the error variances and the like to coincide with a time of the corrected angular velocity, as in the case of the estimation values of the state quantities, the angular velocity test unit 253 computes error variances and the like at the time $t_1$, based on error variances and the like at the time $t_2$, for example.

Using the processing device 911, the angular velocity test unit 253 computes the right side of the following equation, thereby computing the error variances and the like at the time $t_1$:

[Expression 27]

$$\mathbf{P}(t_1) = \mathbf{F}(t_1 - t_2)^{\mathrm{T}}\mathbf{P}(t_2)\mathbf{F}(t_1 - t_2) + \mathbf{Q}(t_1 - t_2)$$

where P denotes a variance-covariance matrix of an error of the estimation value vector $x^\wedge$. The variance-covariance matrix P is a k-order square matrix. The variance-covariance matrix P is a function of the time t. Elements of the variance-covariance matrix P are variances or covariances between errors of respective elements of the estimation value vector at the time t.

A superscript T indicates transposition of a matrix.

Q denotes a variance-covariance matrix of system noise. The variance-covariance matrix Q is a k-order square matrix. The variance-covariance matrix Q is a function of the time period $\Delta t$. Elements of the variance-covariance matrix Q indicate a variance or a covariance of the system noise produced during the elapse of the time period $\Delta t$.

That is, this equation means that a transposed matrix of the state transition matrix $F(t_1 - t_2)$, which represents the elapse of the time period $(t_1 - t_2)$, is operated on a variance-covariance matrix $P(t_2)$ of an estimation error at the time $t_2$ from the left, the state transition matrix $F(t_1 - t_2)$, which represents the elapse of the time period $(t_1 - t_2)$, is operated on the result of the operation from the right, and then a variance-covariance matrix $Q(t_1 - t_2)$ of system noise produced during the elapse of the time period $(t_1 - t_2)$ is added to the result of the operation, thereby computing a variance-covariance matrix $P(t_1)$ of an estimation error at the time $t_1$.

Based on the computed error variances and the like at the time $t_1$, the angular velocity test unit 253 computes error variances and the like at the time $t_3$, according to the motion model which assumes that the moving object is turning at the angular velocity at the time $t_1$ corrected by the angular velocity correction unit 252.

Using the processing device 911, the angular velocity test unit 253 computes the error variances and the like at the time $t_3$ by computing the right side of the following equation, for example:

[Expression 28]

$$\mathbf{P}_J(t_3) = \mathbf{F}_J(\Delta T)^{\mathrm{T}}\mathbf{P}(t_1)\mathbf{F}_J(\Delta T) + \mathbf{Q}(\Delta T)$$

where $P_J$ denotes a variance-cowariance matrix of a prediction error based on the motion model which assumes that the moving object is turning at the angular velocity at the time $t_1$ corrected by the angular velocity correction unit 252.
This equation means that a transposed matrix of a state transition matrix $F_J(\Delta T)$, which represents the elapse of the time period $\Delta T$ based on the motion model which assumes that the moving object is turning at the angular velocity at the time $t_1$ corrected by the angular velocity correction unit 252, is operated on the variance-covariance matrix $P(t_1)$ of the estimation error at the time $t_1$ from the left, a state transition matrix $F_J(\Delta T)$, which represents the elapse of the time period $\Delta T$ based on the motion model which assumes that the moving object is turning at the angular velocity at the time $t_1$ corrected by the angular velocity correction unit 252, is operated from the right, and then a variance-covariance matrix $Q(\Delta T)$ of system noise produced during the elapse of the time period $\Delta T$ is added to the result of the operation, thereby computing a variance-covariance matrix $P(t_3)$ of an estimation error at the time $t_3$.

The angular velocity test unit 253 predicts state quantities, the error variances, and the like at the time $t_3$ in a manner as described above, for example.
The angular velocity test unit 253 may be configured to predict the state quantities, the error variances, and the like based on an angular velocity before correction observed by the angular velocity observation device 831 and indicated by the moving object angular velocity data stored by the angular velocity observation value acquisition unit 213, rather than the angular velocity corrected by the angular velocity correction unit 252.

The angular velocity test unit 253 predicts the state quantities, the error variances, and the like using the angular velocity of the moving object estimated by the state estimation unit 240 without replacement or alteration of the angular velocity.

The angular velocity test unit 253 computes the right side of the following equations using the processing device 911, thereby computing the state quantities, the error variances, and the like at the time $t_3$:

[Expression 29]

$$\hat{\mathbf{x}}_{\mathrm{T}}(t_3) = \mathbf{F}_{\mathrm{T}}(t_3 - t_2)\hat{\mathbf{x}}_{\mathrm{T}}(t_2)$$

$$\mathbf{P}_{\mathrm{T}}(t_3) = \mathbf{F}_{\mathrm{T}}(t_3 - t_2)^{\mathrm{T}}\mathbf{P}(t_2)\mathbf{F}_{\mathrm{T}}(t_3 - t_2) + \mathbf{Q}(t_3 - t_2)$$

where X^Tdenotes an estimation value vector at the time $t_2$ using the angular velocity of the moving object estimated by the state estimation unit 240 without alteration. $F_T$ denotes a state transition matrix based on a motion model which assumes that the moving object is turning at the angular velocity at the time $t_2$ estimated by the state estimation unit 240. $P_T$ denotes a variance-covariance matrix of a prediction error based on the motion model which assumes that the moving object is turning at the angular velocity at the time $t_2$ estimated by the state estimation unit 240.

The angular velocity test unit 253 predicts state quantities, the error variances, and the like, in the manner as described above, for example.

The angular velocity test unit 253 determines whether or not the angular velocity corrected by the angular velocity correction unit 252 is correct, based on predicted two types of the state quantities, the error variances, and the like.

The angular velocity test unit 253 determines whether a difference between the predicted two types of the state quantity is within an expected range. When the difference exceeds the expected range, the angular velocity correction unit 252 determines that the angular velocity corrected by the angular velocity correction unit 252 is not correct.
A statistical approach may be used for this determination. The angular velocity test unit 253 determines whether or not the difference between the two types of the state quantities is within the expected range, using a chi-square test, for example. The angular velocity test unit 253 computes the right side of the following equation, thereby computing a test value:

[Expression 30]

$$\varepsilon = \left[\mathbf{x}_{\mathrm{J}}(t_3) - \mathbf{x}_{\mathrm{T}}(t_3)\right]^{\mathrm{T}} \left[\mathbf{P}_{\mathrm{J}}(t_3) + \mathbf{P}_{\mathrm{T}}(t_3)\right]^{-1} \left[\mathbf{x}_{\mathrm{J}}(t_3) - \mathbf{x}_{\mathrm{T}}(t_3)\right]$$

where $\varepsilon$ denotes the test value.
The angular velocity test unit 253 compares the computed test value $\varepsilon$ with a predetermined threshold value $\varepsilon_{th}$, using

the processing device 911. The threshold value $\varepsilon_{th}$ is obtained from a chi-square distribution table, based on a predetermined significance level, for example. When the test value $\varepsilon$ is equal to or less than the threshold value $\varepsilon_{th}$, the angular velocity test unit 253 determines the difference between the two types of the state quantities is within the expected range. When the test value $\varepsilon$ is larger than the threshold value $\varepsilon_{th}$, the angular velocity test unit 253 determines that the difference between the two types of the state quantities exceeds the expected range.
The angular velocity test unit 253 may be configured not to compare the two types of the state quantities, but to predict an observation value based on the state quantities predicted based on the angular velocity corrected by the angular velocity correction unit 252, and compare the predicted observation value with an actual observation value, thereby determining whether or not the angular velocity corrected by the angular velocity correction unit 252 is correct.

The configuration in each of the embodiments described above is an example, and may be combined with the configuration described in the different embodiment. The configuration may be so varied that a component that is not essential is replaced by another configuration of an existent art or the like.

The angular velocity estimation apparatus (200; yaw rate bias correction apparatus 800) described above includes a relative position acquisition unit (211, stationary object identification unit 110), a stationary object determination unit (220; stationary object identification unit 110), an object correlation unit (230; stationary object tracking unit 120), and an angular velocity estimation unit (state estimation unit 240; trajectory estimation unit 143; trajectory integration unit 150).
The relative position acquisition unit (211; 110) obtains a result of an observation by a peripheral objet observation device (811; radar 810), which repeatedly observes a relative position of an object relative to a moving object (801), located in the vicinity of the moving object (801) .
The stationary object determination unit (220; 110) determines whether or not the object the relative position of which have been observed by the peripheral object observation device (811; 810) is still, based on the result of the observation obtained by the relative position acquisition unit (211, 110).
The object correlation unit (230; 120) determines a plurality of the relative positions of an identical object observed by the peripheral object observation device (811; 810) from among the relative positions observed by the peripheral object observation device (811; 810), based on the result of the observation obtained by the relative position acquisition unit (211).
The angular velocity estimation unit (240; 143; 150) estimates an angular velocity of the moving object (801) based on the result of the observation obtained by the relative position acquisition unit (211), a result of the determination by the stationary object determination unit (220; 110), and a result of the determination by the object correlation unit (230; 120).

With this arrangement, even if there is no observation device that observes the position of the moving object, such as the GPS, the angular velocity of the moving object may be estimated. Further, by using the estimated angular velocity, an error of an apparatus that observes the angular velocity of the moving object, such as the gyro sensor, may be estimated.

The angular velocity estimation apparatus (200; 800) includes a relative position computation unit (stationary-object-referenced coordinate conversion unit 142).
The relative position computation unit (142) computes a relative position of the moving object (801) relative to a stationary object, based on the result of the observation obtained by the relative position acquisition unit (stationary object identification unit 110), the result of the determination by the stationary object determination unit (110), and the result of the determination by the object correlation unit (stationary object tracking unit 120).
The angular velocity estimation unit (143; 150) estimates the angular velocity of the moving object (801), based on the relative position computed by the relative position computation unit (142).

The angular velocity of the moving object is estimated by estimating movement of the moving object based on a relative position relationship with the object determined to be still. Accordingly, even if there is no observation device such as the GPS, the angular velocity of the moving object may be estimated.

The angular velocity estimation apparatus (200; 800) includes an angular velocity observation value acquisition unit (213) and an angular velocity observation error computation unit (state estimation unit 240; bias correction unit 840).
The angular velocity observation value acquisition unit (213) obtains a result of an observation by an angular velocity observation device (angular velocity observation device 831; 830) that observes the angular velocity of the moving object (801).
The angular velocity observation error computation unit (240; 840) computes an error of the angular velocity observed by the angular velocity observation device (831; 830), based on a result of estimation by the angular velocity estimation unit (240; 143; 150) and the result of the observation obtained by the angular velocity observation value acquisition unit (213).

By computing the observation error of the angular velocity observation device, the angular velocity of the moving object observed by the angular velocity observation device may be corrected, even if there is no input from the peripheral object observation device.

The angular velocity estimation apparatus (200; 800) includes a speed observation value acquisition unit (212;

stationary object identification unit 110).
The speed observation value acquisition unit (212; 110) obtains a result of an observation by a moving speed observation device (821; vehicle speed sensor 820) that observes a moving speed of the moving object (801).
The stationary object determination unit (220; 110) determines whether or not the object is still, based on the result of the observation obtained by the relative position acquisition unit (211, 110) and the result of the observation obtained by the speed observation value acquisition unit (212; 110).

By determining whether or not the object is still, movement of the moving object relative to the stationary object may be grasped.

The peripheral object observation device (811; 810) observes a relative speed of the object relative to the moving object (801).
The stationary object determination unit (220; 110) determines whether or not the object is still, based on the moving speed of the moving object (801) observed by the moving speed observation device (821; 820) and the relative speed of the object observed by the peripheral object observation device (811; 810).

It is determined whether the object is still, based on the moving speed of the moving object and the relative speed of the object relative to the moving object. Accordingly, it may be determined whether or not the object is still, without using the turn angle of the moving object or the trajectory of the object.

The angular velocity estimation apparatus (200; 800) includes a relative speed estimation unit (stationary object determination unit 220).
The relative speed estimation unit (220) estimates a relative speed of the object relative to the moving object based on a result of the determination by the object correlation unit (230), the relative positions of the object being observed by the peripheral object observation device (811) a plurality of times.
The stationary object determination unit (220) determines whether or not the object is still, based on the moving speed of the moving object (801) observed by the moving speed observation device (821) and the relative speed of the object estimated by the relative speed estimation unit (220).

The relative speed of the object relative to the moving object is computed based on the result of the determination by the object correlation unit. Accordingly, it may be determined whether or not the object is still even if there is no observation device that observes the relative speed of the object relative to the moving object.

The angular velocity estimation apparatus (200; 800) may be implemented by execution of a computer program by a computer. The computer program causes the computer to function as the angular velocity estimation apparatus.

## Claims

**1.** An angular velocity estimation apparatus (800; 200) comprising:

a relative position acquisition unit (110; 211), for obtaining a result of an observation by a peripheral object observation device mounted on a moving object that repeatedly observes at least one object located in the vicinity of said moving object to measure relative positions of the at least one object relative to the moving object;
a stationary object determination unit (110; 220), for determining a stationary object from among the at least one object observed by the peripheral object observation device, based on a plurality of results of observations obtained by the relative position acquisition unit;
an object correlation unit (120; 230), for determining, as time-series data, a set of results of observations including relative positions of the stationary object, from among the plurality of results of observations obtained by the relative position acquisition unit, for each stationary object determined by the stationary object determination unit; and
an angular velocity estimation unit (143; 150; 240), for estimating an angular velocity of the moving object,
**characterized in that**
the angular velocity estimation unit is counting, as a number of times of correlations, a number of results of observations included in said time-series data of each stationary object that are correlated in the temporal direction, and estimating the angular velocity of the moving object based on the time-series data in which the number of times of correlations is equal to or more than a threshold value for the number of times of correlations, from among the time-series data of the each stationary object.

**2.** An angular velocity estimation apparatus (800; 200) comprising:

a relative position acquisition unit (110; 211), for obtaining a result of an observation by a peripheral object observation device mounted on a moving object that repeatedly observes at least one object located in the vicinity of said moving object to measure a relative positions of the at least one object relative to the moving object;

an object correlation unit (120; 230), for determining, as time-series data, a set of results of observations including the relative positions of the object observed by the peripheral object observation device, from among a plurality of results of observations obtained by the relative position acquisition unit, for each object of the at least one object observed by the peripheral object observation device; and
a stationary object determination unit (110; 220), for determining a stationary object from among the at least one object, based on the time-series data of each object of the at least one object; and
an angular velocity estimation unit (143; 150; 240), for estimating an angular velocity of the moving object,
**characterized in that**
the angular velocity estimation unit is counting, as a number of times of correlations, a number of results of observations included in said time-series data of each stationary object that are correlated in the temporal direction, and estimating the angular velocity of the moving object based on the time-series data in which the number of times of correlations is equal to or more than a threshold value for the number of times of correlations, from among the time-series data of the each stationary object.

**3.** The angular velocity estimation apparatus (800; 200) according to claim 1 or claim 2, further comprising:

a relative position computation unit (142), for computing a relative position of the moving object relative to a stationary object, based on a plurality of the results of the observations obtained by the relative position acquisition unit, the result of the determination by the stationary object determination unit, and the result of the determination by the object correlation unit; and wherein
the angular velocity estimation unit (150; 143) estimates the angular velocity of the moving object, based on the relative position computed by the relative position computation unit.

**4.** The angular velocity estimation apparatus (800; 200) according to claim 3, wherein
the angular velocity estimation unit estimates the angular velocity of the moving object based on each of a plurality of sets of the relative positions of the stationary object correlated by the object correlation unit, and determines a final estimate of the angular velocity of the moving object by integrating a plurality of estimated angular velocities.

**5.** The angular velocity estimation apparatus (800; 200) according to any one of claims 1 to 4, further comprising:

an angular velocity observation value acquisition unit (213) obtains a result of an observation by an angular velocity observation device that observes the angular velocity of the moving object; and
an angular velocity observation error computation unit (840; 240), for computing an error of the angular velocity observed by the angular velocity observation device, based on a result of estimation by the angular velocity estimation unit and the result of the observation obtained by the angular velocity observation value acquisition unit.

**6.** The angular velocity estimation apparatus (800; 200) according to claim 5, further comprising:

an angular velocity error storage unit (251; 840), for storing an error computed by the angular velocity observation error computation unit; and
an angular velocity correction unit (252; 840), for correcting the angular velocity observed by the angular velocity observation device by using the error stored by the angular velocity error storage unit.

**7.** The angular velocity estimation apparatus (800; 200) according to claim 6, further comprising:

an angular velocity test unit (253; 840), for testing the angular velocity observed by the angular velocity observation device to determine whether or not the angular velocity observed by the angular velocity observation device is correct, based on the angular velocity estimated by the angular velocity estimation unit; and wherein
the angular velocity error storage unit stores the error computed by the angular velocity observation error computation unit when the angular velocity test unit determines that the angular velocity observed by the angular velocity observation device is not correct.

**8.** The angular velocity estimation apparatus (800; 200) according to claim 6, further comprising:

an angular velocity test unit (253; 840), for testing the angular velocity corrected by the angular velocity correction unit to determine whether or not the angular velocity corrected by the angular velocity correction unit is correct, based on the angular velocity estimated by the angular velocity estimation unit; and wherein

the angular velocity error storage unit updates a stored error with the error computed by the angular velocity observation error computation unit when the angular velocity test unit determines that the angular velocity corrected by the angular velocity correction unit is not correct.

**9.** The angular velocity estimation apparatus (800; 200) according to claim 7 or claim 8, wherein
the angular velocity test unit tests the angular velocity by using a chi-square test.

**10.** The angular velocity estimation apparatus (800; 200) according to any one of claims 1 to 9, further comprising:

a speed observation value acquisition unit (110; 212), for obtaining a result of an observation by a moving speed observation device that observes a moving speed of the moving object; and wherein
the stationary object determination unit (110; 220) determines whether or not the object is still, based on the result of the observation obtained by the relative position acquisition unit and the result of the observation obtained by the speed observation value acquisition unit.

**11.** The angular velocity estimation apparatus (800; 200) according to claim 10, wherein
the peripheral object observation device further measures a relative speed of the object relative to the moving object; and
the stationary object determination unit (110; 220) determines whether or not the object is still, based on the moving speed of the moving object observed by the moving speed observation device and the relative speed of the object measured by the peripheral object observation device.

**12.** The angular velocity estimation apparatus (800; 200) according to claim 10 or claim 11, further comprising:

a relative speed estimation unit (220), for estimating a relative speed of the object relative to the moving object, the object being observed by the peripheral object observation device a plurality of times; and wherein
the stationary object determination unit (220) determines whether or not the object is still, based on the moving speed of the moving object observed by the moving speed observation device and the relative speed of the object estimated by the relative speed estimation unit.

**13.** A computer program, for causing a computer that executes the computer program to be functioned as the angular velocity estimation apparatus according to any one of claims 1 to 12.

**14.** An angular velocity estimation method of estimating an angular velocity of a moving object, the method comprising:

obtaining a result of an observation by a peripheral object observation device mounted on a moving object that repeatedly observes at least one object located in the vicinity of said moving object to measure relative positions of the at least one object relative to the moving object;
determining, as time-series data, a set of results of observations including relative positions of the stationary object, from among the plurality of results of observations obtained by the relative position acquisition unit, for each stationary object determined by said stationary object determination unit; and
estimating an angular velocity of the moving object by counting, as a number of times of correlations, a number of results of observations included in said time-series data of each stationary object that are correlated in the temporal direction, and estimating the angular velocity of the moving object based on the time-series data in which the number of times of correlations is equal to or more than a threshold value for the number of times of correlations, from among the time-series data of the each stationary object.

**15.** An angular velocity estimation method of estimating an angular velocity of a moving object, the method comprising:

obtaining a result of an observation by a peripheral object observation device mounted on a moving object that repeatedly observes at least one object located in the vicinity of said moving object to measure relative positions of the at least one object relative to the moving object;
determining, as time-series data, a set of results of observations including the relative positions of the object observed, from among a plurality of results of observations obtained by a relative position acquisition unit, for each object of the at least one object observed by the peripheral object observation device;
determining, by a stationary object determination unit (110; 220), a stationary object from among the at least one object, based on the time-series data of each object of the at least one object; and
estimating an angular velocity of the moving object by counting, as a number of times of correlations, a number of results of observations included in said time-series data of each stationary object that are correlated in the temporal direction, and estimating the angular velocity of the moving object based on the time-series data in which the number of times of correlations is equal to or more than a threshold value for the number of times of correlations, from among the time-series data of the each stationary object.

**Patentansprüche**

1. Winkelgeschwindigkeits-Schätzvorrichtung (800; 200), welche aufweist:

eine Erwerbseinheit (110; 211) für eine relative Position, zum Erhalten eines Ergebnisses einer Beobachtung durch eine Beobachtungsvorrichtung für ein peripheres Objekt, die an einem sich bewegenden Objekt angebracht ist und wiederholt zumindest ein Objekt beobachtet, das sich in der Nähe des sich bewegenden Objekts befindet, um relative Positionen des zumindest einen Objekts relativ zu dem sich bewegenden Objekt zu messen;
eine Bestimmungseinheit (110; 220) für ein stationäres Objekt, um ein stationäres Objekt unter dem zumindest einen Objekt, das von der Beobachtungsvorrichtung für periphere Objekte beobachtet wird, auf der Grundlage mehrerer Ergebnisse von Beobachtungen, die durch die Erwerbseinheit für relative Positionen erhalten wurden, zu bestimmen;
eine Objektkorrelationseinheit (120; 230) zum Bestimmen, als Zeitreihendaten, eines Satzes von Ergebnissen von Beobachtungen enthaltend relative Positionen des stationären Objekts aus den mehreren Ergebnissen von Beobachtungen, die durch die Erwerbseinheit für relative Positionen erhalten wurden, für jedes stationäre Objekt, das durch die Bestimmungseinheit für stationäre Objekte bestimmt wurde; und
eine Winkelgeschwindigkeits-Schätzeinheit (143; 150; 240) zum Schätzen einer Winkelgeschwindigkeit des sich bewegenden Objekts,
**dadurch gekennzeichnet, dass**
die Winkelgeschwindigkeits-Schätzeinheit als eine Anzahl von Malen von Korrelationen eine Anzahl von Ergebnissen von Beobachtungen zählt, die in den Zeitreihendaten jedes stationären Objekts, die in der zeitlichen Richtung korreliert sind, enthalten sind, und die Winkelgeschwindigkeit des sich bewegenden Objekts auf der Grundlage der Zeitreihendaten, in denen die Anzahl von Malen von Korrelationen gleich einem oder größer als ein Schwellenwert für die Anzahl von Malen von Korrelationen ist, aus den Zeitreihendaten jedes stationären Objekts schätzt.

2. Winkelgeschwindigkeits-Schätzvorrichtung (800; 200), welche aufweist:

eine Erwerbseinheit (110; 211) für relative Positionen, um ein Ergebnis einer Beobachtung durch eine Beobachtungsvorrichtung für periphere Objekte zu erhalten, die an einem sich bewegenden Objekt angebracht ist und die wiederholt zumindest ein Objekt, das sich in der Nähe des sich bewegenden Objekts befindet, beobachtet, um relative Positionen des zumindest einen Objekts relativ zu dem sich bewegenden Objekt zu messen;
eine Objektkorrelationseinheit (120; 230) zum Bestimmen, als Zeitreihendaten, eines Satzes von Ergebnissen von Beobachtungen enthaltend die relativen Positionen des von der Beobachtungsvorrichtung für periphere Objekte beobachteten Objekts, aus mehreren von durch die Erwerbseinheit für relative Positionen erhaltenen Ergebnissen von Beobachtungen, für jedes Objekt von dem zumindest einen, durch die Beobachtungsvorrichtung für periphere Objekte beobachteten Objekt; und
eine Bestimmungseinheit (110; 220) für stationäre Objekte zum Bestimmen eines stationären Objekts unter dem zumindest einen Objekt auf der Grundlage der Zeitreihendaten jedes Objekts von dem zumindest einen Objekt; und
eine Winkelgeschwindigkeits-Schätzeinheit (143; 150; 240) zum Schätzen einer Winkelgeschwindigkeit des sich bewegenden Objekts,
**dadurch gekennzeichnet, dass**
die Winkelgeschwindigkeits-Schätzeinheit als eine Anzahl von Malen von Korrelationen eine Anzahl von Ergebnissen von Beobachtungen zählt, die in den Zeitreihendaten jedes stationären Objekts, die in der zeitlichen Richtung korreliert sind, enthalten sind, und die Winkelgeschwindigkeit des sich bewegenden Objekts auf der Grundlage der Zeitreihendaten, in denen die Anzahl von Malen von Korrelationen gleich einem oder größer als ein Schwellenwert für die Anzahl von Malen von Korrelationen ist, anhand der Zeitreihendaten jedes stationären Objekts schätzt.

3. Winkelgeschwindigkeits-Schätzvorrichtung (800; 200) nach Anspruch 1 oder Anspruch 2, weiterhin aufweisend:

eine Berechnungseinheit (142) für relative Positionen zum Berechnen einer relativen Position des sich bewegenden Objekts relativ zu einem stationären Objekt auf der Grundlage mehrerer der durch die Erwerbseinheit für relative Positionen erhaltenen Ergebnisse der Beobachtungen, des Ergebnisses der Bestimmung durch die Bestimmungseinheit für stationäre Objekte und des Ergebnisses der Bestimmung durch die Objektkorrelationseinheit; und wobei
die Winkelgeschwindigkeits-Schätzeinheit (150; 143) die Winkelgeschwindigkeit des sich bewegenden Objekts auf der Grundlage der von der Berechnungseinheit für relative Positionen berechneten relativen Position schätzt.

**4.** Winkelgeschwindigkeits-Schätzvorrichtung (800; 200) nach Anspruch 3, bei der die Winkelgeschwindigkeits-Schätzeinheit die Winkelgeschwindigkeit des sich bewegenden Objekts auf der Grundlage jedes von mehreren Sätzen der relativen Positionen des stationären Objekts, die durch die Objektkorrelationseinheit korreliert sind, schätzt und eine endgültige Schätzung der Winkelgeschwindigkeit des sich bewegenden Objekts durch Integrieren mehrerer geschätzter Winkelgeschwindigkeiten bestimmt.

**5.** Winkelgeschwindigkeits-Schätzvorrichtung (800; 200) nach einem der Ansprüche 1 bis 4, weiterhin aufweisend:

eine Winkelgeschwindigkeits-Beobachtungswert-Erwerbseinheit (213) erhält ein Ergebnis einer Beobachtung durch eine Winkelgeschwindigkeits-Beobachtungsvorrichtung, die die Winkelgeschwindigkeit des sich bewegenden Objekts beobachtet; und
eine Winkelgeschwindigkeits-Beobachtungsfehler-Berechnungseinheit (840; 240) zum Berechnen eines Fehlers der von der Winkelgeschwindigkeits-Beobachtungsvorrichtung beobachteten Winkelgeschwindigkeit auf der Grundlage eines Ergebnisses der Schätzung durch die Winkelgeschwindigkeits-Schätzeinheit und des Ergebnisses der von der Winkelgeschwindigkeits-Beobachtungswert-Erwerbseinheit erhaltenen Beobachtung.

**6.** Winkelgeschwindigkeits-Schätzvorrichtung (800; 200) nach Anspruch 5, weiterhin aufweisend:

eine Winkelgeschwindigkeitsfehler-Speichereinheit (251; 840) zum Speichern eines von der Winkelgeschwindigkeits-Beobachtungsfehler-Berechnungseinheit berechneten Fehlers; und
eine Winkelgeschwindigkeits-Korrektureinheit (252; 840) zum Korrigieren der von der Winkelgeschwindigkeits-Beobachtungsvorrichtung beobachteten Winkelgeschwindigkeit durch Verwendung des von der Winkelgeschwindigkeitsfehler-Speichereinheit gespeicherten Fehlers.

**7.** Winkelgeschwindigkeits-Schätzvorrichtung (800; 200) nach Anspruch 6, weiterhin aufweisend:

eine Winkelgeschwindigkeits-Prüfeinheit (253; 840) zum Prüfen der von der Winkelgeschwindigkeits-Beobachtungsvorrichtung beobachteten Winkelgeschwindigkeit, um zu bestimmen, ob die von der Winkelgeschwindigkeits-Beobachtungsvorrichtung beobachtete Winkelgeschwindigkeit korrekt ist oder nicht, auf der Grundlage der von der Winkelgeschwindigkeits-Schätzeinheit geschätzten Winkelgeschwindigkeit; und wobei
die Winkelgeschwindigkeitsfehler-Speichereinheit den von der Winkelgeschwindigkeits-Beobachtungsfehler-Berechnungseinheit berechneten Fehler speichert, wenn die Winkelgeschwindigkeits-Prüfeinheit bestimmt, dass die von der Winkelgeschwindigkeits-Beobachtungsvorrichtung beobachtete Winkelgeschwindigkeit nicht korrekt ist.

**8.** Winkelgeschwindigkeits-Schätzvorrichtung (800; 200) nach Anspruch 6, weiterhin aufweisend:

eine Winkelgeschwindigkeits-Prüfeinheit (253; 840) zum Prüfen der von der Winkelgeschwindigkeits-Korrektureinheit korrigierten Winkelgeschwindigkeit, um zu bestimmen, ob die von der Winkelgeschwindigkeits-Korrektureinheit korrigierte Winkelgeschwindigkeit korrekt ist oder nicht, auf der Grundlage der von der Winkelgeschwindigkeits-Schätzeinheit geschätzten Winkelgeschwindigkeit; und wobei
die Winkelgeschwindigkeitsfehler-Speichereinheit einen gespeicherten Fehler mit dem von der Winkelgeschwindigkeits-Beobachtungsfehler-Berechnungseinheit berechneten Fehler aktualisiert, wenn die Winkelgeschwindigkeits-Prüfeinheit bestimmt, dass die von der Winkelgeschwindigkeits-Korrektureinheit korrigierte Winkelgeschwindigkeit nicht korrekt ist.

**9.** Winkelgeschwindigkeits-Schätzvorrichtung (800; 200) nach Anspruch 7 oder Anspruch 8, bei der
die Winkelgeschwindigkeits-Prüfeinheit die Winkelgeschwindigkeit durch Verwendung einer Chi-Quadrat-Prüfung prüft.

**10.** Winkelgeschwindigkeits-Schätzvorrichtung (800; 200) nach einem der Ansprüche 1 bis 9, weiterhin aufweisend:

eine Geschwindigkeits-Beobachtungswert-Erwerbseinheit (110; 212) zum Erhalten eines Ergebnisses einer Beobachtung durch eine Bewegungsgeschwindigkeits-Beobachtungsvorrichtung, die eine Bewegungsgeschwindigkeit des sich bewegenden Objekts beobachtet; und wobei
die Bestimmungseinheit (110; 220) für stationäre Objekte bestimmt, ob das Objekt stillsteht oder nicht, auf der Grundlage des Ergebnisses der von der Erwerbseinheit für relative Positionen erhaltenen Beobachtung und des Ergebnisses der durch die Geschwindigkeits-Beobachtungswert-Erwerbseinheit erhaltenen Beobachtung.

**11.** Winkelgeschwindigkeits-Schätzvorrichtung (800; 200) nach Anspruch 10, bei der
die Beobachtungsvorrichtung für periphere Objekte weiterhin eine relative Geschwindigkeit des Objekts relativ zu dem sich bewegenden Objekt misst; und
die Bestimmungseinheit (110; 220) für stationäre Objekte bestimmt, ob das Objekt stillsteht oder nicht, auf der Grundlage der Bewegungsgeschwindigkeit des von der Bewegungsgeschwindigkeits-Beobachtungsvorrichtung beobachteten, sich bewegenden Objekts und der von der Beobachtungsvorrichtung für periphere Objekte gemessenen relativen Geschwindigkeit des Objekts.

**12.** Winkelgeschwindigkeits-Schätzvorrichtung (800; 200) nach Anspruch 10 oder Anspruch 11, weiterhin aufweisend:

eine Schätzeinheit (220) für relative Geschwindigkeiten zum Schätzen einer relativen Geschwindigkeit des Objekts relativ zu dem sich bewegenden Objekt, wobei das Objekt mehrere Male von der Beobachtungsvorrichtung für periphere Objekte beobachtet wird; und wobei
die Bestimmungseinheit (220) für stationäre Objekte bestimmt, ob das Objekt stillsteht oder nicht, auf der Grundlage der von der Bewegungsgeschwindigkeit-Beobachtungsvorrichtung beobachteten Bewegungsgeschwindigkeit des sich bewegenden Objekts und der von der Schätzeinheit für relative Geschwindigkeiten geschätzten relativen Geschwindigkeit des Objekts.

**13.** Computerprogramm zum Bewirken, dass ein Computer, der das Computerprogramm ausführt, als die Winkelgeschwindigkeits-Schätzvorrichtung nach einem der Ansprüche 1 bis 12 funktioniert.

**14.** Winkelgeschwindigkeits-Schätzverfahren zum Schätzen einer Winkelgeschwindigkeit eines sich bewegenden Objekts, welches Verfahren aufweist:

Erhalten eines Ergebnisses einer Beobachtung durch eine Beobachtungsvorrichtung für periphere Objekte, die an einem sich bewegenden Objekt angebracht ist und die wiederholt zumindest ein Objekt, das sich in der Nähe des sich bewegenden Objekts befindet, beobachtet, um relative Positionen des zumindest einen Objekts relativ zu dem sich bewegenden Objekt zu messen;
Bestimmen, durch eine Bestimmungseinheit (110; 220) für stationäre Objekte, eines stationären Objekts unter dem zumindest einen von der Beobachtungsvorrichtung für periphere Objekte beobachteten Objekt, auf der Grundlage der mehreren von einer Erwerbseinheit (110; 211) für relative Positionen erhaltenen Beobachtungsergebnisse;
Bestimmen, als Zeitreihendaten, eines Satzes von Beobachtungsergebnissen enthaltend relative Positionen des stationären Objekts aus den mehreren Beobachtungsergebnissen, die von der Erwerbseinheit für relative Positionen erhalten wurden, für jedes stationäre Objekt, das von der Bestimmungseinheit für stationäre Objekte bestimmt wurde; und
Schätzen einer Winkelgeschwindigkeit des sich bewegenden Objekts durch Zählen, als eine Anzahl von Malen von Korrelationen, einer Anzahl von Beobachtungsergebnissen, die in den Zeitreihendaten jedes stationären Objekts, die in der zeitlichen Richtung korreliert sind, enthalten sind, und Schätzen der Winkelgeschwindigkeit des sich bewegenden Objekts auf der Grundlage der Zeitreihendaten, in denen die Anzahl von Malen von Korrelationen gleich einem oder größer als ein Schwellenwert für die Anzahl von Malen von Korrelationen ist, aus den Zeitreihendaten jedes stationären Objekts.

**15.** Winkelgeschwindigkeits-Schätzverfahren zum Schätzen einer Winkelgeschwindigkeit eines sich bewegenden Objekts, welches Verfahren aufweist:

Erhalten eines Ergebnisses einer Beobachtung durch eine Beobachtungsvorrichtung für periphere Objekte, die an einem sich bewegenden Objekt angebracht ist und wiederholt zumindest ein Objekt, das sich in der Nähe des sich bewegenden Objekts befindet, beobachtet, um relative Positionen des zumindest einen Objekts relativ zu dem sich bewegenden Objekt zu messen;
Bestimmen, als Zeitreihendaten, eines Satzes von Beobachtungsergebnissen enthaltend die relativen Positionen des beobachteten Objekts aus mehreren Beobachtungsergebnissen, die durch eine Erwerbseinheit für relative Positionen erhalten wurden, für jedes Objekt von dem zumindest einen von der Beobachtungsvorrichtung für periphere Objekte beobachteten Objekt;
Bestimmen, durch eine Bestimmungseinheit (110; 220) für stationäre Objekte, eines stationären Objekts aus dem zumindest einen Objekt auf der Grundlage der Zeitreihendaten jedes Objekts von dem zumindest einen Objekt; und
Schätzen einer Winkelgeschwindigkeit des sich bewegenden Objekts durch Zählen, als eine Anzahl von Malen von Korrelationen, einer Anzahl von Beobachtungsergebnissen, die in den Zeitreihendaten jedes stationären Objekts, die in der zeitlichen Richtung korreliert sind, enthalten sind, und Schätzen der Winkelgeschwindigkeit des sich bewegenden Objekts auf der Grundlage der Zeitreihendaten, in denen die Anzahl von Malen von Korrelationen gleich einem oder größer als ein Schwellenwert für die Anzahl von Malen von Korrelationen ist, aus den Zeitreihendaten jedes stationären Objekts.

## Revendications

**1.** Appareil d'estimation de vitesse angulaire (800 ; 200) comprenant :

une unité d'acquisition de position relative (110 ; 211), pour obtenir un résultat d'une observation par un dispositif d'observation d'objet périphérique monté sur un objet mobile qui observe de manière répétée au moins un objet situé dans le voisinage dudit objet mobile pour mesurer des positions relatives dudit au moins un objet par rapport à l'objet mobile ;
une unité de détermination d'objet fixe (110 ; 220), pour déterminer un objet fixe parmi lesdits au moins un objet observés par le dispositif d'observation d'objet périphérique, sur la base d'une pluralité de résultats d'observations obtenus par l'unité d'acquisition de position relative ;
une unité de corrélation d'objet (120 ; 230), pour déterminer, en tant que données de série temporelle, un ensemble de résultats d'observations comprenant les positions relatives de l'objet fixe, parmi la pluralité de résultats d'observations obtenus par l'unité d'acquisition de position relative, pour chaque objet fixe déterminé par l'unité de détermination d'objet fixe ; et
une unité d'estimation de vitesse angulaire (143 ; 150 ; 240), pour estimer une vitesse angulaire de l'objet mobile, **caractérisé en ce que**
l'unité d'estimation de vitesse angulaire compte, en tant que nombre de temps de corrélation, un nombre de résultats d'observations inclus dans lesdites données de série temporelle de chaque objet fixe qui sont corrélées dans la direction temporelle, et estime la vitesse angulaire de l'objet mobile sur la base des données de série temporelle dans lesquelles le nombre de temps de corrélation est égal ou supérieur à une valeur de seuil pour le nombre de temps de corrélation, parmi les données de série temporelle de chaque objet fixe.

**2.** Appareil d'estimation de vitesse angulaire (800 ; 200) comprenant :

une unité d'acquisition de position relative (110 ; 211), pour obtenir un résultat d'une observation par un dispositif d'observation d'objet périphérique monté sur un objet mobile qui observe de manière répétée au moins un objet situé dans le voisinage dudit objet mobile pour mesurer des positions relatives dudit au moins un objet par rapport à l'objet mobile ;
une unité de corrélation d'objet (120 ; 230), pour déterminer, en tant que données de série temporelle, un ensemble de résultats d'observations comprenant les positions relatives de l'objet observé par le dispositif d'observation d'objet périphérique, parmi une pluralité de résultats d'observations obtenus par l'unité d'acquisition de position relative, pour chaque objet parmi lesdits au moins un objet observés par le dispositif d'observation d'objet périphérique ; et
une unité de détermination d'objet fixe (110 ; 220), pour déterminer un objet fixe parmi lesdits au moins un objet, sur la base des données de série temporelle de chaque objet parmi lesdits au moins un objet ; et
une unité d'estimation de vitesse angulaire (143 ; 150 ; 240), pour estimer une vitesse angulaire de l'objet mobile, **caractérisé en ce que**
l'unité d'estimation de vitesse angulaire compte, en tant que nombre de temps de corrélation, un nombre de résultats d'observations inclus dans lesdites données de série temporelle de chaque objet fixe qui sont corrélées dans la direction temporelle, et estime la vitesse angulaire de l'objet mobile sur la base des données de série temporelle dans lesquelles le nombre de temps de corrélation est égal ou supérieur à une valeur de seuil pour le nombre de temps de corrélation, parmi les données de série temporelle de chaque objet fixe.

3. Appareil d'estimation de vitesse angulaire (800 ; 200) selon la revendication 1 ou la revendication 2, comprenant en outre :

une unité de calcul de position relative (142), pour calculer une position relative de l'objet mobile par rapport à un objet fixe, sur la base d'une pluralité des résultats des observations obtenus par l'unité d'acquisition de position relative, du résultat de la détermination par l'unité de détermination d'objet fixe, et du résultat de la détermination par l'unité de corrélation d'objet ; et dans lequel
l'unité d'estimation de vitesse angulaire (150 ; 143) estime la vitesse angulaire de l'objet mobile, sur la base de la position relative calculée par l'unité de calcul de position relative.

4. Appareil d'estimation de vitesse angulaire (800 ; 200) selon la revendication 3, dans lequel
l'unité d'estimation de vitesse angulaire estime la vitesse angulaire de l'objet mobile sur la base de chacun d'une pluralité d'ensembles de positions relatives de l'objet fixe corrélé par l'unité de corrélation d'objet, et détermine une estimation finale de la vitesse angulaire de l'objet mobile en intégrant une pluralité de vitesses angulaires estimées.

5. Appareil d'estimation de vitesse angulaire (800 ; 200) selon l'une quelconque des revendications 1 à 4, comprenant en outre :

une unité d'acquisition de valeur d'observation de vitesse angulaire (213) qui obtient un résultat d'une observation par un dispositif d'observation de vitesse angulaire qui observe la vitesse angulaire de l'objet mobile ; et
une unité de calcul d'erreur d'observation de vitesse angulaire (840 ; 240), pour calculer une erreur de la vitesse angulaire observée par le dispositif d'observation de vitesse angulaire, sur la base d'un résultat d'estimation par l'unité d'estimation de vitesse angulaire et du résultat de l'observation obtenu par l'unité d'acquisition de valeur d'observation de vitesse angulaire.

6. Appareil d'estimation de vitesse angulaire (800 ; 200) selon la revendication 5, comprenant en outre :

une unité de mémorisation d'erreur de vitesse angulaire (251 ; 840), pour mémoriser une erreur calculée par l'unité de calcul d'erreur d'observation de vitesse angulaire ; et
une unité de correction de vitesse angulaire (252 ; 840), pour corriger la vitesse angulaire observée par le dispositif d'observation de vitesse angulaire en utilisant l'erreur mémorisée par l'unité de mémorisation d'erreur de vitesse angulaire.

7. Appareil d'estimation de vitesse angulaire (800 ; 200) selon la revendication 6, comprenant en outre :

une unité de test de vitesse angulaire (253 ; 840), pour tester la vitesse angulaire observée par le dispositif d'observation de vitesse angulaire pour déterminer si, oui ou non, la vitesse angulaire observée par le dispositif d'observation de vitesse angulaire est correcte, sur la base de la vitesse angulaire estimée par l'unité d'estimation de vitesse angulaire ; et dans lequel
l'unité de mémorisation d'erreur de vitesse angulaire mémorise l'erreur calculée par l'unité de calcul d'erreur d'observation de vitesse angulaire lorsque l'unité de test de vitesse angulaire détermine que la vitesse angulaire observée par le dispositif d'observation de vitesse angulaire n'est pas correcte.

8. Appareil d'estimation de vitesse angulaire (800 ; 200) selon la revendication 6, comprenant en outre :

une unité de test de vitesse angulaire (253 ; 840), pour tester la vitesse angulaire corrigée par l'unité de correction de vitesse angulaire pour déterminer si, oui ou non, la vitesse angulaire corrigée par l'unité de correction de vitesse angulaire est correcte, sur la base de la vitesse angulaire estimée par l'unité d'estimation de vitesse angulaire ; et dans lequel
l'unité de mémorisation d'erreur de vitesse angulaire met à jour une erreur mémorisée avec l'erreur calculée par l'unité de calcul d'erreur d'observation de vitesse angulaire lorsque l'unité de test de vitesse angulaire détermine que la vitesse angulaire corrigée par l'unité de correction de vitesse angulaire n'est pas correcte.

9. Appareil d'estimation de vitesse angulaire (800 ; 200) selon la revendication 7 ou la revendication 8, dans lequel l'unité de test de vitesse angulaire teste la vitesse angulaire en utilisant un test du khi carré.

**10.** Appareil d'estimation de vitesse angulaire (800 ; 200) selon l'une quelconque des revendications 1 à 9, comprenant en outre :

une unité d'acquisition de valeur d'observation de vitesse (110 ; 212), pour obtenir un résultat d'une observation par un dispositif d'observation de vitesse de déplacement qui observe une vitesse de déplacement de l'objet mobile ; et dans lequel
l'unité de détermination d'objet fixe (110 ; 220) détermine si, oui ou non, l'objet est immobile, sur la base du résultat de l'observation obtenu par l'unité d'acquisition de position relative et du résultat de l'observation obtenu par l'unité d'acquisition de valeur d'observation de vitesse.

**11.** Appareil d'estimation de vitesse angulaire (800; 200) selon la revendication 10, dans lequel
le dispositif d'observation d'objet périphérique mesure en outre une vitesse relative de l'objet par rapport à l'objet mobile ; et
l'unité de détermination d'objet fixe (110 ; 220) détermine si, oui ou non, l'objet est immobile, sur la base de la vitesse de déplacement de l'objet mobile observée par le dispositif d'observation de vitesse de déplacement et de la vitesse relative de l'objet mesurée par le dispositif d'observation d'objet périphérique.

**12.** Appareil d'estimation de vitesse angulaire (800; 200) selon la revendication 10 ou la revendication 11, comprenant en outre :

une unité d'estimation de vitesse relative (220), pour estimer une vitesse relative de l'objet par rapport à l'objet mobile, l'objet étant observé par le dispositif d'observation d'objet périphérique une pluralité de fois ; et dans lequel
l'unité de détermination d'objet fixe (220) détermine si, oui ou non, l'objet est immobile, sur la base de la vitesse de déplacement de l'objet mobile observée par le dispositif d'observation de vitesse de déplacement et de la vitesse relative de l'objet estimée par l'unité d'estimation de vitesse relative.

**13.** Programme d'ordinateur, pour amener un ordinateur qui exécute le programme d'ordinateur à fonctionner en tant qu'appareil d'estimation de vitesse angulaire selon l'une quelconque des revendications 1 à 12.

**14.** Procédé d'estimation de vitesse angulaire pour estimer une vitesse angulaire d'un objet mobile, le procédé comprenant :

l'obtention d'un résultat d'une observation par un dispositif d'observation d'objet périphérique monté sur un objet mobile qui observe de manière répétée au moins un objet situé dans le voisinage dudit objet mobile pour mesurer des positions relatives dudit au moins un objet par rapport à l'objet mobile ;
la détermination, par une unité de détermination d'objet fixe (110 ; 220), d'un objet fixe parmi lesdits au moins un objet observés par le dispositif d'observation d'objet périphérique, sur la base de la pluralité de résultats d'observations obtenus par une unité d'acquisition de position relative (110 ; 211) ;
la détermination, en tant que données de série temporelle, d'un ensemble de résultats d'observations comprenant les positions relatives de l'objet fixe, parmi la pluralité de résultats d'observations obtenus par l'unité d'acquisition de position relative, pour chaque objet fixe déterminé par ladite unité de détermination d'objet fixe ; et
l'estimation d'une vitesse angulaire de l'objet mobile en comptant, en tant que nombre de temps de corrélation, un nombre de résultats d'observations, inclus dans lesdites données de série temporelle de chaque objet fixe qui sont corrélées dans la direction temporelle, et en estimant la vitesse angulaire de l'objet mobile sur la base des données de série temporelle dans lesquelles le nombre de temps de corrélation est égal ou supérieur à une valeur de seuil pour le nombre de temps de corrélation, parmi les données de série temporelle de chaque objet fixe.

**15.** Procédé d'estimation de vitesse angulaire pour estimer une vitesse angulaire d'un objet mobile, le procédé comprenant :

l'obtention d'un résultat d'une observation par un dispositif d'observation d'objet périphérique monté sur un objet mobile qui observe de manière répétée au moins un objet situé dans le voisinage dudit objet mobile pour mesurer des positions relatives dudit au moins un objet par rapport à l'objet mobile ;
la détermination, en tant que données de série temporelle, d'un ensemble de résultats d'observations comprenant les positions relatives de l'objet observé parmi une pluralité de résultats d'observations obtenus par une unité d’acquisition de position relative, pour chaque objet parmi lesdits au moins un objet observés par le dispositif d’observation d’objet périphérique ;
la détermination, par une unité de détermination d’objet fixe (110 ; 220), d’un objet fixe parmi lesdits au moins un objets, sur la base des données de série temporelle de chaque objet parmi lesdits au moins un objets ; et
l’estimation d’une vitesse angulaire de l’objet mobile en comptant, en tant que nombre de temps de corrélation, un nombre de résultats d’observations inclus dans lesdites données de série temporelle de chaque objet fixe qui sont corrélées dans la direction temporelle, et en estimant la vitesse angulaire de l’objet mobile sur la base des données de série temporelle dans lesquelles le nombre de temps de corrélation est égale ou supérieure à une valeur de seuil pour le nombre de temps de corrélation, parmi les données de série temporelle de chaque objet fixe.

Fig. 1

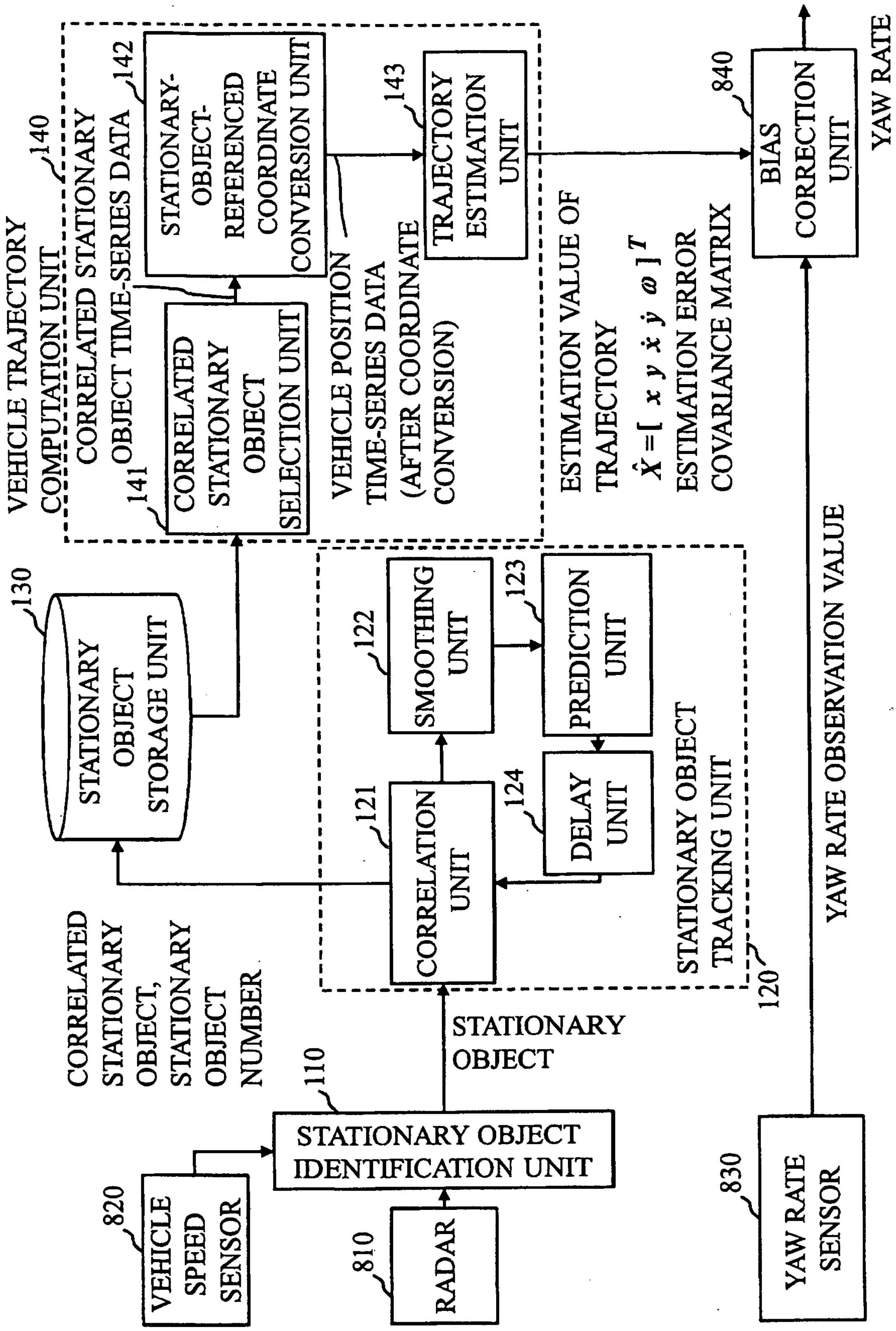
VEHICLE SPEED SENSOR
820
RADAR
810
STATIONARY OBJECT IDENTIFICATION UNIT
110
STATIONARY OBJECT
CORRELATED STATIONARY OBJECT, STATIONARY OBJECT NUMBER
STATIONARY OBJECT STORAGE UNIT
130
CORRELATION UNIT
121
SMOOTHING UNIT
122
PREDICTION UNIT
123
DELAY UNIT
124
STATIONARY OBJECT TRACKING UNIT
120
VEHICLE TRAJECTORY COMPUTATION UNIT
140
CORRELATED STATIONARY OBJECT SELECTION UNIT
141
CORRELATED STATIONARY OBJECT TIME-SERIES DATA
STATIONARY-OBJECT-REFERENCED COORDINATE CONVERSION UNIT
142
VEHICLE POSITION TIME-SERIES DATA (AFTER COORDINATE CONVERSION)
TRAJECTORY ESTIMATION UNIT
143
ESTIMATION VALUE OF TRAJECTORY
$\hat{X} = [\ x\ y\ \dot{x}\ \dot{y}\ \omega\ ]^T$
ESTIMATION ERROR COVARIANCE MATRIX
BIAS CORRECTION UNIT
840
YAW RATE
YAW RATE SENSOR
830
YAW RATE OBSERVATION VALUE

Fig. 2

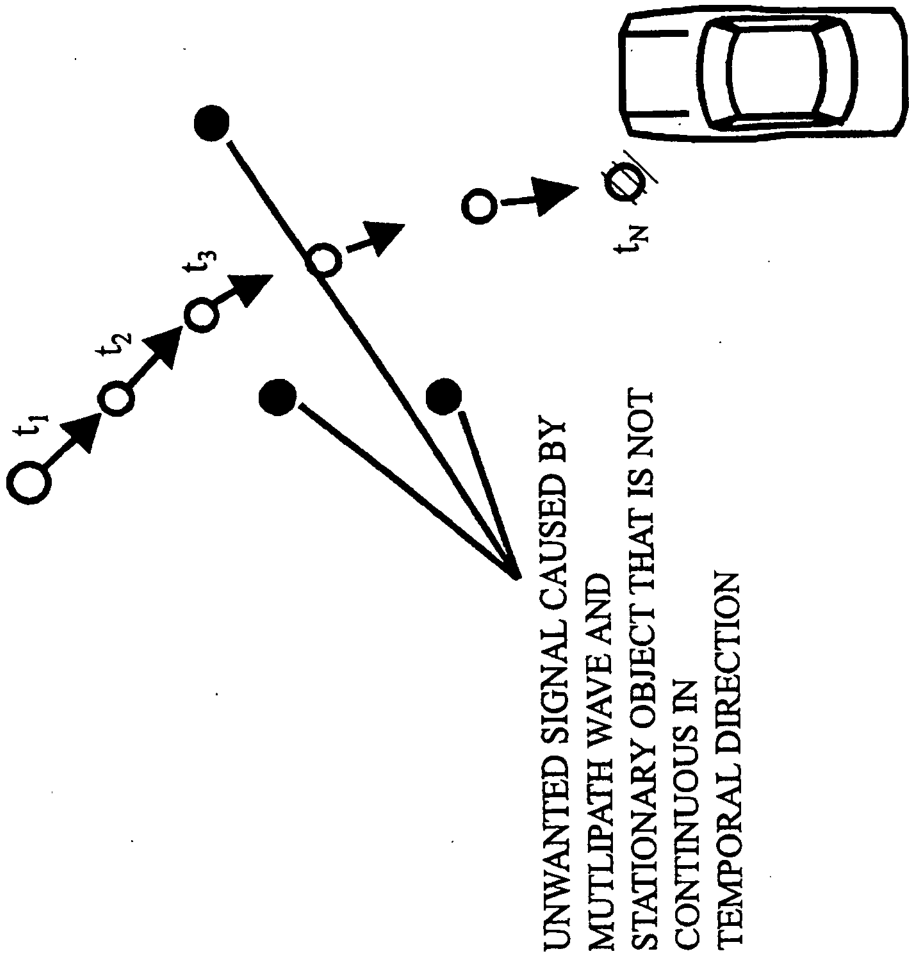
$t_1$
$t_2$
$t_3$
$t_N$
UNWANTED SIGNAL CAUSED BY
MUTLIPATH WAVE AND
STATIONARY OBJECT THAT IS NOT
CONTINUOUS IN
TEMPORAL DIRECTION

Fig. 3

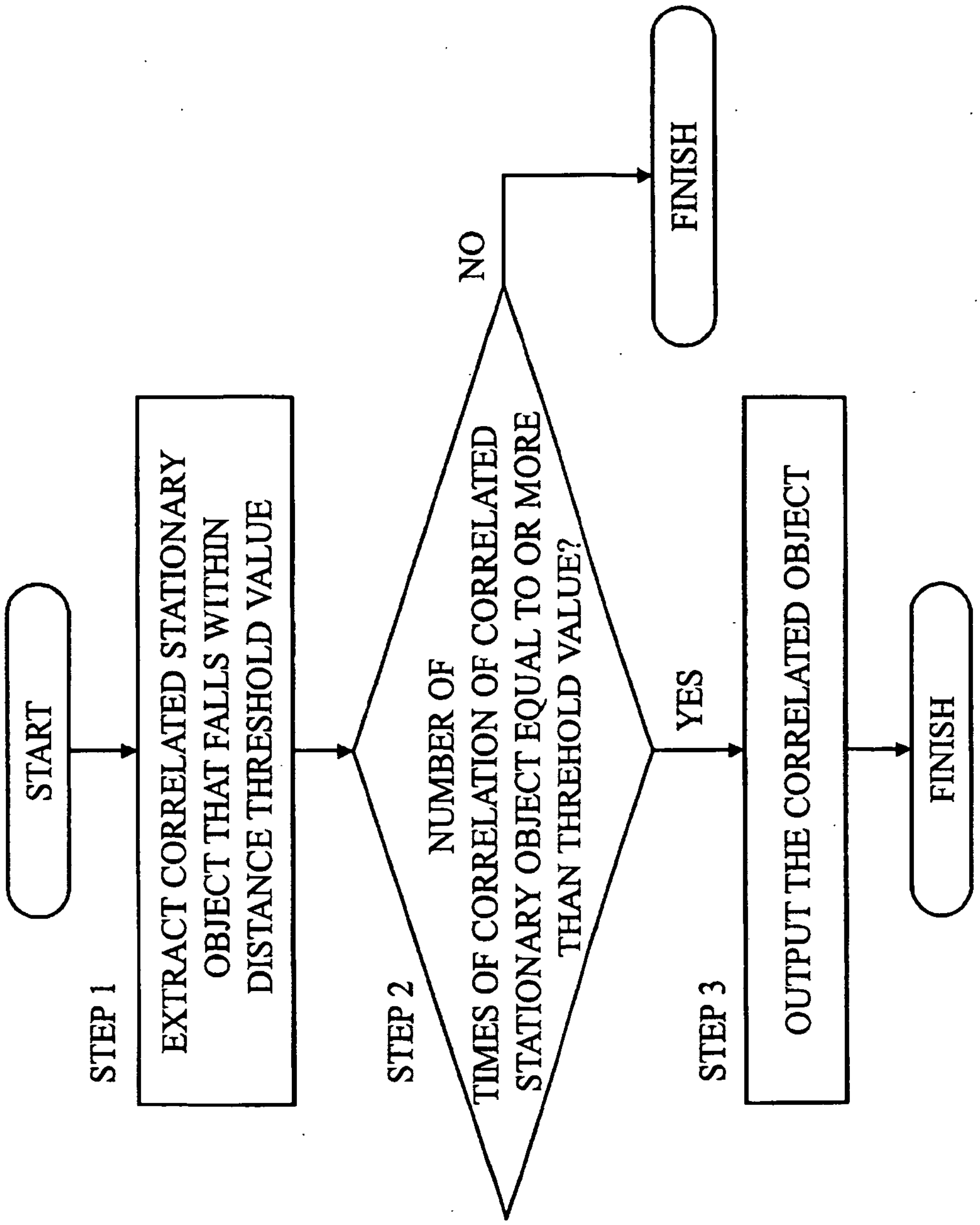
START
STEP 1
EXTRACT CORRELATED STATIONARY OBJECT THAT FALLS WITHIN DISTANCE THRESHOLD VALUE
STEP 2
NUMBER OF TIMES OF CORRELATION OF CORRELATED STATIONARY OBJECT EQUAL TO OR MORE THAN THREHOLD VALUE?
NO
FINISH
YES
STEP 3
OUTPUT THE CORRELATED OBJECT
FINISH

Fig. 4

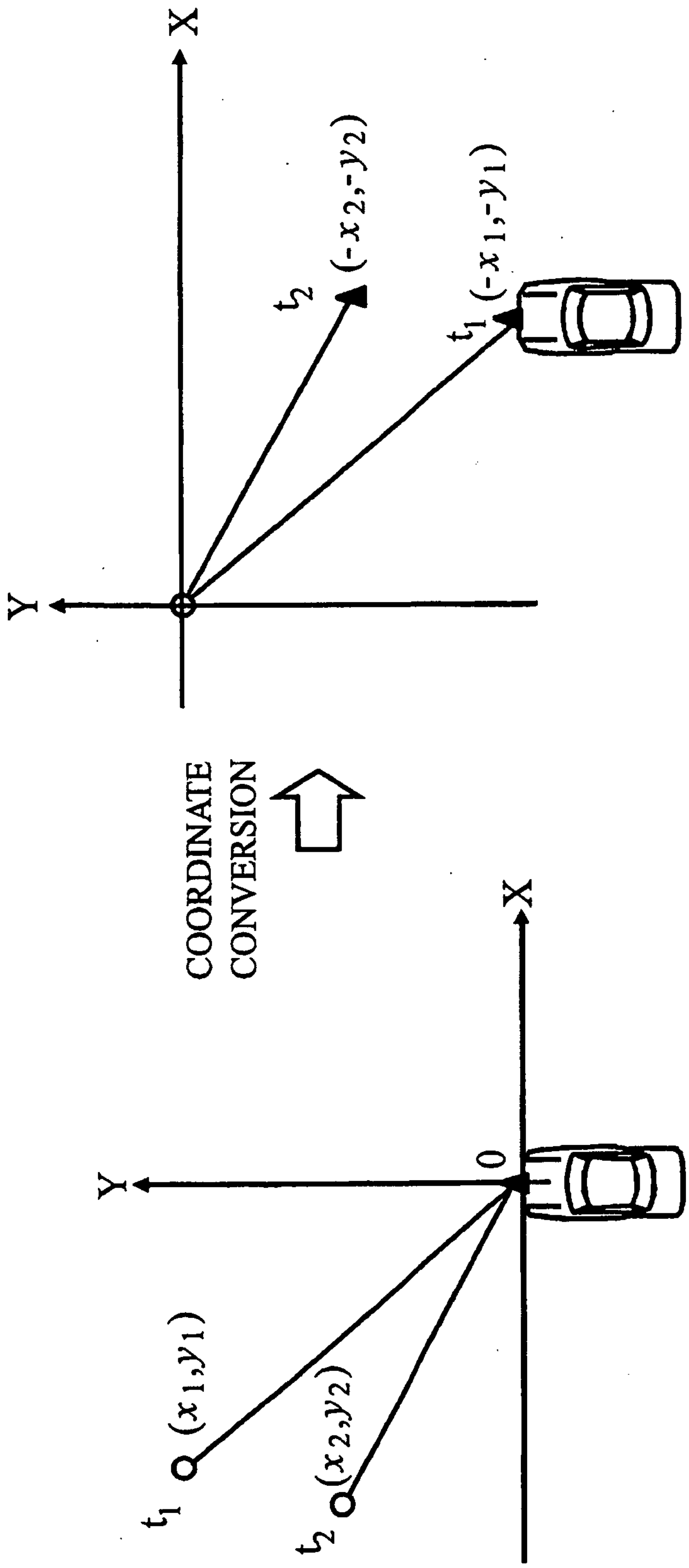

Fig. 5

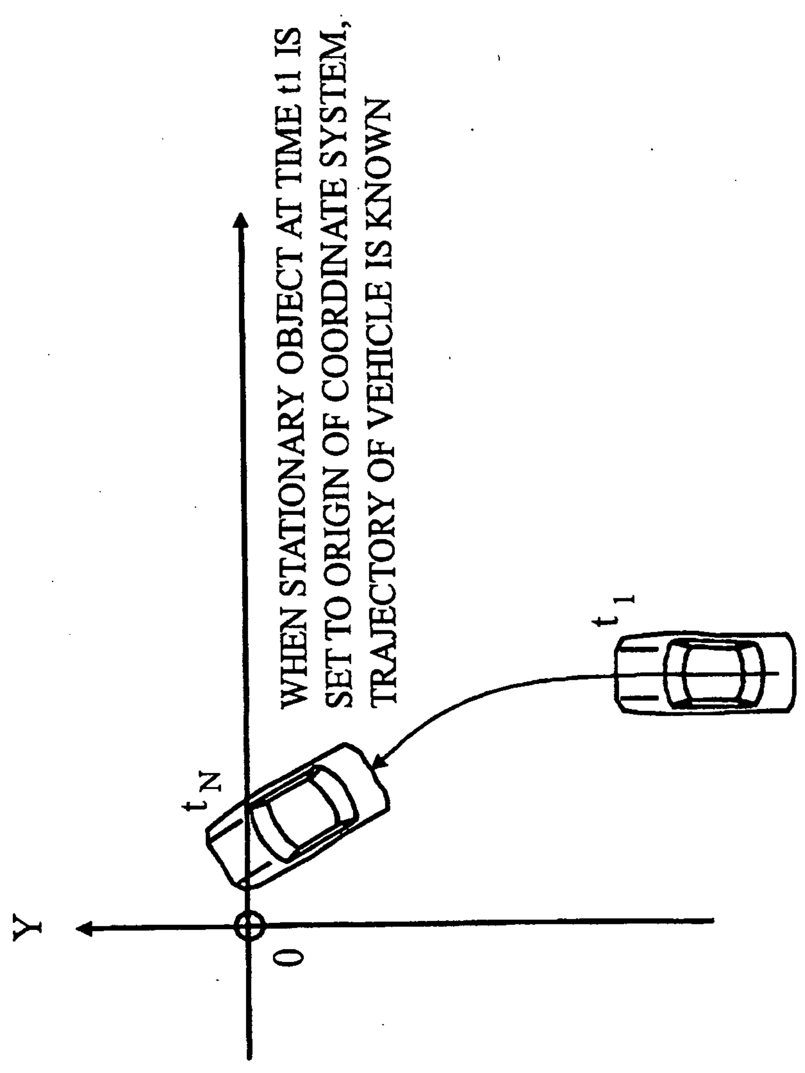
WHEN STATIONARY OBJECT AT TIME t1 IS
SET TO ORIGIN OF COORDINATE SYSTEM,
TRAJECTORY OF VEHICLE IS KNOWN
$t_N$
$t_1$
Y
0

Fig. 6

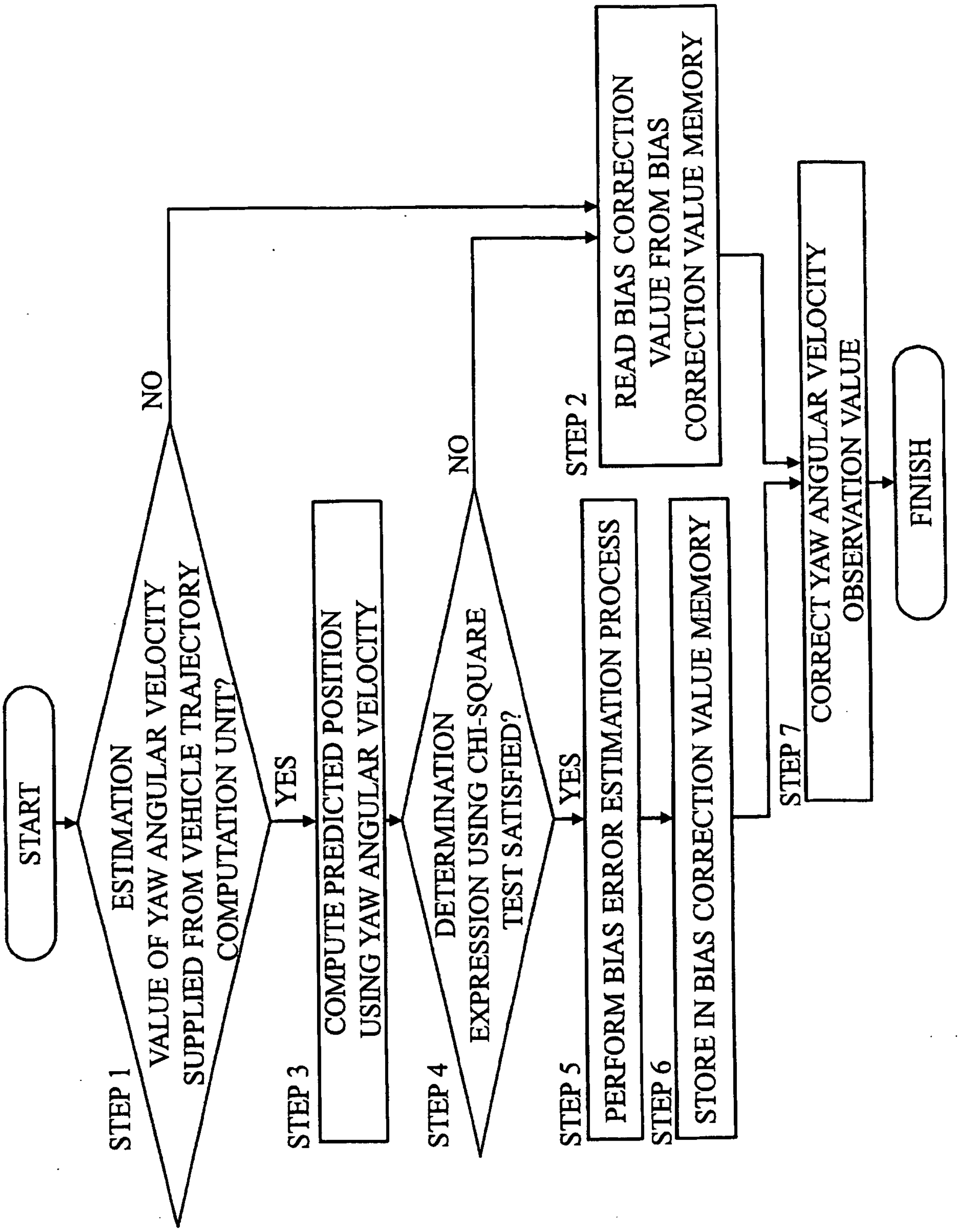
START
STEP 1
ESTIMATION VALUE OF YAW ANGULAR VELOCITY SUPPLIED FROM VEHICLE TRAJECTORY COMPUTATION UNIT?
YES
NO
STEP 2
READ BIAS CORRECTION VALUE FROM BIAS CORRECTION VALUE MEMORY
STEP 3
COMPUTE PREDICTED POSITION USING YAW ANGULAR VELOCITY
STEP 4
DETERMINATION EXPRESSION USING CHI-SQUARE TEST SATISFIED?
YES
NO
STEP 5
PERFORM BIAS ERROR ESTIMATION PROCESS
STEP 6
STORE IN BIAS CORRECTION VALUE MEMORY
STEP 7
CORRECT YAW ANGULAR VELOCITY OBSERVATION VALUE
FINISH

Fig. 7

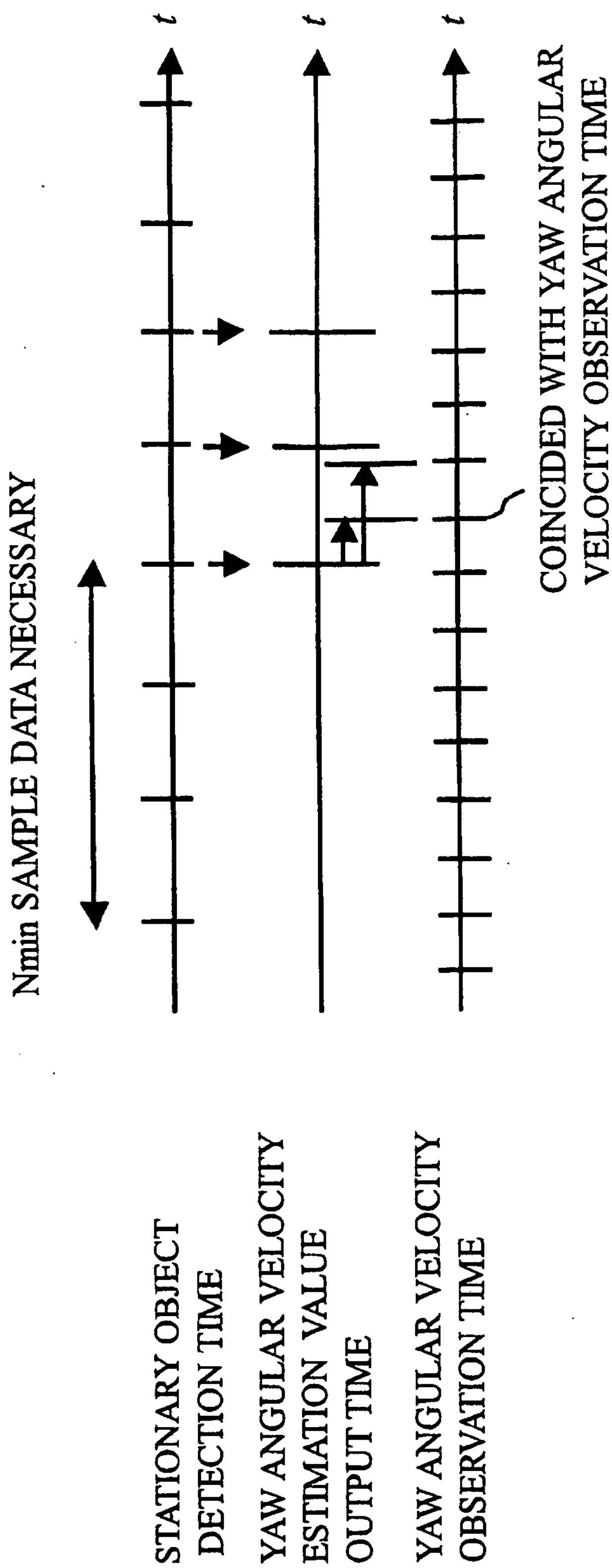
Nmin SAMPLE DATA NECESSARY
STATIONARY OBJECT DETECTION TIME
YAW ANGULAR VELOCITY ESTIMATION VALUE OUTPUT TIME
YAW ANGULAR VELOCITY OBSERVATION TIME
COINCIDED WITH YAW ANGULAR VELOCITY OBSERVATION TIME
t
t
t

Fig. 8

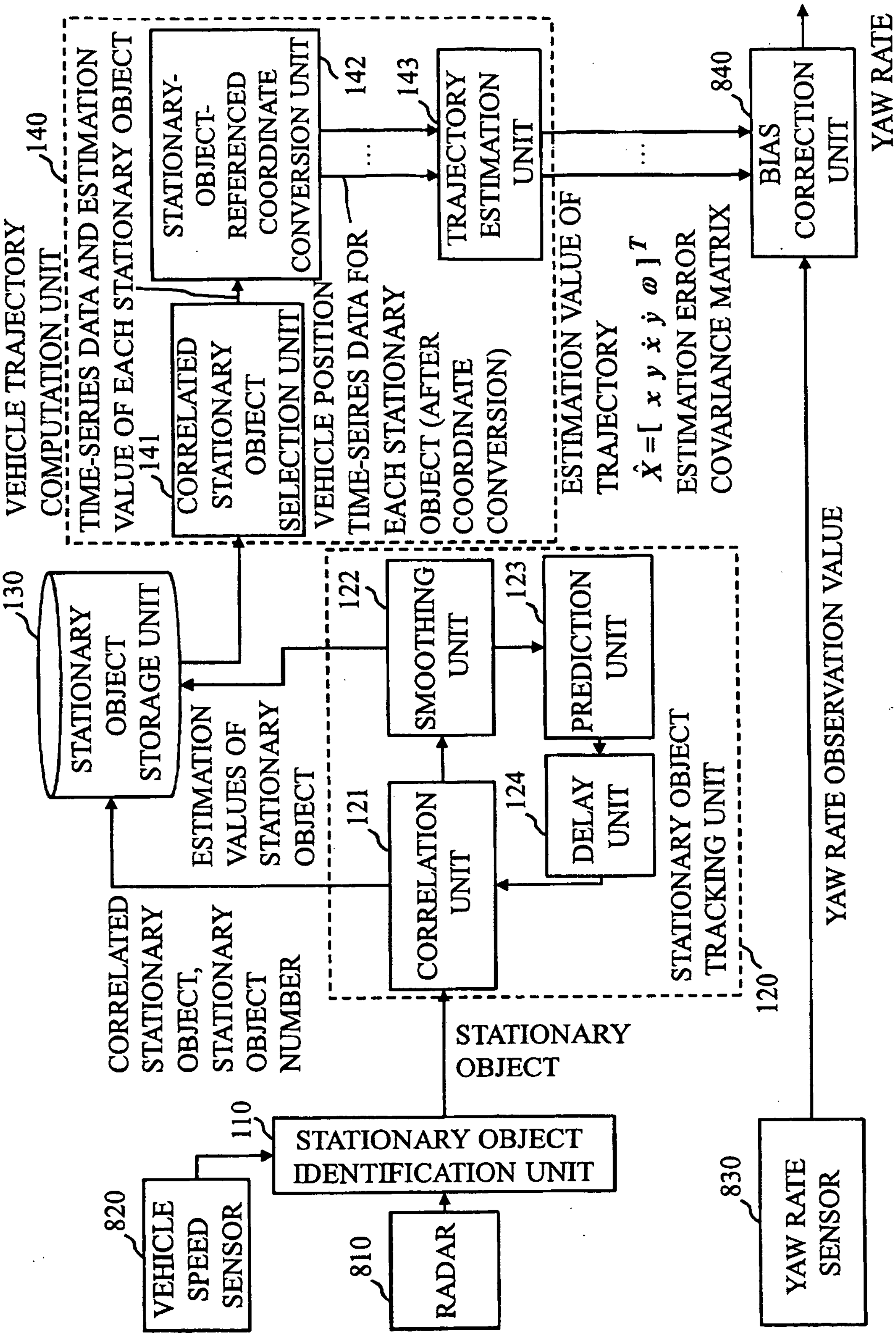
820
VEHICLE SPEED SENSOR
810
RADAR
110
STATIONARY OBJECT IDENTIFICATION UNIT
STATIONARY OBJECT
CORRELATED STATIONARY OBJECT, STATIONARY OBJECT NUMBER
130
STATIONARY OBJECT STORAGE UNIT
ESTIMATION VALUES OF STATIONARY OBJECT
121
CORRELATION UNIT
122
SMOOTHING UNIT
123
PREDICTION UNIT
124
DELAY UNIT
STATIONARY OBJECT TRACKING UNIT
120
VEHICLE TRAJECTORY COMPUTATION UNIT
140
TIME-SERIES DATA AND ESTIMATION VALUE OF EACH STATIONARY OBJECT
141
CORRELATED STATIONARY OBJECT SELECTION UNIT
STATIONARY-OBJECT-REFERENCED COORDINATE CONVERSION UNIT
142
VEHICLE POSITION TIME-SEIRES DATA FOR EACH STATIONARY OBJECT (AFTER COORDINATE CONVERSION)
143
TRAJECTORY ESTIMATION UNIT
ESTIMATION VALUE OF TRAJECTORY
$\hat{X} = [\ x\ y\ \dot{x}\ \dot{y}\ \omega\ ]^T$
ESTIMATION ERROR COVARIANCE MATRIX
840
BIAS CORRECTION UNIT
YAW RATE
830
YAW RATE SENSOR
YAW RATE OBSERVATION VALUE

Fig. 9

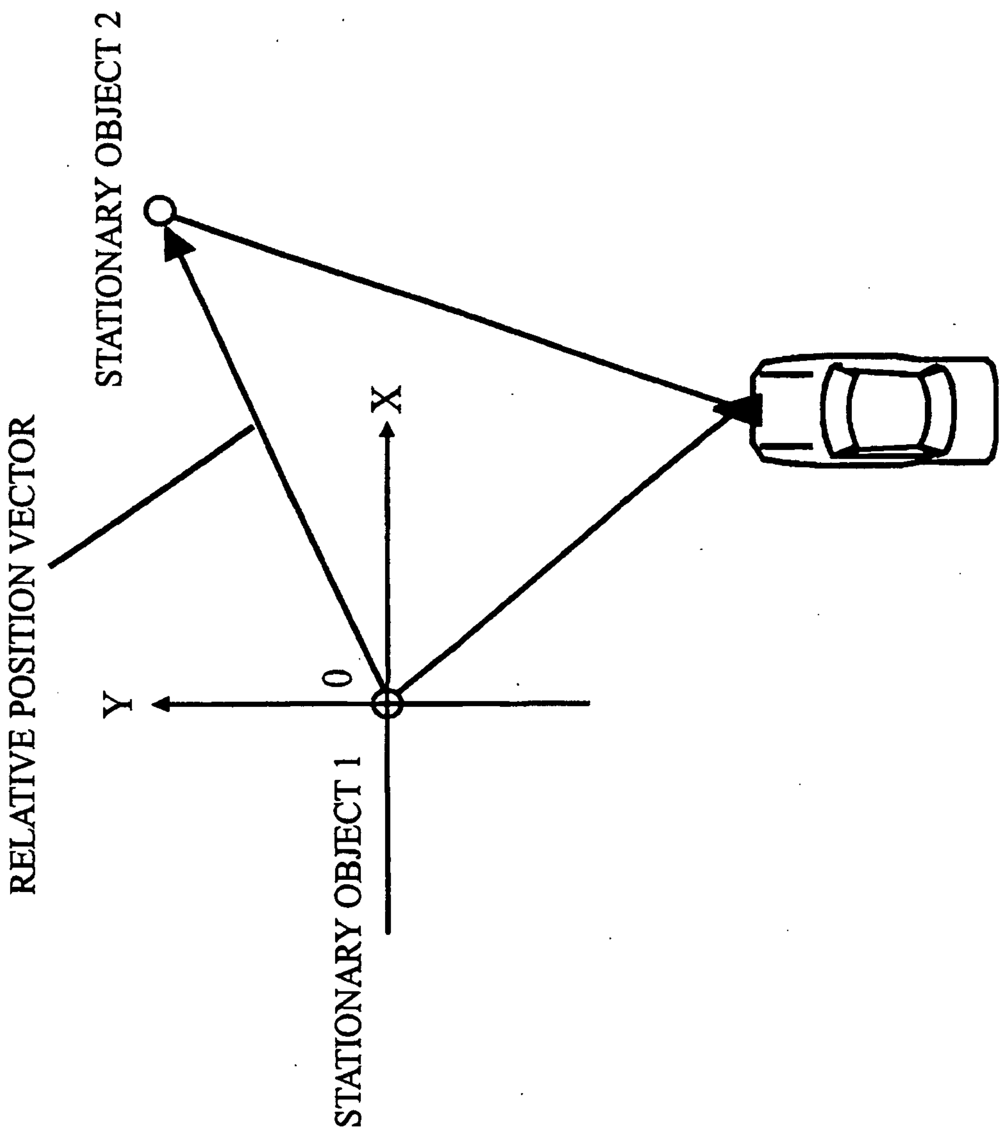
STATIONARY OBJECT 2
RELATIVE POSITION VECTOR
X
Y
0
STATIONARY OBJECT 1

Fig. 10

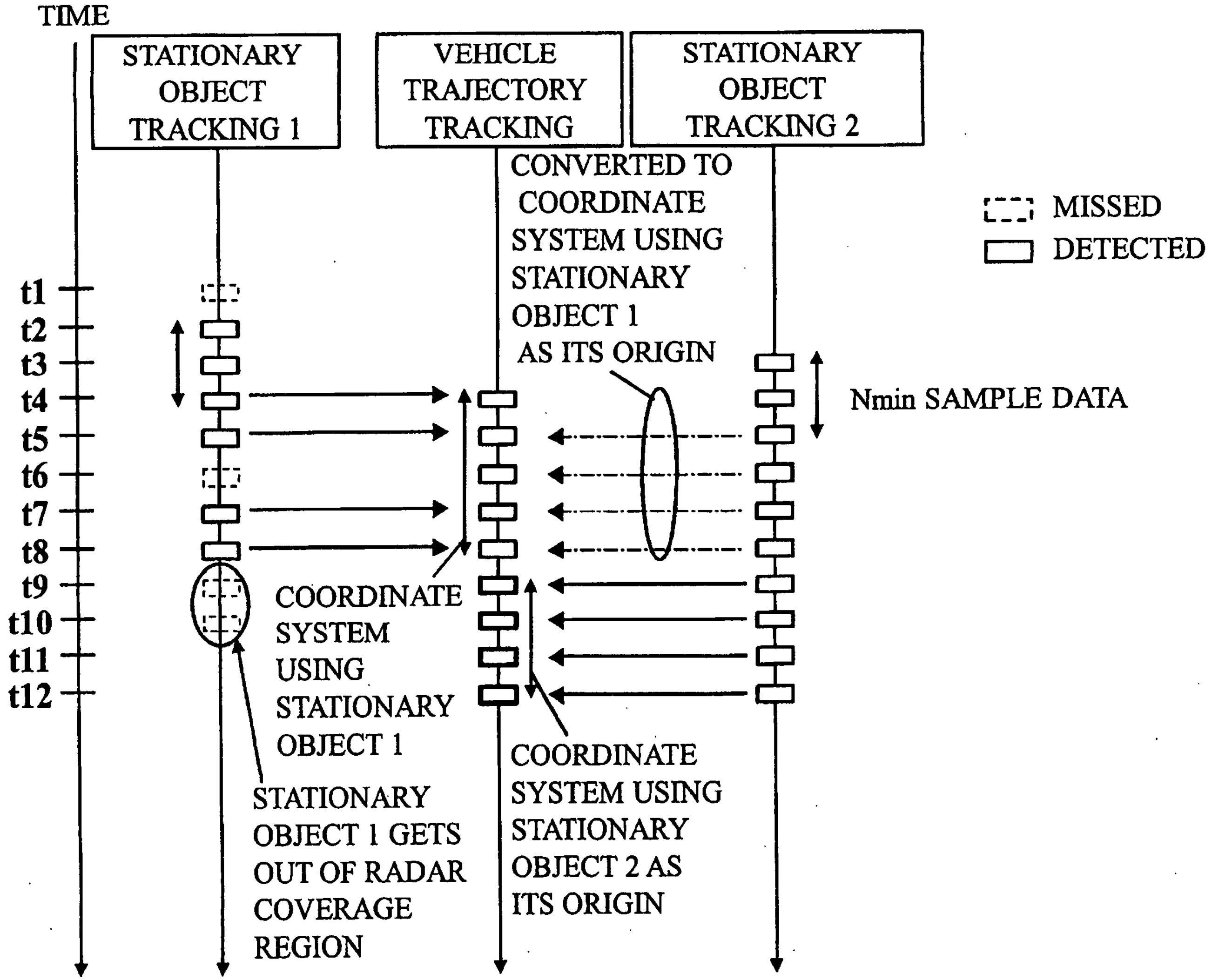
TIME
STATIONARY OBJECT TRACKING 1
VEHICLE TRAJECTORY TRACKING
STATIONARY OBJECT TRACKING 2
CONVERTED TO COORDINATE SYSTEM USING STATIONARY OBJECT 1 AS ITS ORIGIN
MISSED
DETECTED
Nmin SAMPLE DATA
t1
t2
t3
t4
t5
t6
t7
t8
t9
t10
t11
t12
COORDINATE SYSTEM USING STATIONARY OBJECT 1
STATIONARY OBJECT 1 GETS OUT OF RADAR COVERAGE REGION
COORDINATE SYSTEM USING STATIONARY OBJECT 2 AS ITS ORIGIN

Fig. 11

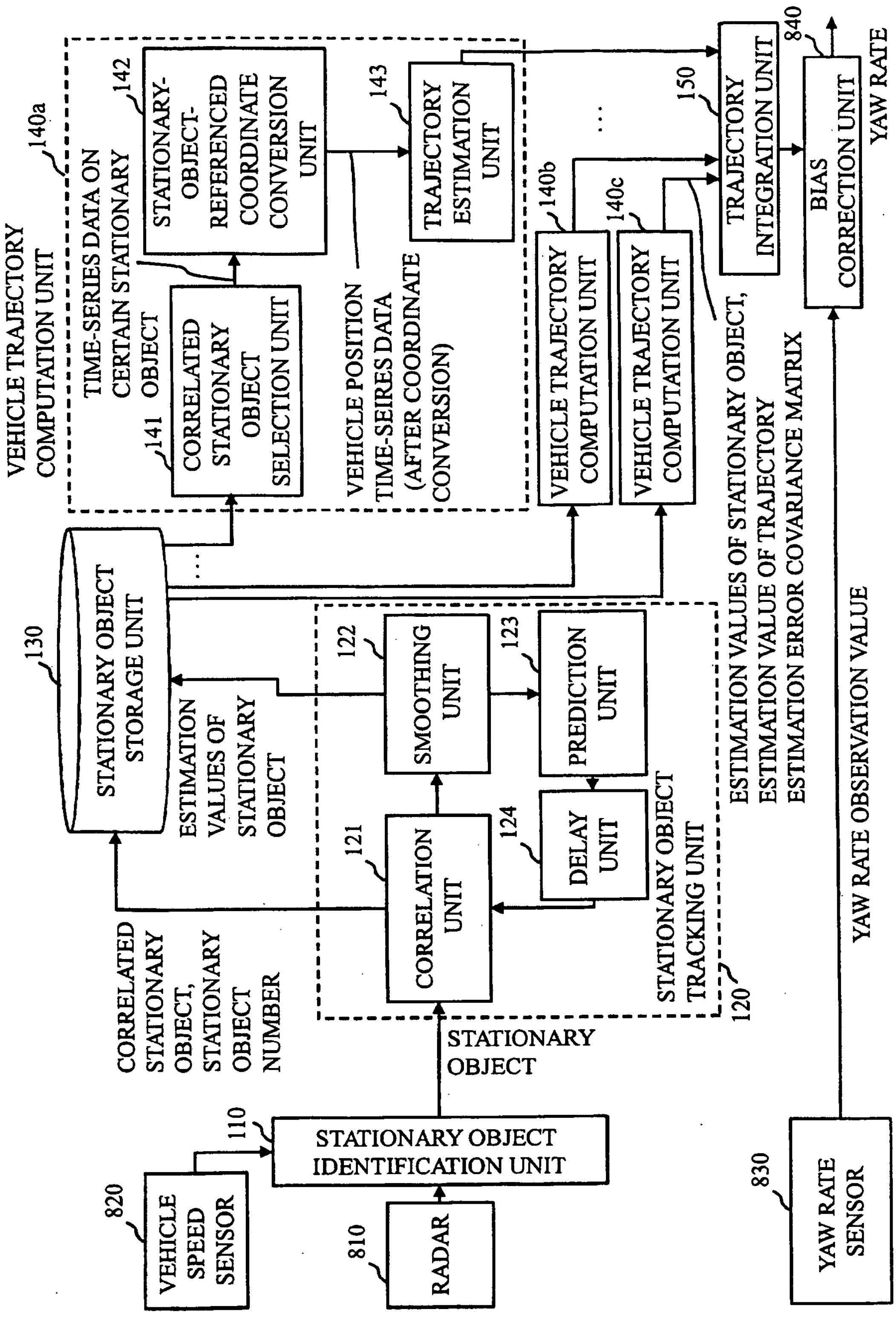

VEHICLE SPEED SENSOR
820
RADAR
810
STATIONARY OBJECT IDENTIFICATION UNIT
110
STATIONARY OBJECT
CORRELATED STATIONARY OBJECT, STATIONARY OBJECT NUMBER
CORRELATION UNIT
121
SMOOTHING UNIT
122
PREDICTION UNIT
123
DELAY UNIT
124
STATIONARY OBJECT TRACKING UNIT
120
ESTIMATION VALUES OF STATIONARY OBJECT
STATIONARY OBJECT STORAGE UNIT
130
VEHICLE TRAJECTORY COMPUTATION UNIT
140a
CORRELATED STATIONARY OBJECT SELECTION UNIT
141
TIME-SERIES DATA ON CERTAIN STATIONARY OBJECT
STATIONARY-OBJECT-REFERENCED COORDINATE CONVERSION UNIT
142
VEHICLE POSITION TIME-SEIRES DATA (AFTER COORDINATE CONVERSION)
TRAJECTORY ESTIMATION UNIT
143
VEHICLE TRAJECTORY COMPUTATION UNIT
140b
VEHICLE TRAJECTORY COMPUTATION UNIT
140c
ESTIMATION VALUES OF STATIONARY OBJECT, ESTIMATION VALUE OF TRAJECTORY ESTIMATION ERROR COVARIANCE MATRIX
TRAJECTORY INTEGRATION UNIT
150
BIAS CORRECTION UNIT
840
YAW RATE
YAW RATE SENSOR
830
YAW RATE OBSERVATION VALUE

Fig. 12

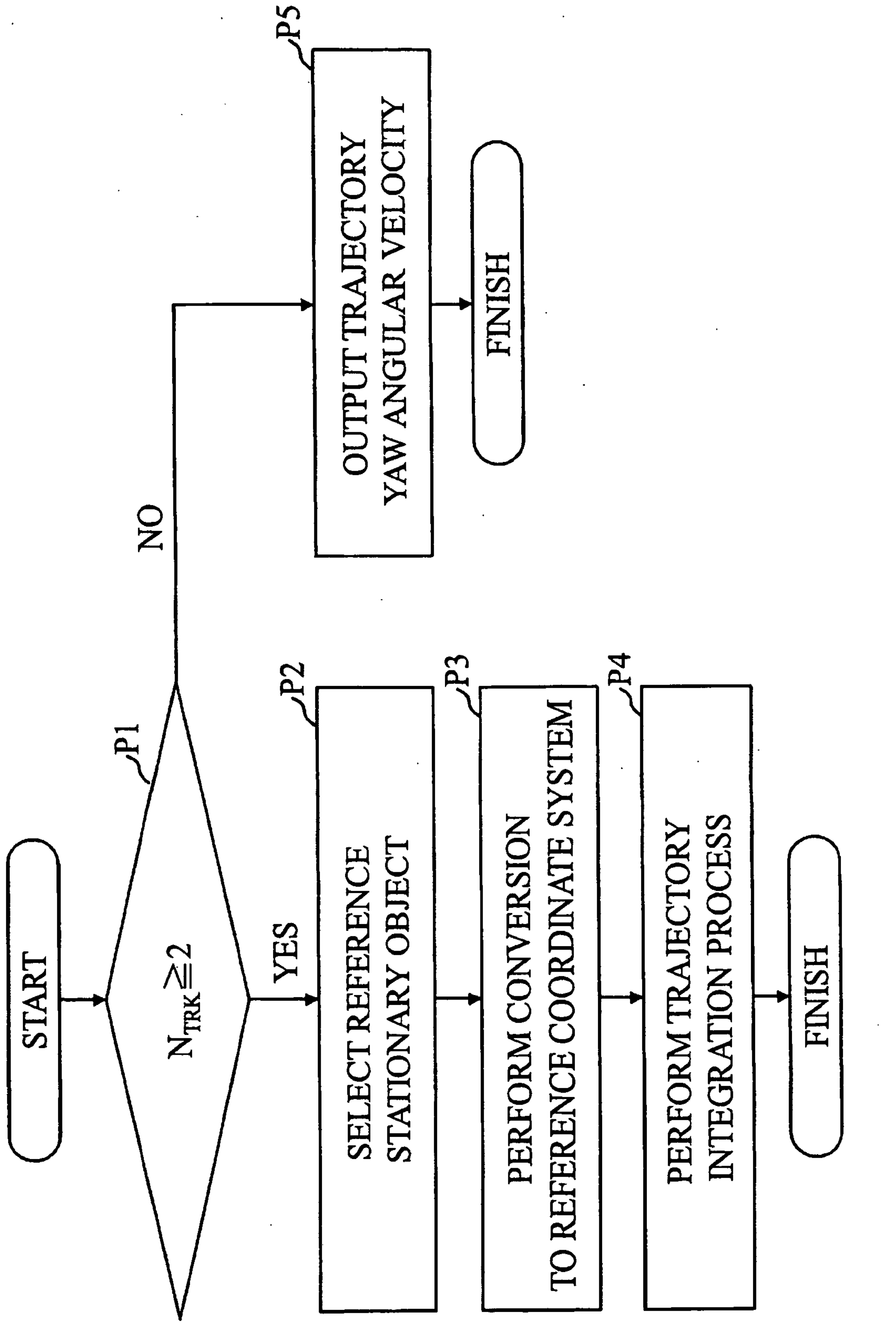
START
P1
$N_{TRK} \geqq 2$
YES
NO
P2
SELECT REFERENCE STATIONARY OBJECT
P3
PERFORM CONVERSION TO REFERENCE COORDINATE SYSTEM
P4
PERFORM TRAJECTORY INTEGRATION PROCESS
FINISH
P5
OUTPUT TRAJECTORY YAW ANGULAR VELOCITY
FINISH

Fig. 13

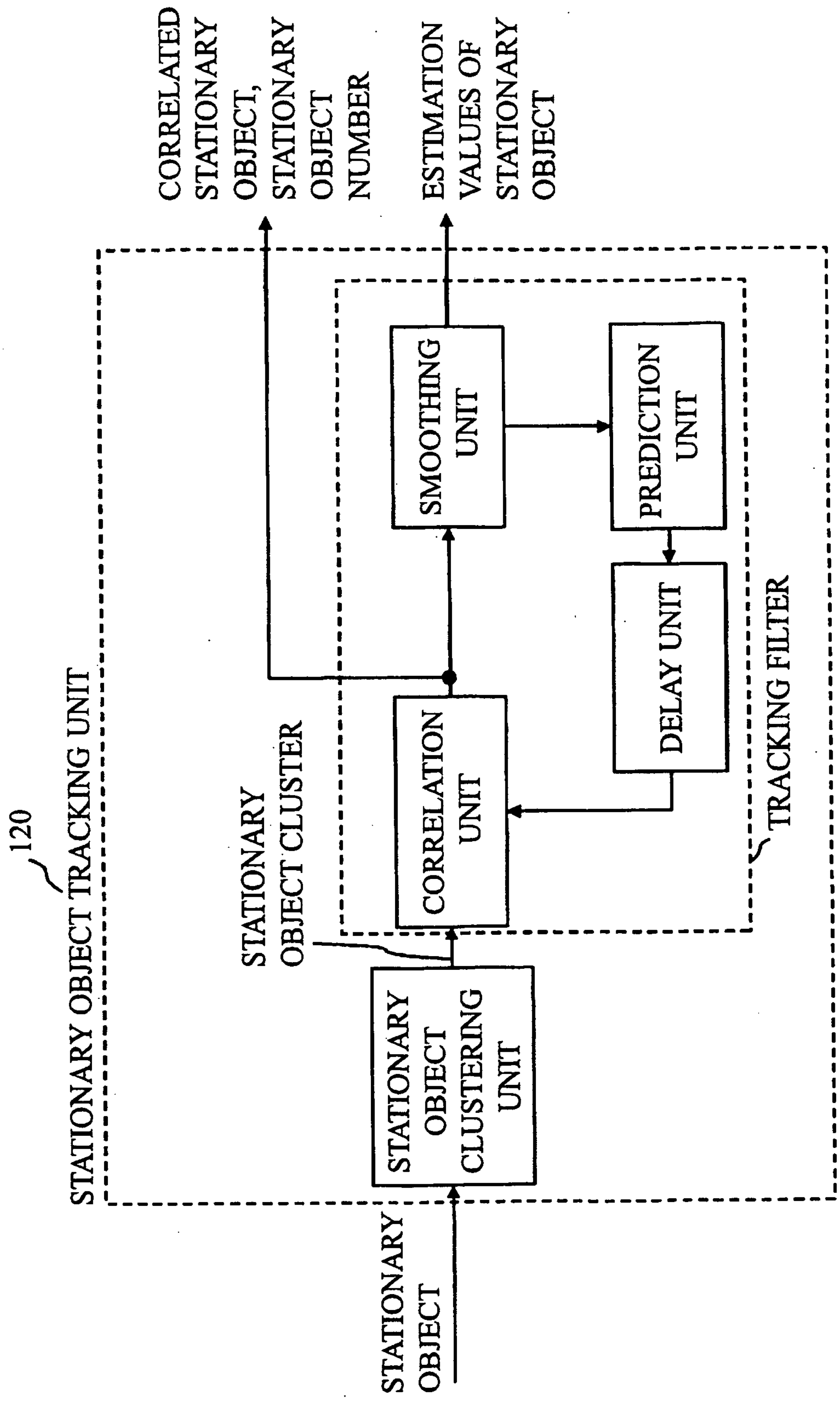

120
STATIONARY OBJECT TRACKING UNIT
STATIONARY OBJECT
STATIONARY OBJECT CLUSTERING UNIT
STATIONARY OBJECT CLUSTER
CORRELATION UNIT
SMOOTHING UNIT
PREDICTION UNIT
DELAY UNIT
TRACKING FILTER
CORRELATED STATIONARY OBJECT, STATIONARY OBJECT NUMBER
ESTIMATION VALUES OF STATIONARY OBJECT

Fig. 14

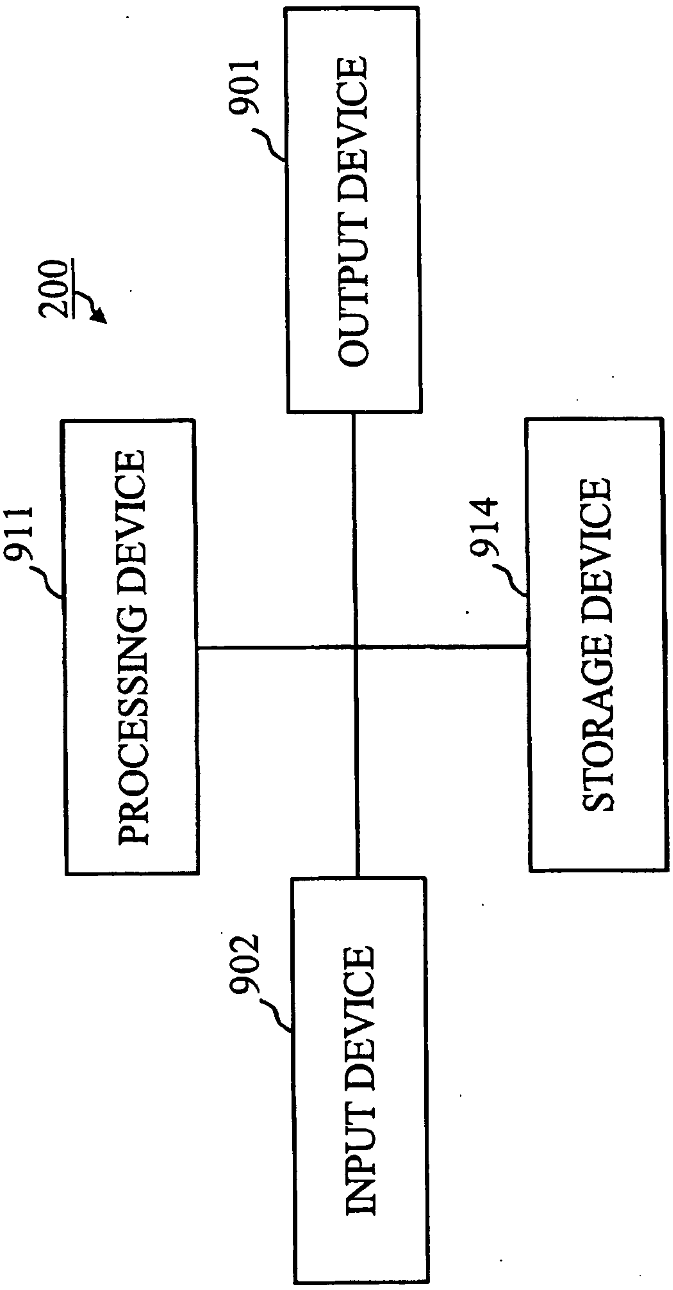
200
OUTPUT DEVICE
901
PROCESSING DEVICE
911
STORAGE DEVICE
914
INPUT DEVICE
902

Fig. 15

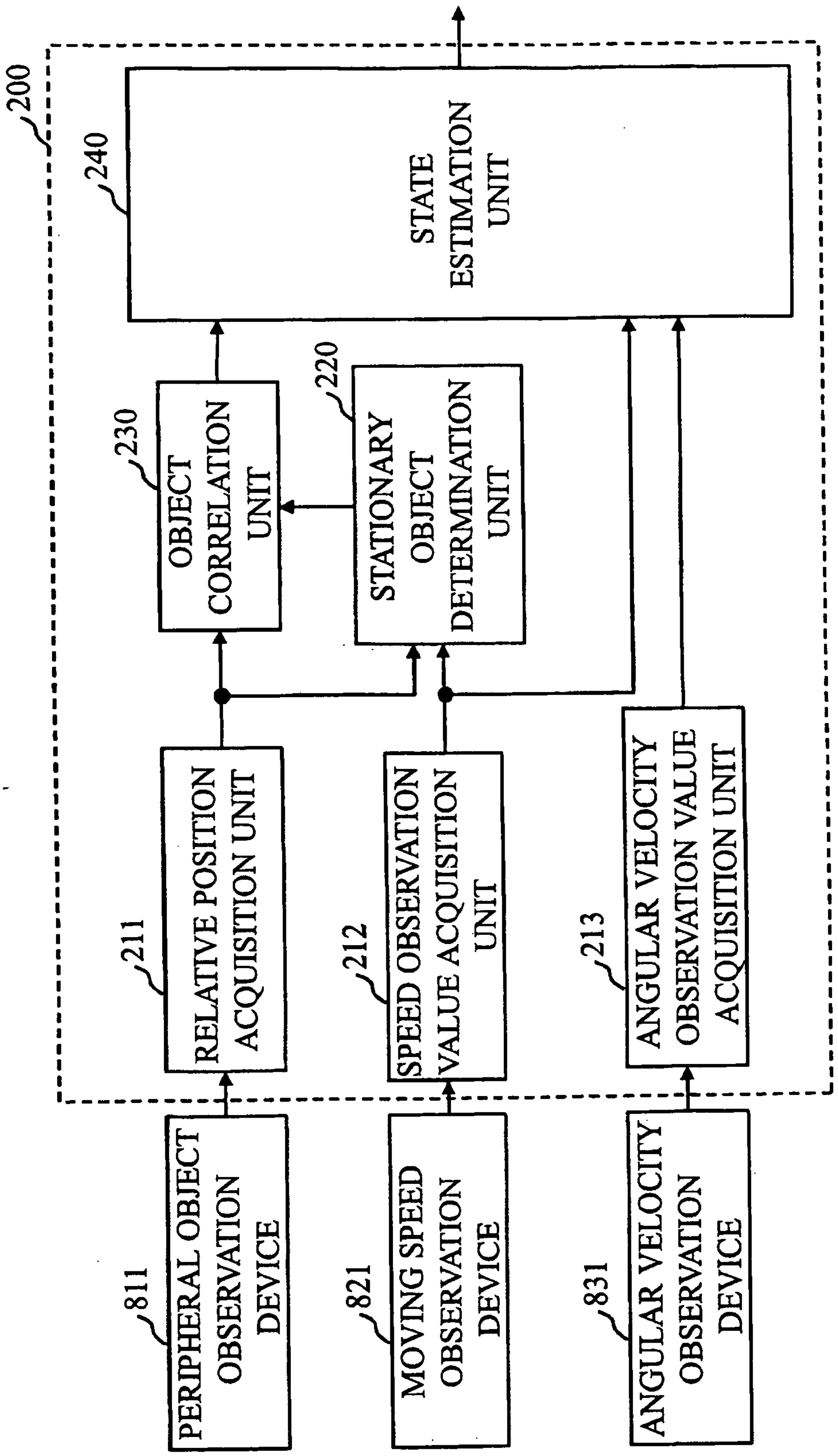
200
240
STATE ESTIMATION UNIT
230
OBJECT CORRELATION UNIT
220
STATIONARY OBJECT DETERMINATION UNIT
211
RELATIVE POSITION ACQUISITION UNIT
212
SPEED OBSERVATION VALUE ACQUISITION UNIT
213
ANGULAR VELOCITY OBSERVATION VALUE ACQUISITION UNIT
811
PERIPHERAL OBJECT OBSERVATION DEVICE
821
MOVING SPEED OBSERVATION DEVICE
831
ANGULAR VELOCITY OBSERVATION DEVICE

Fig. 16

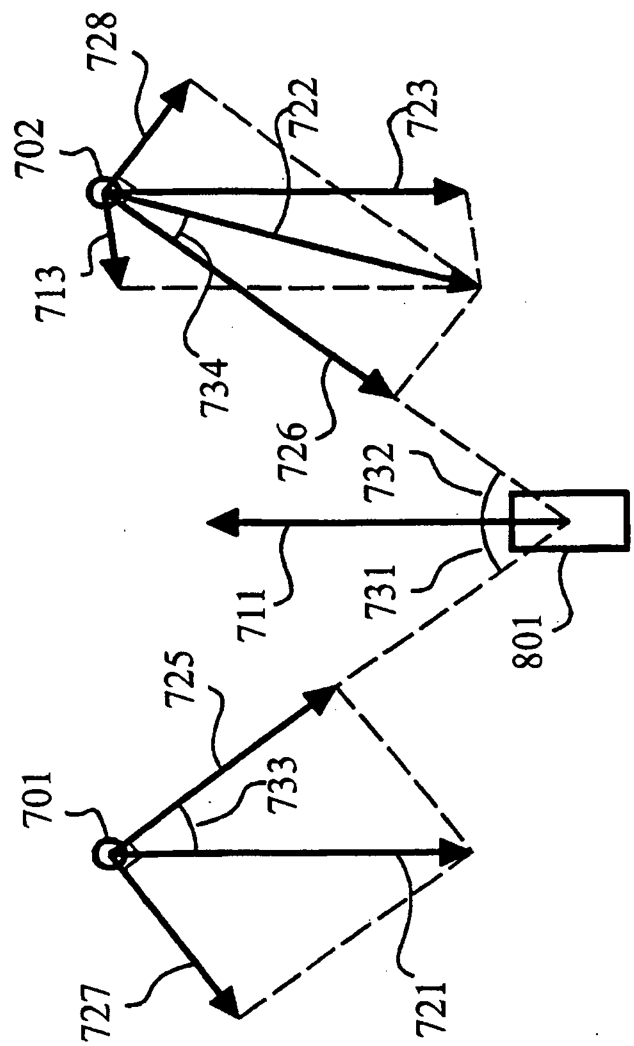

Fig. 17

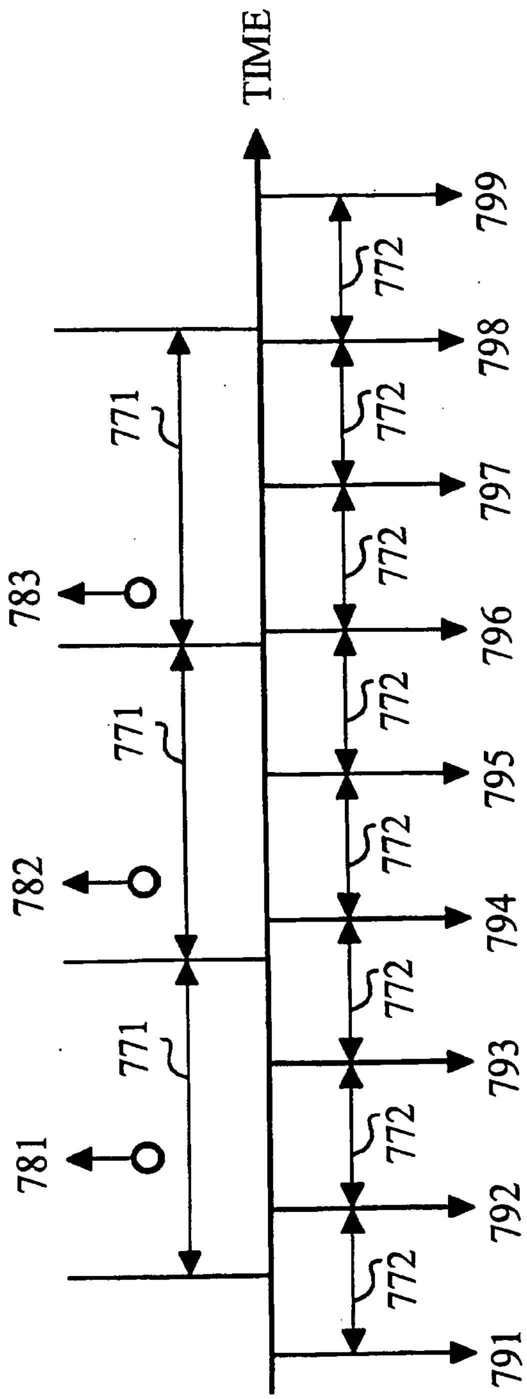
TIME
771
771
771
772
772
772
772
772
772
772
772
781
782
783
791
792
793
794
795
796
797
798
799

Fig. 18

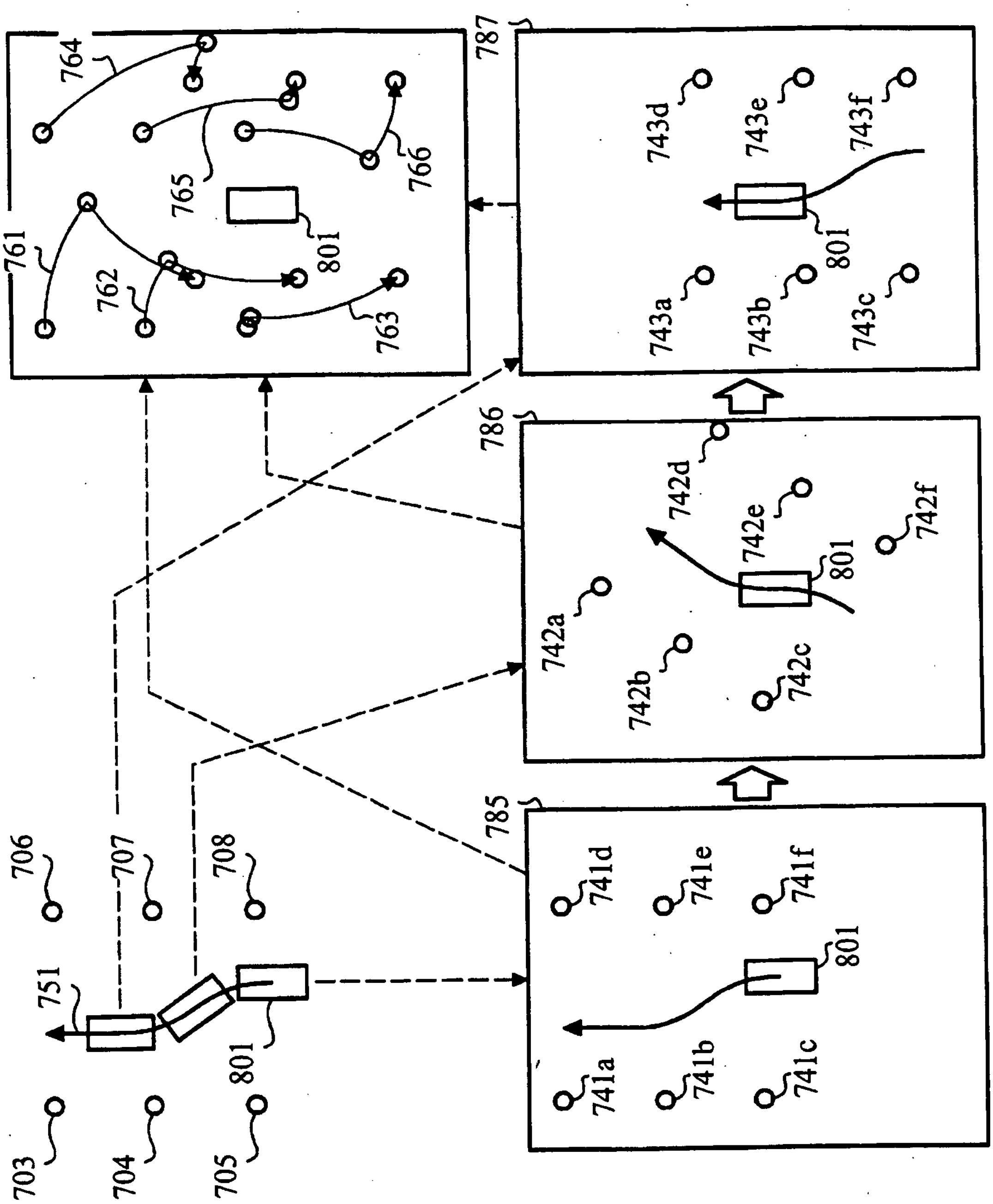
703
704
705
706
707
708
751
801
785
741a
741b
741c
741d
741e
741f
786
742a
742b
742c
742d
742e
742f
787
743a
743b
743c
743d
743e
743f
761
762
763
764
765
766

Fig. 19

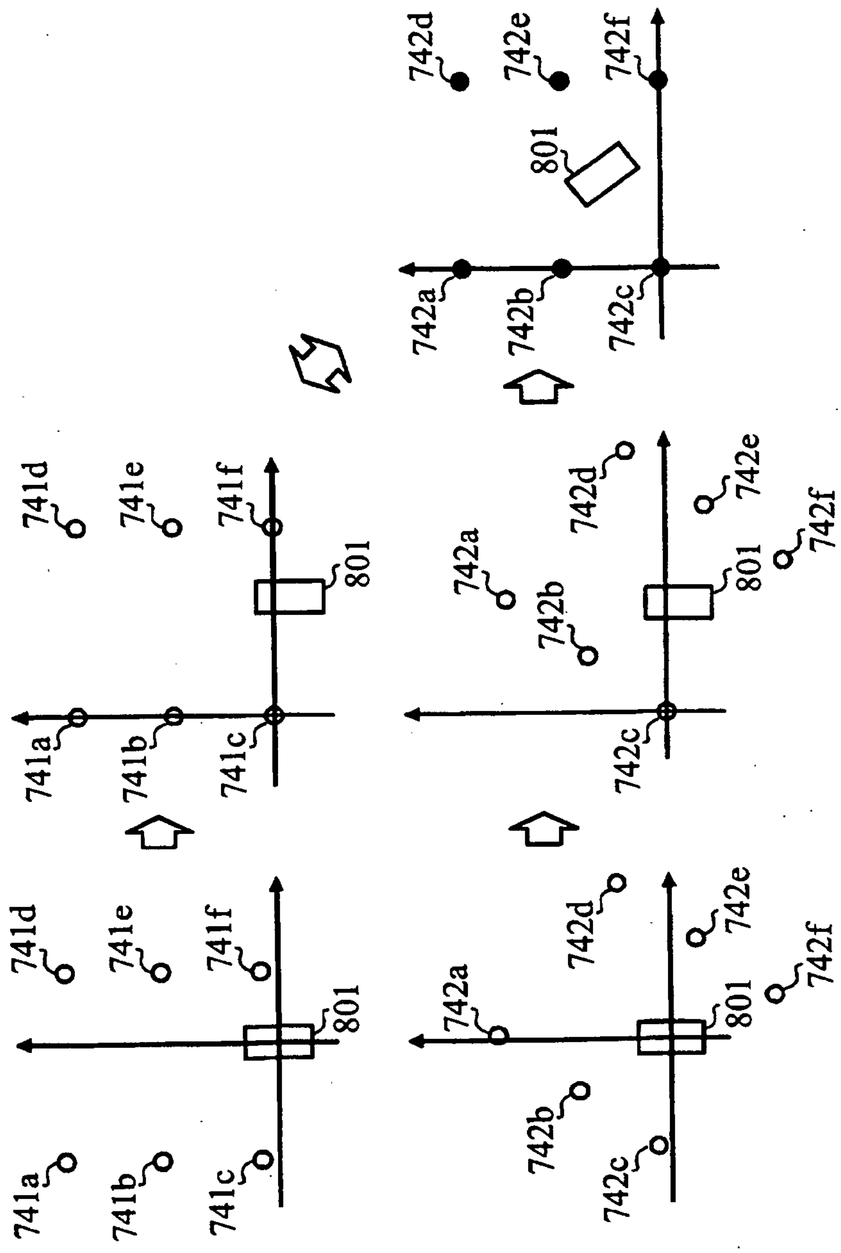
741a
741b
741c
741d
741e
741f
801
742a
742b
742c
742d
742e
742f

Fig. 20

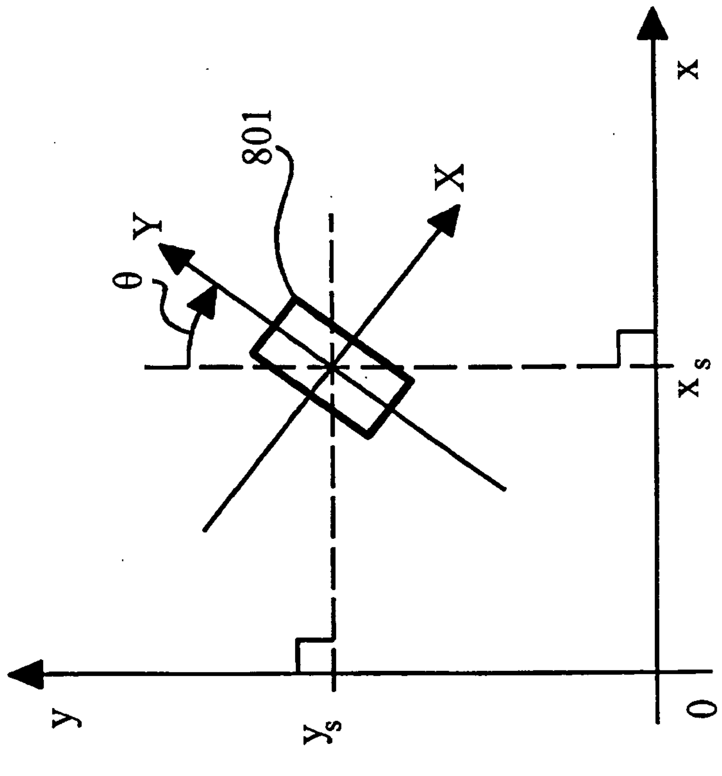

Fig. 21

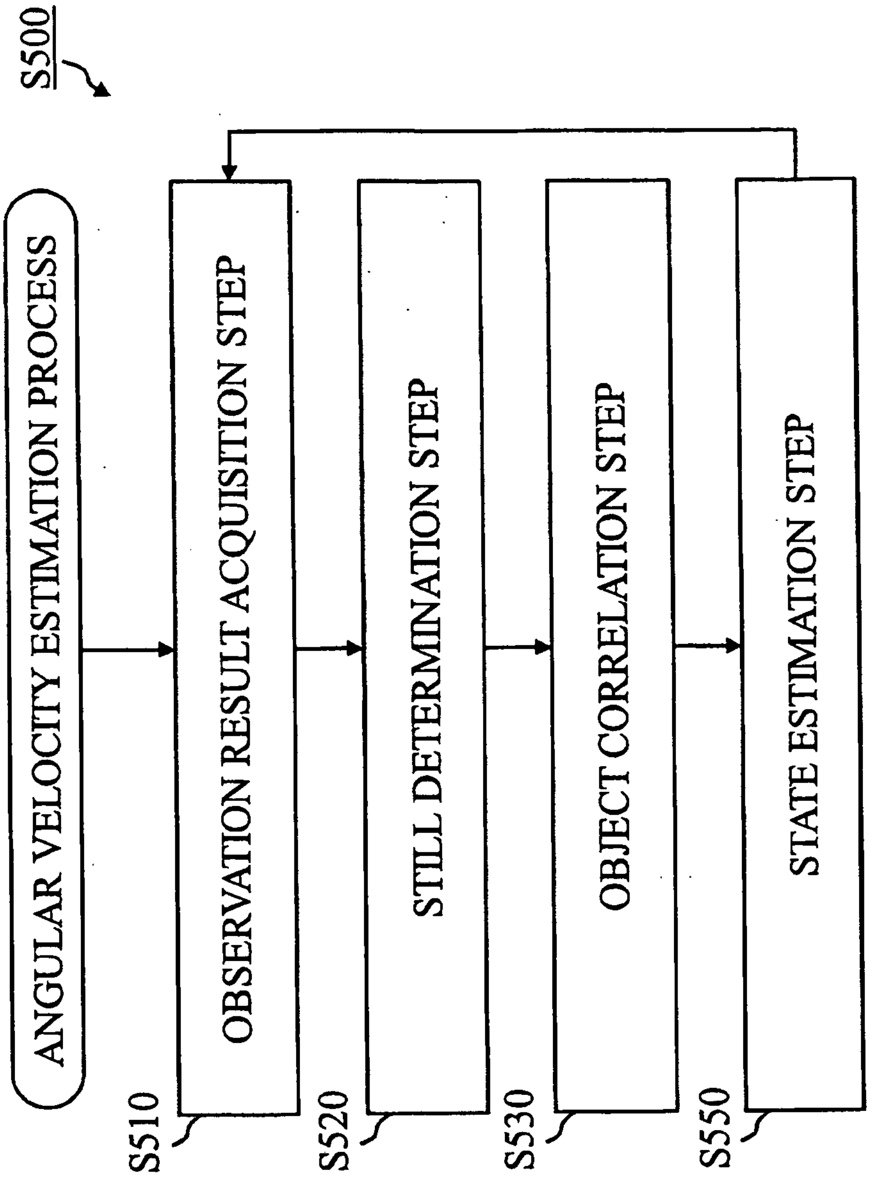
S500
ANGULAR VELOCITY ESTIMATION PROCESS
S510
OBSERVATION RESULT ACQUISITION STEP
S520
STILL DETERMINATION STEP
S530
OBJECT CORRELATION STEP
S550
STATE ESTIMATION STEP

Fig. 22

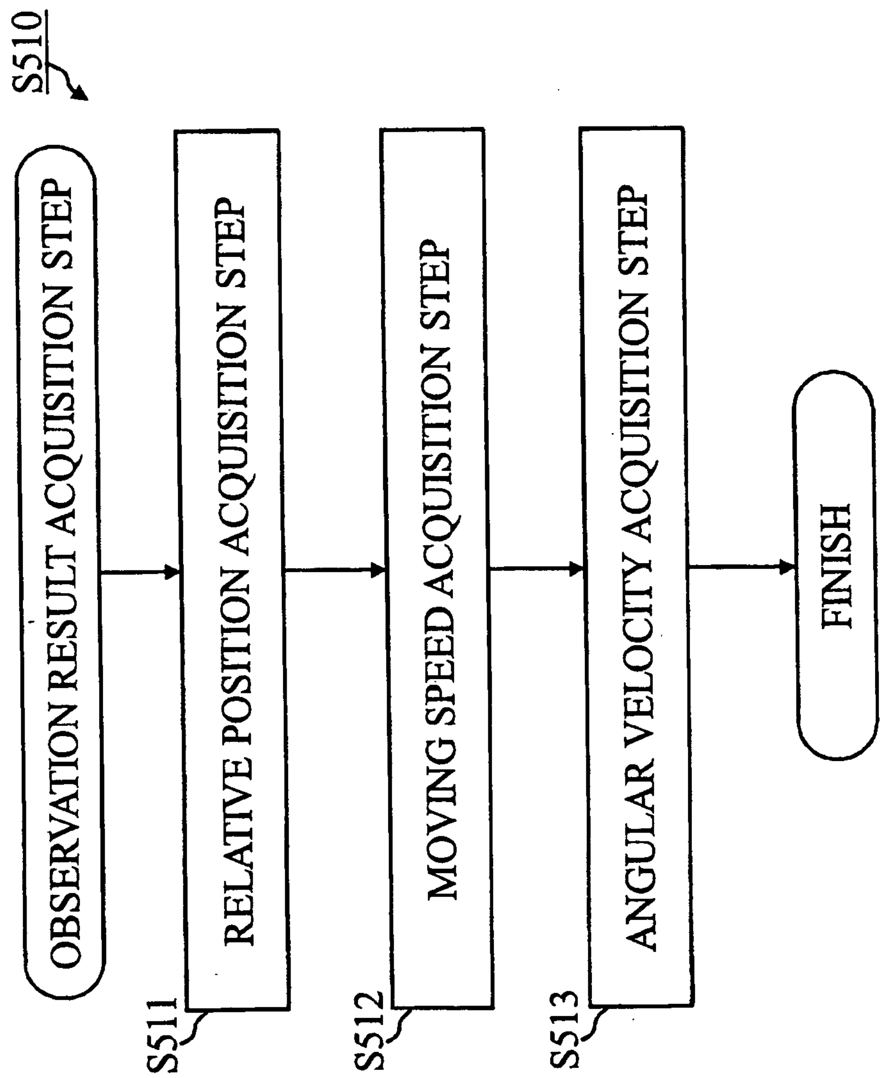
S510
OBSERVATION RESULT ACQUISITION STEP
S511
RELATIVE POSITION ACQUISITION STEP
S512
MOVING SPEED ACQUISITION STEP
S513
ANGULAR VELOCITY ACQUISITION STEP
FINISH

Fig. 23

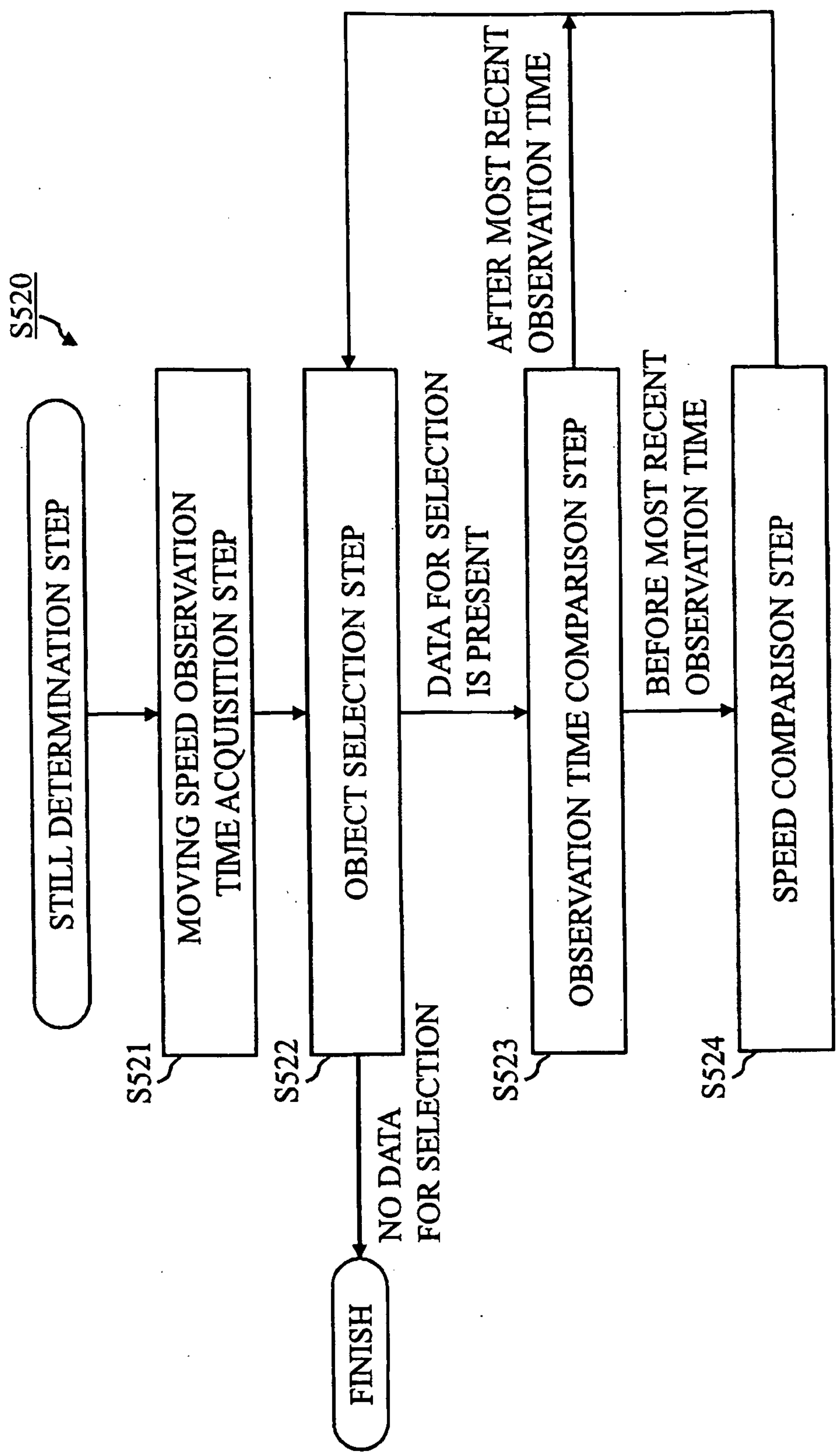
S520
STILL DETERMINATION STEP
MOVING SPEED OBSERVATION TIME ACQUISITION STEP
S521
OBJECT SELECTION STEP
S522
DATA FOR SELECTION IS PRESENT
NO DATA FOR SELECTION
FINISH
OBSERVATION TIME COMPARISON STEP
S523
AFTER MOST RECENT OBSERVATION TIME
BEFORE MOST RECENT OBSERVATION TIME
SPEED COMPARISON STEP
S524

Fig. 24

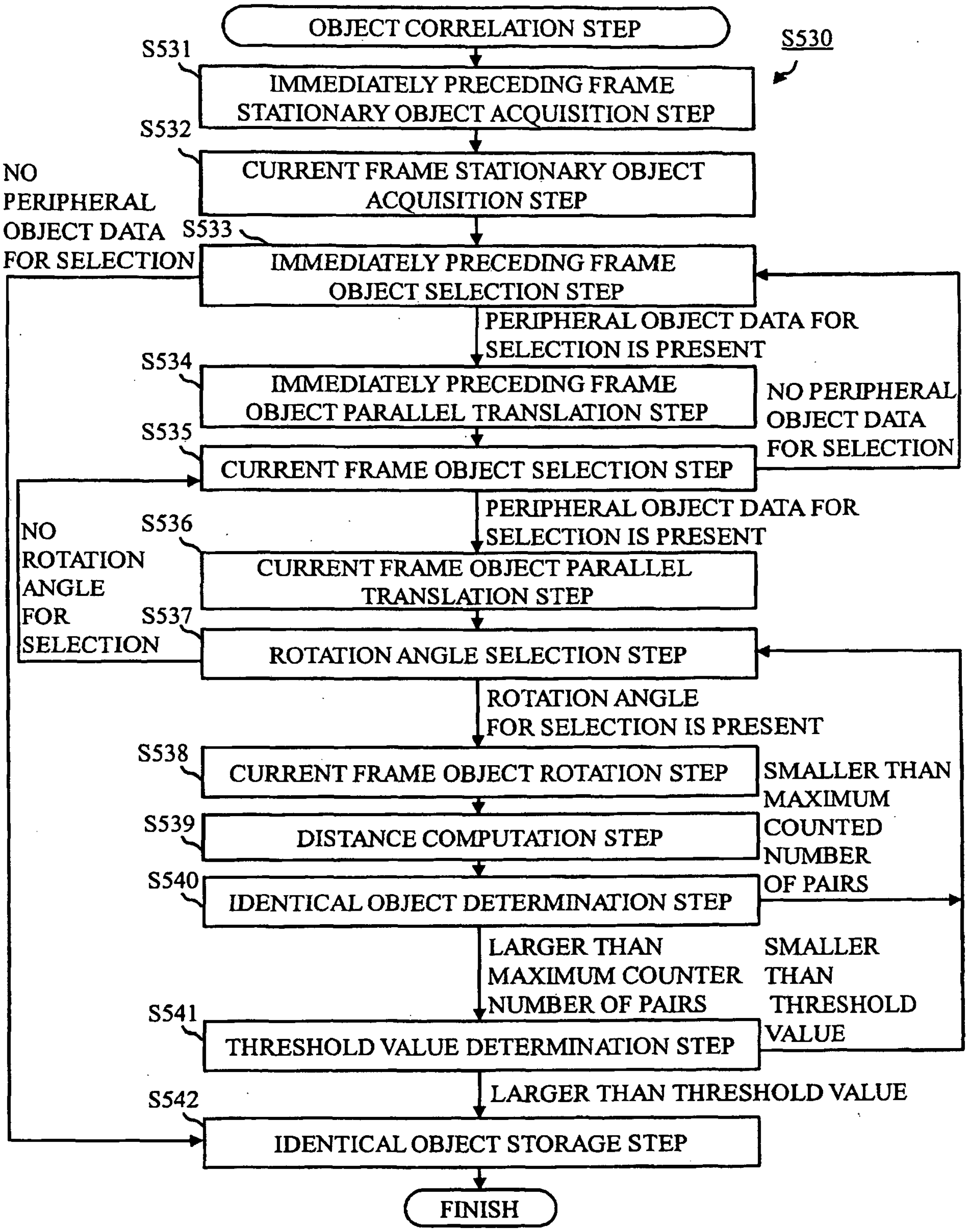
OBJECT CORRELATION STEP
S530
S531
IMMEDIATELY PRECEDING FRAME STATIONARY OBJECT ACQUISITION STEP
S532
CURRENT FRAME STATIONARY OBJECT ACQUISITION STEP
NO PERIPHERAL OBJECT DATA FOR SELECTION
S533
IMMEDIATELY PRECEDING FRAME OBJECT SELECTION STEP
PERIPHERAL OBJECT DATA FOR SELECTION IS PRESENT
S534
IMMEDIATELY PRECEDING FRAME OBJECT PARALLEL TRANSLATION STEP
NO PERIPHERAL OBJECT DATA FOR SELECTION
S535
CURRENT FRAME OBJECT SELECTION STEP
PERIPHERAL OBJECT DATA FOR SELECTION IS PRESENT
NO ROTATION ANGLE FOR SELECTION
S536
CURRENT FRAME OBJECT PARALLEL TRANSLATION STEP
S537
ROTATION ANGLE SELECTION STEP
ROTATION ANGLE FOR SELECTION IS PRESENT
S538
CURRENT FRAME OBJECT ROTATION STEP
SMALLER THAN MAXIMUM COUNTED NUMBER OF PAIRS
S539
DISTANCE COMPUTATION STEP
S540
IDENTICAL OBJECT DETERMINATION STEP
LARGER THAN MAXIMUM COUNTER NUMBER OF PAIRS
SMALLER THAN THRESHOLD VALUE
S541
THRESHOLD VALUE DETERMINATION STEP
LARGER THAN THRESHOLD VALUE
S542
IDENTICAL OBJECT STORAGE STEP
FINISH

Fig. 25

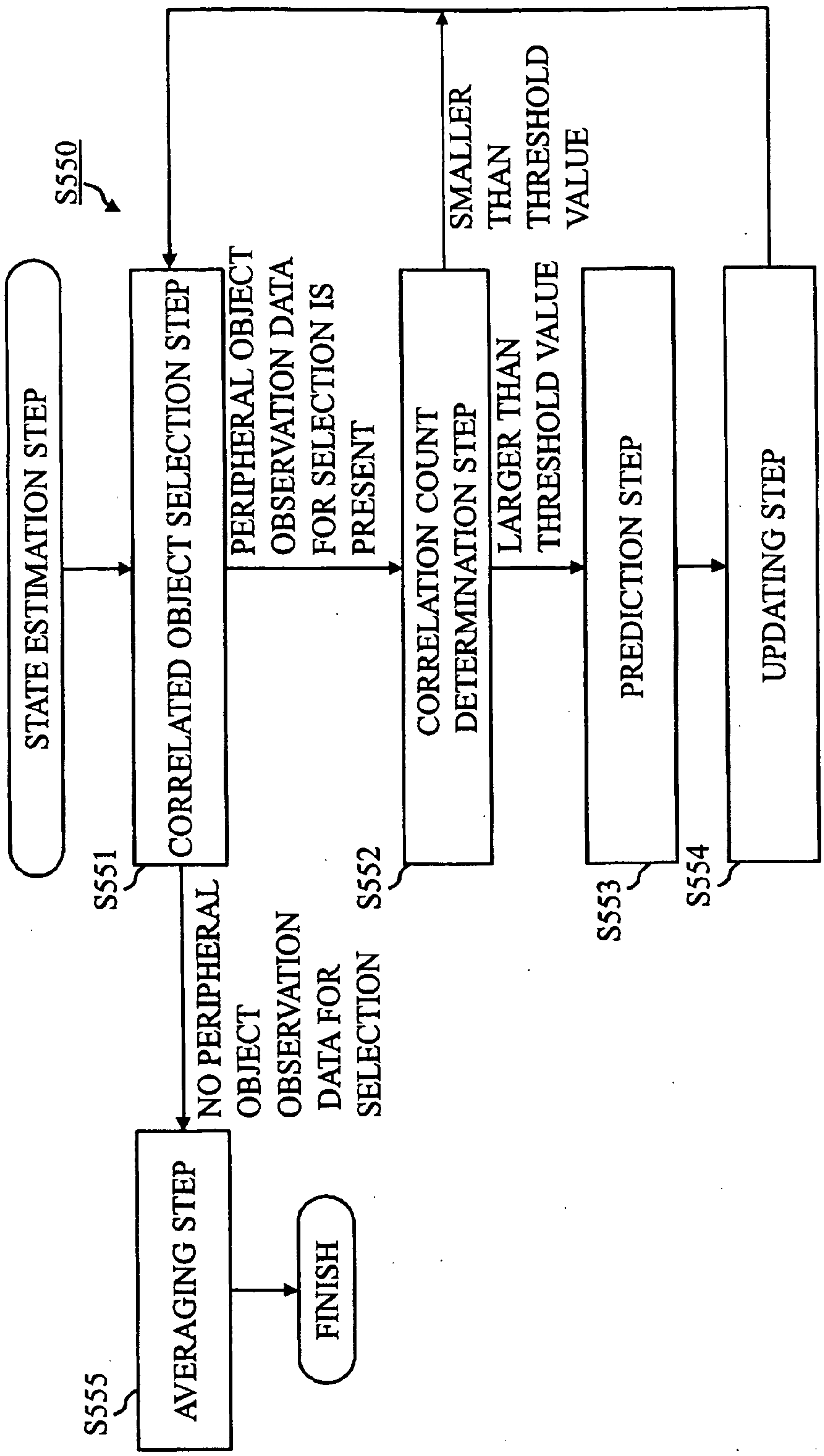
S550
STATE ESTIMATION STEP
CORRELATED OBJECT SELECTION STEP
S551
PERIPHERAL OBJECT OBSERVATION DATA FOR SELECTION IS PRESENT
CORRELATION COUNT DETERMINATION STEP
S552
SMALLER THAN THRESHOLD VALUE
LARGER THAN THRESHOLD VALUE
PREDICTION STEP
S553
UPDATING STEP
S554
NO PERIPHERAL OBJECT OBSERVATION DATA FOR SELECTION
AVERAGING STEP
S555
FINISH

Fig. 26

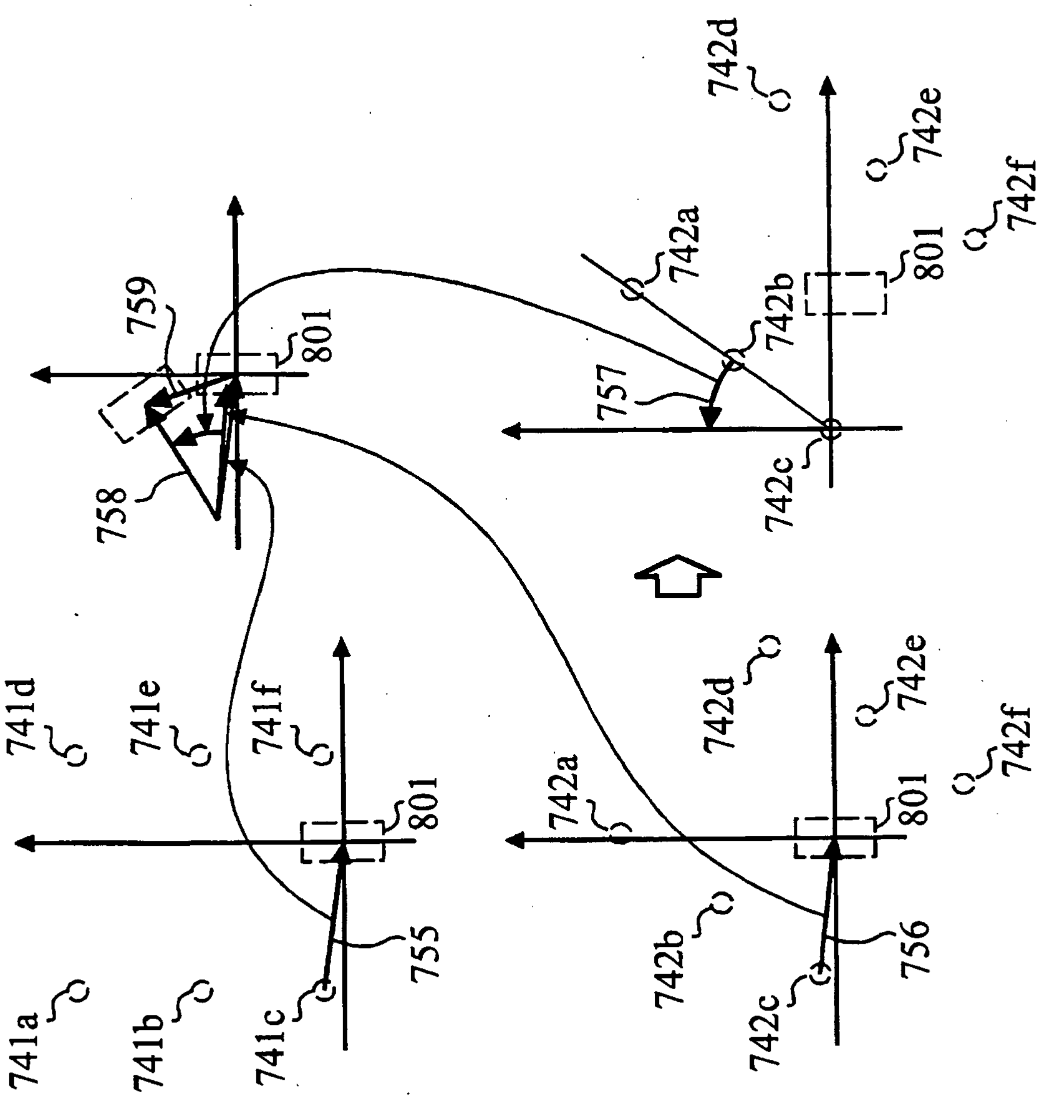
741a
741b
741c
741d
741e
741f
742a
742b
742c
742d
742e
742f
755
756
757
758
759
801

Fig. 27

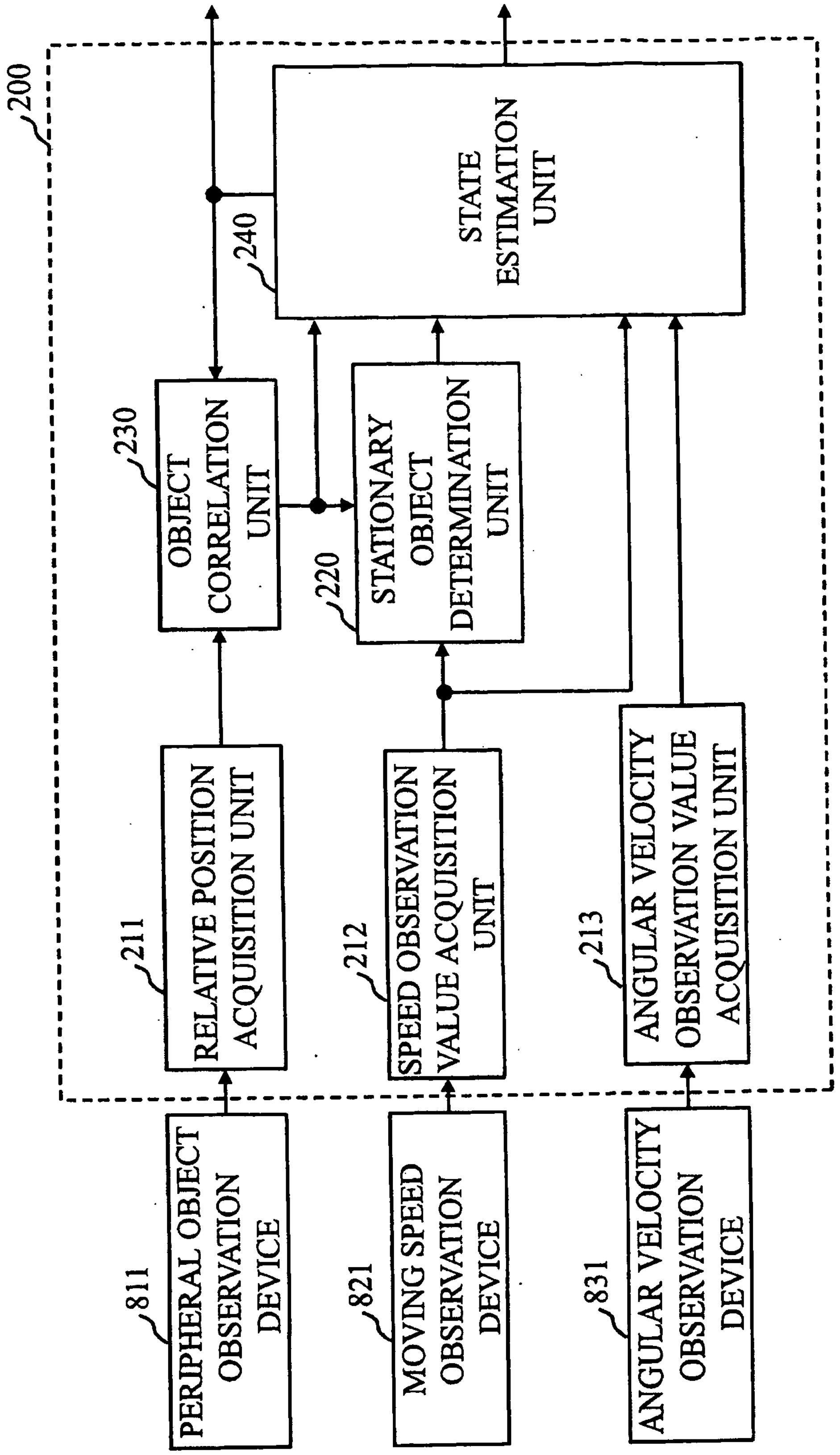
200
240
STATE ESTIMATION UNIT
230
OBJECT CORRELATION UNIT
220
STATIONARY OBJECT DETERMINATION UNIT
211
RELATIVE POSITION ACQUISITION UNIT
212
SPEED OBSERVATION VALUE ACQUISITION UNIT
213
ANGULAR VELOCITY OBSERVATION VALUE ACQUISITION UNIT
811
PERIPHERAL OBJECT OBSERVATION DEVICE
821
MOVING SPEED OBSERVATION DEVICE
831
ANGULAR VELOCITY OBSERVATION DEVICE

Fig. 28

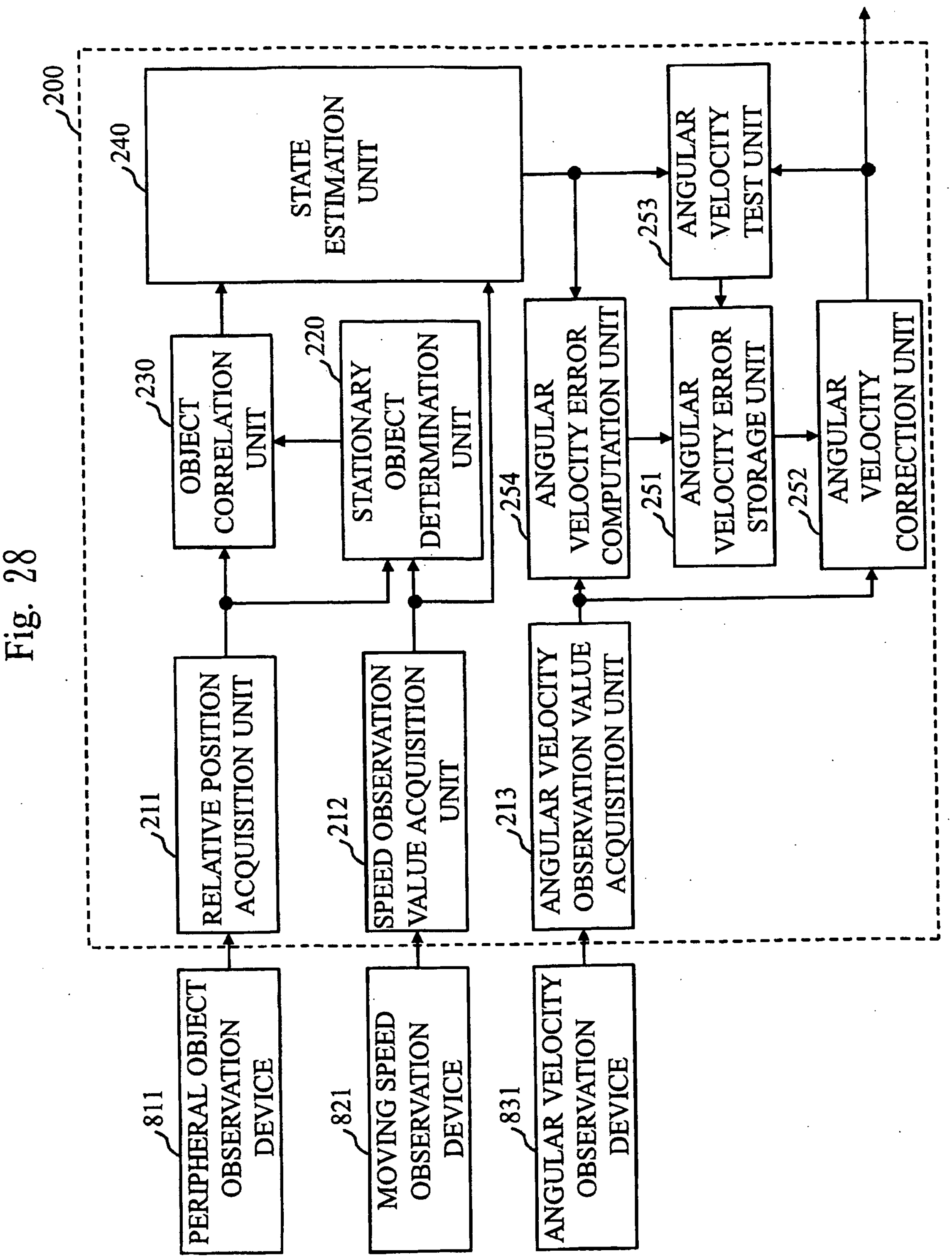
200
240
STATE ESTIMATION UNIT
253
ANGULAR VELOCITY TEST UNIT
230
OBJECT CORRELATION UNIT
220
STATIONARY OBJECT DETERMINATION UNIT
254
ANGULAR VELOCITY ERROR COMPUTATION UNIT
251
ANGULAR VELOCITY ERROR STORAGE UNIT
252
ANGULAR VELOCITY CORRECTION UNIT
211
RELATIVE POSITION ACQUISITION UNIT
212
SPEED OBSERVATION VALUE ACQUISITION UNIT
213
ANGULAR VELOCITY OBSERVATION VALUE ACQUISITION UNIT
811
PERIPHERAL OBJECT OBSERVATION DEVICE
821
MOVING SPEED OBSERVATION DEVICE
831
ANGULAR VELOCITY OBSERVATION DEVICE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6148319 A
- JP 9049875 A
- JP 2007333385 A
- US 2010017128 A1